# EUROPEAN PATENT APPLICATION

(11) **EP 4 084 513 A1**
(43) Date of publication of application: **02.11.2022**
(21) Application number: 20916101.7
(22) Date of filing: 22.12.2020
(51) Int. Cl.: H04W 8/00

(54) **COMMUNICATION METHOD AND APPARATUS**

(30) Priority: 21.01.2020 CN 202010072805
(71) Applicant: Huawei Technologies Co., Ltd., Shenzhen, Guangdong 518129 (CN)
(72) Inventor: LIU, Jun, Shenzhen, Guangdong 518129 (CN); CHANG, Junren, Shenzhen, Guangdong 518129 (CN)
(74) Representative: Maiwald Patent- und Rechtsanwaltsgesellschaft mbH
(86) International application number: PCT/CN2020/138440
(87) International publication number: WO 2021/147597

(57) **Abstract**

This application provides a communication method and apparatus, to improve SL DRX configuration accuracy. In this application, a first communication device may receive first information from a second communication device, and send the second communication device an SL DRX configuration corresponding to an SL connection between the first communication device and the second communication device, and the second communication device receives SL transmission from the first communication device based on the SL DRX configuration. In this way, the SL DRX configuration better satisfies a requirement of transmission between the first communication device and the second communication device, and energy saving effect of a receive end of the SL connection is enhanced. The first information is used to determine the SL DRX configuration.

## Description

This application claims priority to Chinese Patent Application No. 202010072805.2, filed with the China National Intellectual Property Administration on January 21, 2020 and entitled "COMMUNICATION METHOD AND APPARATUS", which is incorporated herein by reference in its entirety.

### TECHNICAL FIELD

This application relates to the field of wireless communications technologies, and in particular, to a communication method and apparatus.

### BACKGROUND

In a wireless communication system, to reduce power consumption of a terminal while ensuring effective transmission of data, a mode in which a discontinuous reception (discontinuous reception, DRX) mechanism for controlling the terminal to monitor a physical downlink control channel (physical downlink control channel, PDCCH) is introduced.

When DRX is configured, the terminal may periodically enter a sleep mode (sleep mode) at some time points. In the sleep mode, the terminal does not need to monitor a PDCCH. When the terminal needs to monitor a PDCCH, the terminal wakes up (wake up) from the sleep mode. In this way, the terminal can save power. When DRX is not configured for the terminal or the terminal does not perform DRX, the terminal keeps monitoring the PDCCH, and power consumption is high.

Currently, in sidelink (sidelink, SL) communication, transmission may be performed between a plurality of terminals by using SL connections. According to an existing DRX configuration solution, a network device usually determines an SL DRX configuration in SL communication, the network device sends the SL DRX configuration to a terminal that performs sending by using an SL connection, and then the terminal sends the SL DRX configuration to a terminal that performs receiving by using the SL connection, to implement DRX configuration. However, the network device cannot learn of a feature of data transmitted by using the SL connection, and the network device usually fails to configure appropriate DRX during SL DRX configuration.

### SUMMARY

This application provides a communication method and apparatus, to improve DRX configuration accuracy in SL communication.

According to a first aspect, this application provides a communication method. The method may be performed by a first communication device. The first communication device may include a device, such as a terminal, that supports SL communication, for example, a V2X device, or a chip in the device.

According to the method, the first communication device may receive first information, and send an SL DRX configuration to a second communication device. The first information is used to determine the SL DRX configuration. The SL DRX configuration is used for an SL connection between the first communication device and the second communication device.

According to the foregoing method, the first communication device may receive the first information. Therefore, the SL DRX configuration corresponding to the SL connection between the first communication device and the second communication device may be determined based on the first information, and the second communication device receives SL transmission from the first communication device based on the SL DRX configuration. When the second communication device is a receive end of the SL connection, energy saving effect of the second communication device can be enhanced. When the first communication device is a receive end of the SL connection, energy saving effect of the first communication device can be enhanced.

According to a second aspect, this application provides a communication method. The method may be performed by a first communication device. The first communication device may include a device, such as a terminal, that supports SL communication, for example, a V2X device, or a chip in the device.

According to the method, the first communication device determines and sends an SL DRX configuration to a second communication device. The SL DRX configuration is used for an SL connection between the first communication device and the second communication device. The first communication device is a receive end of the SL connection.

The first communication device may determine the SL DRX configuration corresponding to the SL connection between the first communication device and the second communication device, where the first communication device is the receive end of the SL connection. If a solution in which a transmit end or a base station at the transmit end determines the SL DRX configuration is used, under "limitation of limited available resource configurations, quality of service (QoS), or a traffic pattern (traffic pattern) of a service", an on (on) time period (or active time (active time)) of the receive end is made to overlap with an on time period of the SL DRX configuration currently configured by the receive end to a maximum extent. Therefore, under limitation of an SL DRX configuration that corresponds to another SL connection and that has been configured by the receive end, the solution that the transmit end or the base station at the transmit end determines the SL DRX configuration is only "locally optimal". In contrast, if a method for determining an SL DRX configuration by a receive end is used, each time the receive end needs to determine an SL DRX configuration of a newly established SL connection, the receive end may configure SL DRX of the new SL connection based on information provided by each transmit end, such as an available resource configuration, or QoS or a traffic pattern of a service, and reconfigure SL DRX of another SL connection if necessary. Therefore, compared with a method in which a transmit end or a base station at the transmit end determines an SL DRX configuration, a method for determining an SL DRX configuration by Rx UE can achieve "globally optimal" each time an SL DRX is configured. Therefore, this method can improve energy saving effect of a receive end of an SL connection.

In a possible design, the first communication device may determine the SL DRX configuration based on first information and/or at least one candidate SL DRX configuration. The first communication device may receive the first information and/or the at least one candidate SL DRX configuration from the second communication device and/or a third communication device.

According to the first aspect, any one of the possible designs of the first aspect, the second aspect, or any one of the possible designs of the second aspect, in a possible design, that the SL DRX configuration is used for an SL connection between the first communication device and the second communication device means that the SL DRX configuration is an AS layer configuration of the SL connection.

According to the first aspect, any one of the possible designs of the first aspect, the second aspect, or any one of the possible designs of the second aspect,
in a possible design, the first information is reference information or assistance information for determining SL DRX.

In a possible design, the first information may be related to the first communication device, the second communication device, and/or the SL connection, so that the SL DRX configuration better satisfies a requirement of transmission between the first communication device and the second communication device, thereby improving energy saving effect.

In a possible design, the SL DRX configuration may correspond to at least one SL connection between the first communication device and the second communication device. In other words, the SL DRX configuration is applicable to at least one SL connection between the first communication device and the second communication device. In addition, the SL connection corresponding to the SL DRX configuration may be used by the first communication device to send a message to the second communication device by using the SL connection, and/or may be used by the second communication device to send a message to the first communication device by using the SL connection.

In a possible design, the SL connection may be one or more SL connections between two independent communication devices at a physical layer.

During implementation, an identifier of the first communication device and/or an identifier of the second communication device may be used to indicate one SL connection. The identifier of the first communication device may include one or more of a serving-temporary mobile subscriber identity (serving-temporary mobile subscriber identity, S-TMSI), an international mobile subscriber identity (international mobile subscriber identity, IMSI), a subscription concealed identifier (subscription permanent identifier, SUPI), a globally unique temporary UE identity (globally unique temporary UE identity, GUTI), or a layer 1 identifier (or a layer 2 identifier) of the first communication device. The identifier of the second communication device may include one or more of an S-TMSI, an IMSI, an SUPI, a GUTI, or a layer 1 identifier (or a layer 2 identifier) of the second communication device.

In addition, an SL connection may be indicated by using an identifier pair. The identifier pair may include a source identifier and a destination identifier of the SL connection. For example, {L1_ID 1, L1_ID 2} indicates that the source identifier of the SL connection is L1_ID 1, and the destination identifier of the SL connection is L1_ID 2. If the first communication device serves as a transmit end of an SL connection, a source identifier of the SL connection may include a layer 2 identifier (or a layer 1 identifier) of the first communication device, and a destination identifier of the SL connection may include a layer 2 identifier (or a layer 1 identifier) of the second communication device. If the second communication device serves as a transmit end of an SL connection, a source identifier of the SL connection may include a layer 2 identifier (or a layer 1 identifier) of the second communication device, and a destination identifier of the SL connection may include a layer 2 identifier (or a layer 1 identifier) of the first communication device.

It should be understood that the SL connection may also be indicated by using an SL connection identifier, an SL link identifier (SL link ID), or the like.

According to the first aspect, any one of the possible designs of the first aspect, the second aspect, or any one of the possible designs of the second aspect, in a possible example, the first communication device may further receive at least one candidate SL DRX configuration from the third communication device, the second communication device, or another communication device, and the first communication device may determine the SL DRX configuration from the at least one candidate SL DRX configuration based on the first information. This improves SL DRX configuration efficiency. In addition, the at least one candidate SL DRX configuration may alternatively be defined in a protocol, or may be pre-configured on the first communication device. Optionally, the first communication device may obtain the at least one candidate SL DRX configuration via system information or dedicated signaling from the third communication device.

According to the first aspect, any one of the possible designs of the first aspect, the second aspect, or any one of the possible designs of the second aspect, the first communication device may receive a mapping relationship between at least one candidate SL DRX configuration and service information. Optionally, the first communication device may obtain the mapping relationship between at least one candidate SL DRX configuration and service information via the system information or dedicated signaling from the third communication device.

According to the first aspect, any one of the possible designs of the first aspect, the second aspect, or any one of the possible designs of the second aspect, the first communication device may further receive second information from the second communication device. The second information may be used to determine the SL DRX configuration that is of the SL connection and that is determined by the first communication device. Specifically, the second information may be used to determine that a quantity of SL connections of the second communication device is k, where k is a positive integer; or the second information indicates that a quantity of SL connections of the second communication device satisfies a first threshold condition; or the second information indicates the first communication device to send the SL DRX configuration. Therefore, the first communication device may determine, based on the second information, whether to determine and send the SL DRX configuration to the second communication device. This avoids a conflict between different SL DRX configurations separately determined by the first communication device and the second communication device.

For example, after it is determined, based on the second information, that a quantity of SL connections of the second communication device is k, the second communication device may determine whether k satisfies the first threshold condition. If k satisfies the first threshold condition, it may be determined that the first communication device determines the SL DRX configuration of the SL connection. The first threshold condition may include that k is greater than or is greater than or equal to a first specified value, or may include that k is less than or is less than or equal to a second specified value, or may include that k is within or not within a specific value range. For example, if the first threshold condition includes that k is less than the first specified value, when determining that k is less than the first specified value, the first communication device may determine that the quantity of SL connections satisfies the first threshold condition, and the first communication device may determine the SL DRX configuration and send the SL DRX configuration to the second communication device; or when k is not less than the first specified value, the first communication device may determine that the quantity of SL connections does not satisfy the first threshold condition, and the first communication device may not determine the SL DRX configuration (or skip determining the SL DRX configuration), or may not send the SL DRX configuration to the second communication device (or skip sending the SL DRX configuration).

In addition, the second information may alternatively indicate that the quantity of SL connections satisfies the first threshold condition. The second information may be sent by the second communication device after the second communication device determines that the quantity of SL connections satisfies the first threshold condition. The first threshold condition may include that k is greater than or is greater than or equal to a first specified value, or may include that k is less than or is less than or equal to a second specified value, or may include that k is within a specific value range. For example, when the second information carries a bit 0, it indicates that the quantity of SL connections of the second communication device satisfies the first threshold condition, and the first communication device may determine and send the SL DRX configuration to the second communication device. Alternatively, when the second information carries a bit 1, it indicates that the quantity of SL connections of the second communication device does not satisfy the first threshold condition, and the first communication device may skip determining the SL DRX configuration, or may skip sending the SL DRX configuration to the second communication device.

The second information may alternatively indicate the first communication device to send the SL DRX configuration. In other words, the second information may indicate the first communication device to determine and send the SL DRX configuration to the second communication device. For example, when the second information carries a bit 0, it indicates that the first communication device needs to send the SL DRX configuration to the second communication device, and the first communication device may determine and send the SL DRX configuration to the second communication device. Alternatively, when the second information carries a bit 1, it indicates that the first communication device does not need to determine and send the SL DRX configuration to the second communication device, and the first communication device may skip determining the SL DRX configuration, or may skip sending the SL DRX configuration to the second communication device.

According to the first aspect, any one of the possible designs of the first aspect, the second aspect, or any one of the possible designs of the second aspect, the first information may include a portion or all of the following information: service information of the SL connection, service information of other one or more SL connections other than the SL connection of the second communication device, a resource configuration of the SL connection, a resource configuration of other one or more SL connections other than the SL connection of the second communication device, an SL DRX configuration of other one or more SL connections other than the SL connection of the second communication device, a Uu DRX configuration of the second communication device, a reference SL DRX configuration, energy saving requirement information of the second communication device, or the like.

A portion or all of the following information may be from the second communication device: the service information of other one or more SL connections other than the SL connection of the second communication device, the resource configuration of the SL connection and/or one or more SL connections other than the SL connection of the second communication device, the SL DRX configuration of other one or more SL connections other than the SL connection of the second communication device, the reference SL DRX configuration, the Uu DRX configuration, the energy saving requirement information of the second communication device, or the like. The resource configuration of the SL connection includes a determined resource configuration sent by an SL service and/or an available SL resource configuration set. The resource configuration of the other one or more SL connections includes a configured SL DRX configuration and/or a configurable SL DRX configuration.

According to the first aspect, any one of the possible designs of the first aspect, the second aspect, or any one of the possible designs of the second aspect, the first communication device may further send request information of the first information. For example, the first communication device may send the request information of the first information to the second communication device and/or the third communication device.

For example, after receiving the first request information from the second communication device, the first communication device may send assistance information corresponding to the SL connection to the second communication device. The first request information is used to request to obtain the assistance information. The assistance information includes at least one of the following information: service information of the SL connection, a resource configuration of the SL connection, or a reference SL DRX configuration of the SL connection.

According to the first aspect, any one of the possible designs of the first aspect, the second aspect, or any one of the possible designs of the second aspect, in a possible example, if a quantity of SL connections of the second communication device is 1, the first information may include a portion or all of the following information: the service information of the SL connection, the resource configuration of the SL connection, the reference SL DRX configuration of the SL connection, the Uu DRX configuration of the second device, the energy saving requirement information of the second communication device, or the like. If there are a plurality of SL connections of the second communication device, the first information may include a portion or all of the following information: the service information of the SL connection, the service information of other one or more SL connections other than the SL connection of the second communication device, the resource configuration of the SL connection, the resource configuration of other one or more SL connections other than the SL connection of the second communication device, the reference SL DRX configuration of the SL connection and/or the reference SL DRX configuration of another SL connection, the Uu DRX configuration of the second communication device, or the energy saving requirement information of the second communication device.

According to the first aspect, any one of the possible designs of the first aspect, the second aspect, or any one of the possible designs of the second aspect, a cast type of the SL connection may be unicast, multicast, or broadcast.

If the cast type of the SL connection is multicast or broadcast, an SL RRC connection is established between the first communication device and the second communication device, and is used for transmission of necessary information between the first communication device and the second communication device.

In addition, if the cast type of the SL connection is multicast or broadcast, a quantity of communication devices that receive SL transmission of the first communication device is less than or is less than or equal to a first threshold. The first threshold may be a preset value, or may be defined in a protocol, or may be indicated by a network device connected to the first communication device. Using this design can reduce processing overheads caused when the first communication device receives information. The communication device that receives SL transmission of the first communication device is a communication device that receives SL transmission from the first communication device by using an SL connection in SL communication. For example, for an SL connection between the first communication device and the second communication device, if the second communication device receives data from the first communication device by using the SL connection, the second communication device is a communication device that receives SL transmission of the first communication device.

According to the first aspect, any one of the possible designs of the first aspect, the second aspect, or any one of the possible designs of the second aspect, when the first communication device sends an SL DRX configuration to the second communication device, the first communication device may send the SL DRX configuration in a unicast, broadcast, or multicast manner.

According to the first aspect, any one of the possible designs of the first aspect, the second aspect, or any one of the possible designs of the second aspect, the first communication device may send an index of the SL DRX configuration to the second communication device, and the second communication device determines the SL DRX configuration based on the index, to reduce signaling overheads.

According to the first aspect, any one of the possible designs of the first aspect, the second aspect, or any one of the possible designs of the second aspect, in a possible example, the first communication device may further send identification information of the SL connection to the second communication device. The identification information of the SL connection may be carried in the SL DRX configuration or may be independent of the SL DRX configuration.

According to the first aspect, any one of the possible designs of the first aspect, the second aspect, or any one of the possible designs of the second aspect, for example, the identification information of the SL connection may include an SL connection identifier, an SL link identifier, an identifier of the first communication device, and/or an identifier of the second communication device. The identifier of the first communication device and/or the identifier of the second communication device may include one or more of an S-TMSI, an IMSI, an SUPI, or a GUTI of the first communication device. In addition, the identifier of the first communication device may include a layer 1/layer 2 identifier of the first communication device, and the identifier of the second communication device may include a layer 1/layer 2 identifier of the second communication device.

According to a third aspect, this application provides a communication method. The communication method may be performed by the second communication device. The second communication device may include a device, such as, a terminal that supports SL communication, for example, a V2X device, or the second communication device may include a chip in the device.

According to the method, the second communication device may send the first information to the first communication device. The first information is used to determine an SL DRX configuration. The SL DRX configuration is used for an SL connection between the first communication device and the second communication device. The second communication device receives the SL DRX configuration from the first communication device.

According to a fourth aspect, this application provides a communication method. The communication method may be performed by the second communication device. The second communication device may include a device, such as a terminal, that supports SL communication, for example, a V2X device, or the second communication device may include a chip in the device.

According to the method, the second communication device may receive an SL DRX configuration from a first communication device, where the SL DRX configuration is used for an SL connection between the first communication device and the second communication device. The first communication device is a receive end of the SL connection.

In a possible design, the second communication device further sends first information and/or at least one candidate SL DRX configuration to the first communication device. Optionally, the SL DRX configuration is determined based on the first information and/or the at least one candidate SL DRX configuration.

According to a fifth aspect, this application provides a communication method. The communication method may be performed by the third communication device. For example, the third communication device may include a network device such as a base station or a chip in a network device.

According to the method, the second communication device may determine first information and/or at least one candidate SL DRX configuration, and send the first information and/or the at least one candidate SL DRX configuration to a first communication device. The first information and/or the at least one candidate SL DRX configuration are/is used to determine an SL DRX configuration. The SL DRX configuration is used for an SL connection between the first communication device and the second communication device.

According to the third aspect, any one of the possible designs of the third aspect, the fourth aspect, any one of the possible designs of the fourth aspect, the fifth aspect, or any one of the possible designs of the fifth aspect, in a possible design, the first information is reference information or assistance information for determining SL DRX.

According to the third aspect, any one of the possible designs of the third aspect, the fourth aspect, any one of the possible designs of the fourth aspect, the fifth aspect, or any one of the possible designs of the fifth aspect, the first information is related to the first communication device, the second communication device, and/or the SL connection.

The SL DRX configuration may correspond to at least one SL connection between the first communication device and the second communication device. In other words, the SL DRX configuration is applicable to at least one SL connection between the first communication device and the second communication device.

According to the third aspect, any one of the possible designs of the third aspect, the fourth aspect, any one of the possible designs of the fourth aspect, the fifth aspect, or any one of the possible designs of the fifth aspect, the second communication device may further send the second information to the first communication device. The second information may be used to determine that the quantity of SL connections of the second communication device is k, where k is a positive integer; or the second information indicates that the quantity of SL connections of the second communication device satisfies a first threshold condition; or the second information indicates the first communication device to send the SL DRX configuration.

According to the third aspect, any one of the possible designs of the third aspect, the fourth aspect, any one of the possible designs of the fourth aspect, the fifth aspect, or any one of the possible designs of the fifth aspect, the first information may include a portion or all of the following information: service information of the SL connection, service information of other one or more SL connections other than the SL connection of the second communication device, a resource configuration of the SL connection, a resource configuration of other one or more SL connections other than the SL connection of the second communication device, a Uu DRX configuration of the second communication device, a reference SL DRX configuration of the SL connection and/or a reference SL DRX configuration of another SL connection, or energy saving requirement information of the second communication device. The resource configuration of the SL connection includes a determined resource configuration sent by an SL service and/or an available SL resource configuration set. The resource configuration of the other one or more SL connections includes a configured SL DRX configuration and/or a configurable SL DRX configuration.

A portion or all of the following information may be from the second communication device: the service information of other one or more SL connections other than the SL connection of the second communication device, the resource configuration of the SL connection and/or the one or more SL connections other than the SL connection of the second communication device, the reference SL DRX configuration of the SL connection and/or the reference SL DRX configuration of another SL connection, the Uu DRX configuration of the second communication device, or the energy saving requirement information of the second communication device.

With reference to the third aspect or any one of the possible designs of the third aspect, the second communication device may further receive request information of the first information.

For example, the second communication device may further send first request information to the first communication device, and receive assistance information of the SL connection from the first communication device. The first request information is used to request to obtain the assistance information. The assistance information includes at least one of the following information: service information of the SL connection, a resource configuration of the SL connection, or a reference SL DRX configuration of the SL connection.

With reference to the fifth aspect or any one of the possible designs of the fifth aspect, the third communication device may further receive request information of the first information.

In addition, if the second communication device has a plurality of SL connections, the second communication device may further send assistance information of the SL connection to a communication device corresponding to an SL connection other than the SL connection. The assistance information of the SL connection may be used by another communication device to determine an SL DRX configuration. The communication device corresponding to an SL connection other than the SL connection is a device that is not the first communication device and that is connected to the second communication device by using an SL connection.

According to the third aspect, any one of the possible designs of the third aspect, the fourth aspect, any one of the possible designs of the fourth aspect, the fifth aspect, or any one of the possible designs of the fifth aspect, in a possible example, if a quantity of SL connections of the second communication device is 1, the first information may include a portion or all of the following information: the service information of the SL connection, the resource configuration of the SL connection, the reference SL DRX configuration of the SL connection, the Uu DRX configuration of the second device, the energy saving requirement information of the second communication device, or the like. If there are a plurality of SL connections of the second communication device, the first information may include a portion or all of the following information: the service information of the SL connection, the service information of other one or more SL connections other than the SL connection of the second communication device, the resource configuration of the SL connection, the resource configuration of other one or more SL connections other than the SL connection of the second communication device, the reference SL DRX configuration of the SL connection and/or the reference SL DRX configuration of another SL connection, the Uu DRX configuration of the second communication device, or the energy saving requirement information of the second communication device.

According to the third aspect, any one of the possible designs of the third aspect, the fourth aspect, any one of the possible designs of the fourth aspect, the fifth aspect, or any one of the possible designs of the fifth aspect, a cast type of the SL connection may be unicast, multicast, or broadcast.

If the cast type of the SL connection is multicast or broadcast, an SL RRC connection is established between the first communication device and the second communication device, and is used for transmission of necessary information between the first communication device and the second communication device.

In addition, if the cast type of the SL connection is multicast or broadcast, a quantity of communication devices that receive SL transmission of the first communication device is less than or is less than or equal to a first threshold.

According to the third aspect, any one of the possible designs of the third aspect, the fourth aspect, any one of the possible designs of the fourth aspect, the fifth aspect, or any one of the possible designs of the fifth aspect, the SL DRX configuration may be sent in a unicast, broadcast, or multicast manner.

According to the third aspect, any one of the possible designs of the third aspect, the fourth aspect, any one of the possible designs of the fourth aspect, the fifth aspect, or any one of the possible designs of the fifth aspect, the second communication device may further receive an index of the SL DRX configuration from the first communication device, and determine the SL DRX configuration based on the index, to reduce signaling overheads.

According to the third aspect, any one of the possible designs of the third aspect, the fourth aspect, any one of the possible designs of the fourth aspect, the fifth aspect, or any one of the possible designs of the fifth aspect, in a possible example, the second communication device may further receive identification information of the SL connection from the first communication device. The identification information of the SL connection may be carried in the SL DRX configuration or may be independent of the SL DRX configuration.

For example, the identification information of the SL connection may include an SL connection identifier, an SL link identifier, an identifier of the first communication device, and/or an identifier of the second communication device.

For beneficial effects of any one of the possible designs of the third aspect or the fifth aspect, refer to the descriptions of beneficial effects of any one of the possible designs of the first aspect in the first aspect. For beneficial effects of any one of the possible designs of the fourth aspect, refer to the descriptions of beneficial effects of any one of the possible designs of the second aspect in the second aspect.

According to a sixth aspect, this application provides a communication method. The communication method may be performed by the second communication device. The second communication device may include a device, such as a terminal, that supports SL communication, for example, a V2X device, or the second communication device may include a chip in the device. In the sixth aspect, the second communication device may perform SL transmission with a plurality of first communication devices, for example, receive information sent by the plurality of first communication devices separately by using SL connections.

According to the method, the second communication device may receive third information, and send an SL DRX configuration corresponding to an SL connection between the first communication device and the second communication device to the first communication device. The third information may be used to determine the SL DRX configuration.

According to the foregoing method, the second communication device may determine the SL DRX configuration corresponding to the SL connection based on the third information corresponding to the SL connection. This improves DRX configuration accuracy.

For example, the third information is related to the first communication device and/or the SL connection between the first communication device and the second communication device. Therefore, an attribute of the SL connection is considered during determining the SL DRX configuration corresponding to the SL connection, so that a result of the SL DRX configuration is more accurate.

It should be understood that the SL DRX configuration may correspond to at least one SL connection between the first communication device and the second communication device. In other words, the SL DRX configuration is applicable to at least one SL connection between the first communication device and the second communication device.

For example, the third information may be from the first communication device corresponding to the SL connection. Specifically, the second communication device may send second request information to the first communication device, to request each piece of third information. Alternatively, the third information may be sent by the first communication device according to a protocol agreement; or the network device indicates the first communication device to send the third information.

For example, after determining that a quantity of SL connections of the second communication device is N, the second communication device may determine an SL DRX configuration of the SL connection between the first communication device and the second SL connection. N is a positive integer and is greater than 1, and each SL connection is used by the first communication device to perform SL transmission with the second communication device. In this case, the third information may include third information corresponding to each SL connection.

In this example, the second communication device may further send the fourth information to the first communication device corresponding to the SL connection, to indicate that the first communication device does not need to determine the SL DRX configuration. The SL DRX configuration corresponds to the SL connection between the first communication device and the second communication device. After receiving the fourth information, the first communication device may no longer determine the SL DRX configuration, or no longer send the SL DRX configuration to the second communication device, to avoid a case in which the first communication device and the second communication device configure different SL DRX configurations for the SL connection.

Specifically, the fourth information may be used to determine that a quantity of SL connections of the second communication device is 1, where 1 is a positive integer. After determining, based on the fourth information, that the quantity of SL connections of the second communication device is 1, the second communication device may determine whether 1 satisfies a second threshold condition. For setting of the second threshold condition, refer to the descriptions of the first threshold condition in the part about the second information. For example, the second threshold condition may be determined based on the first threshold condition. For example, the first threshold condition is that 1 is less than a first specified value, and the second preset condition is that 1 is not less than a first specified value. When 1 satisfies the second threshold condition, the first communication device may determine that the second communication device determines the SL DRX configuration of the SL connection. In other words, when 1 satisfies the second threshold condition, the first communication device does not need to determine the SL DRX configuration of the SL connection; or when 1 satisfies the second threshold condition, the first communication device does not need to send the SL DRX configuration of the SL connection to the second communication device. In addition, when 1 does not satisfy the second threshold condition, the first communication device may determine the SL DRX configuration of the SL connection, and send the SL DRX configuration to the second communication device.

In addition, the fourth information may alternatively indicate that the quantity of SL connections of the second communication device satisfies the second threshold condition. The fourth information may be sent after the second communication device determines that the quantity of SL connections satisfies the second threshold condition. For the manner of setting the second threshold condition, refer to the foregoing implementation descriptions. The first communication device may determine, based on the fourth information, that the second communication device determines the SL DRX configuration of the SL connection, or the first communication device may determine, based on the fourth information, that the first communication device does not need to determine the SL DRX configuration of the SL connection, or that the first communication device does not need to send the SL DRX configuration of the SL connection to the second communication device.

Alternatively, the fourth information may indicate that the second communication device determines the SL DRX configuration, or indicate that the first communication device does not need to determine the SL DRX configuration of the SL connection, or indicate that the first communication device does not need to send the SL DRX configuration of the SL connection to the second communication device. In this case, the first communication device may determine, based on the fourth information, that the SL DRX configuration of the SL connection does not need to be determined, or that the SL DRX configuration does not need to be sent to the second communication device.

In a specific example, in the N SL connections, a length of a DRX cycle determined by the second communication device for an n^{th} SL connection may be an integer multiple of a length of a DRX cycle of the second communication device for an m^{th} SL connection. m and n are positive integers, and m and n are less than or equal to N. This further improves energy saving effect.

In another specific example, in the N SL connections, a start location of a DRX cycle determined by the second communication device for an n^{th} SL connection may be aligned with a start location of a DRX cycle of the second communication device for an mth SL connection. m and n are positive integers, and m and n are less than or equal to N. This further improves energy saving effect.

The third information may include one or more of the following information: service information of the SL connection, a resource configuration of the SL connection, or a reference SL DRX configuration of the SL connection.

The second communication device may further send an identifier of an SL connection to the first communication device, to indicate an SL connection to which SL DRX is applicable. Specifically, the second communication device may send identification information of the SL connection and the SL DRX configuration corresponding to the SL connection to the first communication device corresponding to the SL connection. Alternatively, the second communication device may send the SL DRX configuration corresponding to the SL connection to the first communication device corresponding to the SL connection, where the SL DRX configuration includes identification information of the SL connection.

The identification information of the SL connection may include an SL connection identifier, an SL link identifier, an identifier of the first communication device, and/or an identifier of the second communication device.

According to a seventh aspect, this application provides a communication method. The communication method may be performed by a first communication device. The first communication device may include a device, such as a terminal, that supports SL communication, for example, a V2X device, or the first communication device may include a chip in the device.

The first communication device is used as an example. According to the method, the first communication device may send third information to a second communication device, where the third information is used by the second communication device to determine an SL DRX configuration of an SL connection between the first communication device and the second communication device. The first communication device may further receive the SL DRX configuration from the second communication device.

For example, the third information is related to the first communication device and/or the SL connection between the first communication device and the second communication device.

The SL DRX configuration may correspond to at least one SL connection between the first communication device and the second communication device. In other words, the SL DRX configuration is applicable to at least one SL connection between the first communication device and the second communication device.

For example, the third information may be sent by the first communication device in response to second request information from the second communication device, where the second request information is used to request the third information.

The third information may include one or more of the following information: service information of the SL connection, the SL connection, or a reference SL DRX configuration of the SL connection.

The first communication device may further receive the identification information of the SL connection from the second communication device. For example, the first communication device may receive the identification information of the SL connection and the SL DRX configuration corresponding to the SL connection from the second communication device; or the first communication device may receive the SL DRX configuration from the second communication device, where the SL DRX configuration includes the identification information of the SL connection.

The identification information of the SL connection may include an SL connection identifier, an SL link identifier, an identifier of the first communication device, and/or an identifier of the second communication device.

In this example, the first communication device may further receive fourth information from the second communication device, to determine, based on the fourth information, that the first communication device does not need to determine the SL DRX configuration, or determine that the SL DRX configuration does not need to be sent to the second communication device. The SL DRX configuration corresponds to the SL connection between the first communication device and the second communication device. For example, the fourth information may be used to determine that a quantity of SL connections of the second communication device is 1, where 1 is a positive integer; or the fourth information indicates that a quantity of SL connections of the second communication device satisfies a second threshold condition; or the fourth information indicates the first communication device not to send the SL DRX configuration.

For beneficial effects of any one of the possible designs of the seventh aspect, refer to the descriptions of beneficial effects of any one of the possible designs of the sixth aspect in the sixth aspect.

According to an eighth aspect, this application provides a communication method. The communication method may be performed by a first communication device. The first communication device may include a device, such as a terminal, that supports SL communication, for example, a V2X device, or the first communication device may include a chip in the device.

According to the method, the first communication device may receive an SL DRX configuration from a third communication device (for example, a network device). The SL DRX configuration is used for an SL connection between the first communication device and a second communication device. The first communication device may further send the SL DRX configuration to the second communication device.

The first communication device may be a receive end of the SL connection.

According to the method, the network device may determine the SL DRX configuration of the SL connection between the first communication device and the second communication device, so that SL DRX configuration is performed by the network device.

The SL DRX configuration may correspond to at least one SL connection between the first communication device and the second communication device. In other words, the SL DRX configuration is applicable to at least one SL connection between the first communication device and the second communication device.

In a possible example, the first communication device may further send fifth information to the third communication device, and the fifth information is used by the third communication device to determine the SL DRX configuration. The fifth information may be related to the first communication device, the second communication device, and/or the SL connection between the first communication device and the second communication device.

For example, the fifth information may include a portion or all of the following information: service information of the SL connection, service information of other one or more SL connections other than the SL connection of the second communication device, an SL DRX configuration of other one or more SL connections other than the SL connection of the second communication device, a resource configuration of the SL connection, a resource configuration of other one or more SL connections other than the SL connection of the second communication device, a Uu DRX configuration of the second communication device, a reference SL DRX configuration of the SL connection and/or a reference SL DRX configuration of another SL connection, energy saving requirement information of the second communication device, or the like. The resource configuration of the SL connection includes a determined resource configuration sent by an SL service and/or an available SL resource configuration set. The resource configuration of the other one or more SL connections includes a configured SL DRX configuration and/or a configurable SL DRX configuration.

A portion or all of the following information may be from the second communication device: the service information of other one or more SL connections other than the SL connection of the second communication device, the resource configuration of other one or more SL connections other than the SL connection of the second communication device, the reference SL DRX configuration of the SL connection and/or the reference SL DRX configuration of another SL connection, the Uu DRX configuration of the second communication device, or the energy saving requirement information of the second communication device.

In a possible example, if a quantity of SL connections of the second communication device is 1, the fifth information may include a portion or all of the following information: the service information of the SL connection, the resource configuration of the SL connection, the reference SL DRX configuration of the SL connection, the Uu DRX configuration of the second device, the energy saving requirement information of the second communication device, or the like. If there are a plurality of SL connections of the second communication device, the fifth information may include a portion or all of the following information: the service information of the SL connection, the service information of other one or more SL connections other than the SL connection of the second communication device, the resource configuration of the SL connection, the resource configuration of other one or more SL connections other than the SL connection of the second communication device, the reference SL DRX configuration of the SL connection and/or the reference SL DRX configuration of another SL connection, the Uu DRX configuration of the second communication device, or the energy saving requirement information of the second communication device.

The SL DRX configuration may include identification information of an SL connection, or the first communication device further receives identification information of the SL connection from the third communication device.

For example, the identification information of the SL connection may include an SL connection identifier, an SL link identifier, an identifier of the first communication device, and/or an identifier of the second communication device. The identification information of the SL connection may include an S-TMSI, an IMSI, an SUPI, a GUTI, a layer 1 identifier, a layer 2 identifier, or the like. In addition, the identification information of the SL connection may include an identifier pair. Therefore, the third communication device may configure the DRX configuration of the SL connection between the first communication device and the second communication device based on two granularities: a physical SL connection and a logical SL connection. This improves configuration flexibility.

According to a ninth aspect, this application provides a communication method. The communication method may be performed by the third communication device. For example, the third communication device may include a network device such as a base station or a chip in a network device.

According to the method, the third communication device may determine an SL DRX configuration. The SL DRX configuration is used for an SL connection between a first communication device and a second communication device. The SL connection is an SL connection between the first communication device and the second communication device.

Optionally, the third communication device may further send the SL DRX configuration and identification information of the SL connection to the first communication device. Alternatively, the third communication device may send the SL DRX configuration to the first communication device, where the SL DRX configuration includes identification information of the SL connection.

The SL DRX configuration may correspond to at least one SL connection between the first communication device and the second communication device. In other words, the SL DRX configuration is applicable to at least one SL connection between the first communication device and the second communication device.

In a possible example, the first communication device may further send fifth information to the third communication device, and the fifth information is used by the third communication device to determine the SL DRX configuration. For example, the fifth information may include a portion or all of the following information: service information of the SL connection, service information of other one or more SL connections other than the SL connection of the second communication device, an SL DRX configuration of other one or more SL connections other than the SL connection of the second communication device, a resource configuration of the SL connection, a resource configuration of other one or more SL connections other than the SL connection of the second communication device, a Uu DRX configuration of the second communication device, a reference SL DRX configuration of the SL connection and/or a reference SL DRX configuration of another SL connection, energy saving requirement information of the second communication device, or the like. The resource configuration of the SL connection includes a determined resource configuration sent by an SL service and/or an available SL resource configuration set. The resource configuration of the other one or more SL connections includes a configured SL DRX configuration and/or a configurable SL DRX configuration.

A portion or all of the following information may be from the second communication device: the service information of other one or more SL connections other than the SL connection of the second communication device, the resource configuration of other one or more SL connections other than the SL connection of the second communication device, the reference SL DRX configuration of the SL connection and/or the reference SL DRX configuration of another SL connection, the Uu DRX configuration of the second communication device, or the energy saving requirement information of the second communication device.

The SL DRX configuration may include the identification information of the SL connection, or the third communication device further sends the identification information of the SL connection to the first communication device.

For example, the identification information of the SL connection may include an SL connection identifier, an SL link identifier, an identifier of the first communication device, and/or an identifier of the second communication device.

For beneficial effects of any one of the possible designs of the ninth aspect, refer to the descriptions of beneficial effects of any one of the possible designs of the eighth aspect in the eighth aspect.

According to a tenth aspect, this application provides a communication method. The communication method may be performed by the third communication device. The third communication device is connected to the first communication device, and a first SL connection is established between the first communication device and a second communication device. For example, the third communication device may include a network device such as a base station or a chip in a network device.

According to the method, the third communication device may receive sixth information from a fourth communication device, where the sixth information is used by the third communication device to determine a first SL DRX configuration and a second SL DRX configuration. The third communication device may send seventh information to the fourth communication device, where the seventh information may be used by the fourth communication device to determine the second SL DRX configuration. The first SL DRX configuration is used by the second communication device to receive SL transmission from the first communication device, and the first communication device accesses the third communication device. The second SL DRX configuration is used by the second communication device to receive SL transmission from a fifth communication device, and the fifth communication device accesses the fourth communication device. The third communication device may further send the first SL DRX configuration to the first communication device.

According to the method, the third communication device and the fourth communication device may determine the first SL DRX configuration and the second SL DRX configuration through negotiation, so that DRX configurations of a first SL connection and a second SL connection of the second communication device are coordinated, and SL DRX configurations of the second communication device are optimized.

The first SL DRX configuration may correspond to at least one SL connection between the first communication device and the second communication device. In other words, the first SL DRX configuration is applicable to at least one SL connection between the first communication device and the second communication device.

In a possible example, the third communication device may send at least one candidate second SL DRX configuration to the fourth communication device, so that the fourth communication device may determine the second SL DRX configuration based on the at least one candidate second SL DRX configuration. In other words, the seventh information in this example includes at least one candidate second SL DRX configuration.

In another possible example, the third communication device may receive attribute information of a second SL connection from the fourth communication device, where the second SL connection is an SL connection between the second communication device and a fifth communication device. The third communication device may determine the first SL DRX configuration and the second SL DRX configuration based on attribute information of the first SL connection and the attribute information of the second SL connection. Then, the third communication device may send the second SL DRX configuration to the fourth communication device. The first SL connection is an SL connection between the second communication device and the first communication device. In this example, the sixth information includes the attribute information of the second SL connection, and the seventh information includes the second SL DRX configuration.

The attribute information of the first SL connection may include service information of the first SL connection, a resource configuration of the first SL connection, and/or energy saving requirement information of the second communication device. The attribute information of the second SL connection may include service information of the second SL connection, a resource configuration of the second SL connection, and/or energy saving requirement information of the second communication device.

In another possible example, the third communication device may further send the first SL DRX configuration to the fourth communication device, so that the fourth communication device determines the second SL DRX configuration based on the first SL DRX configuration, for example, coordinates the first SL DRX configuration and the second SL DRX configuration. In this example, the seventh information includes the first SL DRX configuration.

In another possible example, the third communication device may receive an identifier of the second communication device from the second communication device. In this example, the third communication device may be further connected to the second communication device by using a Uu interface. Therefore, the third communication device may receive the identifier of the second communication device by using the Uu interface. Based on the identifier, the third communication device may learn that there is still an SL connection between the second communication device and the first communication device.

For example, the identifier of the second communication device may include one or more of an S-TMSI, an IMSI, an SUPI, a GUTI, or a layer 2 identifier or a layer 1 identifier of the second communication device.

In this example, if the second communication device uses a Uu DRX configuration to perform Uu interface transmission, the third communication device may coordinate the Uu DRX configuration, the first SL DRX configuration, and/or the second SL DRX configuration with the fourth communication device. For example, the third communication device may send the Uu DRX configuration and/or attribute information of the Uu DRX configuration to the fourth communication device. The attribute information of the Uu DRX configuration, for example, information about a communication service of the Uu interface between the third communication device and the second communication device, a resource configuration of the Uu interface, or energy saving requirement information of the second communication device, may be used by the fourth communication device to determine the second SL DRX configuration based on the seventh information and the Uu DRX configuration and/or the attribute information of the Uu DRX configuration. In addition, the third communication device may determine the seventh information based on the Uu DRX configuration and/or the attribute information of the Uu DRX configuration. For example, the third communication device determines the at least one candidate second SL DRX configuration based on the Uu DRX configuration and/or the attribute information of the Uu DRX configuration, or the third communication device determines the first SL DRX configuration and/or the second SL DRX configuration based on the Uu DRX configuration and/or the attribute information of the Uu DRX configuration.

According to an eleventh aspect, this application provides a communication method. The communication method may be performed by the fourth communication device. The fourth communication device is connected to a fifth communication device, and a second SL connection is established between the fifth communication device and a second communication device. For example, the fourth communication device may include a network device such as a base station or a chip in a network device.

According to the method, the fourth communication device may send sixth information to the third communication device, where the sixth information is used by the third communication device to determine a first SL DRX configuration and a second SL DRX configuration. The fourth communication device may receive seventh information from the fourth communication device, where the seventh information may be used by the fourth communication device to determine the second SL DRX configuration. The first SL DRX configuration is used by the second communication device to receive SL transmission from the first communication device, and the first communication device accesses the third communication device. The second SL DRX configuration is used by the second communication device to receive SL transmission from a fifth communication device, and the fifth communication device accesses the fourth communication device. The fourth communication device may further send the second SL DRX configuration to the fifth communication device.

The second SL DRX configuration may correspond to at least one SL connection between the first communication device and the second communication device. In other words, the second SL DRX configuration is applicable to at least one SL connection between the first communication device and the second communication device.

In a possible example, the fourth communication device may receive the at least one candidate second SL DRX configuration from the third communication device, to determine the second SL DRX configuration based on the at least one candidate second SL DRX configuration.

In another possible example, the fourth communication device may send the attribute information of the second SL connection to the third communication device, where the second SL connection is an SL connection between the second communication device and the fifth communication device. In addition, the fourth communication device may receive the second SL DRX configuration from the third communication device.

In another possible example, the fourth communication device may further receive a first SL DRX configuration from the third communication device, to determine a second SL DRX configuration.

In another possible example, the fourth communication device may further receive a Uu DRX configuration and/or attribute information of a Uu DRX configuration from the third communication device, where the Uu DRX configuration is used for Uu transmission between the third communication device and the second communication device. The attribute information of the Uu DRX configuration is, for example, information about a communication service of a Uu interface between the third communication device and the second communication device, a resource configuration of the Uu interface, or energy saving requirement information of the second communication device. The fourth communication device may further determine the second SL DRX configuration based on the Uu DRX configuration and/or the attribute information of the Uu DRX configuration. For example, the fourth communication device may determine the second SL DRX configuration based on the seventh information and the Uu DRX configuration and/or the attribute information of the Uu DRX configuration.

For beneficial effects of any one of the possible designs of the eleventh aspect, refer to the descriptions of beneficial effects of any one of the possible designs of the tenth aspect in the tenth aspect.

According to a twelfth aspect, this application provides a communication method. The communication method may be performed by the third communication device. The third communication device is connected to a first communication device, and an SL connection is established between the first communication device and a second communication device. In addition, the third communication device is connected to a second communication device by using a Uu interface. For example, the third communication device may include a network device such as a base station or a chip in a network device.

According to the method, the third communication device may coordinate an SL DRX configuration of the SL connection between the first communication device and the second communication device and a Uu DRX configuration of a Uu connection between the third communication device and the second communication device. Then, the third communication device may send the SL DRX configuration to the first communication device and the second communication device.

According to a thirteenth aspect, this application provides a communication method. The method may be performed by a first communication device. The first communication device may include a device, such as a terminal, that supports SL communication, for example, a V2X device, or a chip in the device.

According to the method, the first communication device may receive second information from a second communication device, and determine, based on the second information, to send an SL DRX configuration to the second communication device, where the SL DRX configuration is used for an SL connection between the first communication device and the second communication device.

For example, the second information is used to determine that a quantity of SL connections of the second communication device is k, where k is a positive integer; or the second information indicates that a quantity of SL connections of the second communication device satisfies a first threshold condition; or the second information indicates the first communication device to send the SL DRX configuration, where the SL DRX configuration corresponds to the SL connection between the first communication device and the second communication device.

In addition, if the first communication device receives fourth information from the second communication device, the first communication device may determine, based on the fourth information, that an SL DRX configuration does not need to be determined, or the first communication device may determine, based on the fourth information, not to send the SL DRX configuration to the second communication device.

For example, the fourth information may be used to determine that the quantity of SL connections of the second communication device is 1, where 1 is a positive integer. The first communication device determines that a value of 1 does not satisfy a second threshold condition. The fourth information may alternatively indicate that the quantity of SL connections of the second communication device satisfies the second threshold condition. Alternatively, the fourth information may indicate that the second communication device determines the SL DRX configuration, or indicate that the first communication device does not need to determine the SL DRX configuration of the SL connection, or indicate that the first communication device does not need to send the SL DRX configuration of the SL connection to the second communication device.

According to a fourteenth aspect, this application provides a communication apparatus. The communication apparatus may be configured to perform the method according to any one of the possible designs in the first aspect to the thirteenth aspect. The function may be implemented by hardware, or may be implemented by hardware executing corresponding software. The hardware or the software includes one or more modules corresponding to the functions, method steps, or operations in the foregoing aspects and any designs of the foregoing aspects.

In a possible example, the communication apparatus may include a communication module (or referred to as a communication unit) and a processing module (or referred to as a processing unit). The communication module may be used by the communication apparatus for communication, and the processing module may be used by the communication apparatus to implement a processing function of the communication apparatus.

In another possible example, the communication apparatus may include a processor (or referred to as a processing chip or a processing circuit) and a transceiver (or referred to as a communication circuit). The processor may be configured to invoke program instructions, to perform a processing function of the communication apparatus. The communication module may be used by the communication apparatus to perform communication.

Alternatively, the communication apparatus may include a processor, a memory, and a transceiver. The memory may store program instructions. The processor may be configured to invoke program instructions in the memory, to perform a processing function of the communication apparatus. The communication module may be used by the communication apparatus to perform communication.

According to a fifteenth aspect, this application provides a communication system. For example, the communication system may include a communication device configured to implement the first aspect or any one of the possible designs of the first aspect, and a communication device configured to implement the third aspect or any one of the possible designs of the third aspect. Alternatively, the communication system may include a communication device configured to implement the first aspect or any one of the possible designs of the first aspect, and a communication device configured to implement the fifth aspect or any one of the possible designs of the fifth aspect. Alternatively, the communication system may include a communication device configured to implement the second aspect or any one of the possible designs of the second aspect, and a communication device configured to implement the fourth aspect or any one of the possible designs of the fourth aspect. Alternatively, the communication system may include a communication device configured to implement the sixth aspect or any one of the possible designs of the sixth aspect, and a communication device configured to implement the seventh aspect or any one of the possible designs of the seventh aspect. Alternatively, the communication system may include a communication device configured to implement the eighth aspect or any one of the possible designs of the eighth aspect, and a communication device configured to implement the ninth aspect or any one of the possible designs of the ninth aspect. Alternatively, the communication system may include a communication device configured to implement the tenth aspect or any one of the possible designs of the tenth aspect, and a communication device configured to implement the eleventh aspect or any one of the possible designs of the eleventh aspect.

For example, the communication system may include the first communication device according to the first aspect, any one of the possible designs of the first aspect, the second aspect, any one of the possible designs of the second aspect, the seventh aspect, any one of the possible designs of the seventh aspect, the eighth aspect, or any one of the possible designs of the eighth aspect, and the second communication device according to the third aspect, any one of the possible designs of the third aspect, the fourth aspect, any one of the possible designs of the fourth aspect, the sixth aspect, or any one of the possible designs of the sixth aspect. The first communication device may be a terminal device or a component of a terminal device, and the second communication device may be a terminal device or a component of a terminal device. SL communication may be performed between the first communication device and the second communication device. Optionally, the communication system may further include the third communication device according to the fifth aspect, any one of the possible designs of the fifth aspect, the ninth aspect, or any one of the possible designs of the ninth aspect. The third communication device may be a base station, for example, a base station accessed by the first communication device.

According to a sixteenth aspect, this application provides a computer storage medium, including program instructions. When the program instructions are run on a computer, the computer is enabled to perform the method according to the first aspect or any one of the possible designs of the first aspect, the second aspect or any one of the possible designs of the second aspect, the third aspect or any one of the possible designs of the third aspect, the fourth aspect or any one of the possible designs of the fourth aspect, the fifth aspect or any one of the possible designs of the fifth aspect, the sixth aspect or any one of the possible designs of the sixth aspect, the seventh aspect or any one of the possible designs of the seventh aspect, or the eighth aspect or any one of the possible designs of the eighth aspect.

According to a seventeenth aspect, an embodiment of this application provides a computer program product. When the computer program product is run on a computer, the computer is enabled to perform the method according to any one of the possible designs of the first aspect to the thirteenth aspect.

According to an eighteenth aspect, an embodiment of this application provides a system chip. The system chip may include a processor, and may further include a memory (or the system chip is coupled to a memory). The system chip executes program instructions in the memory, to perform the method according to any one of the possible designs of the first aspect to the thirteenth aspect. "Coupling" means that two components are directly or indirectly combined with each other. For example, coupling may mean an electrical connection between the two components.

### BRIEF DESCRIPTION OF DRAWINGS

FIG. 1 is a schematic diagram of an architecture of a communication system according to an embodiment of this application;
FIG. 2 is a schematic diagram of another architecture of a communication system according to an embodiment of this application;
FIG. 3A is a schematic flowchart of a communication method according to an embodiment of this application;
FIG. 3B is a schematic flowchart of another communication method according to an embodiment of this application;
FIG. 3C is a schematic flowchart of another communication method according to an embodiment of this application;
FIG. 4 is a schematic flowchart of another communication method according to an embodiment of this application;
FIG. 5 is a schematic diagram of an effect of coordinating DRX configurations according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of a communication apparatus according to an embodiment of this application;
FIG. 9 is a schematic flowchart of another communication apparatus according to an embodiment of this application;
FIG. 10 is a schematic flowchart of another communication apparatus according to an embodiment of this application; and
FIG. 11 is a schematic flowchart of another communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings. A specific operation method in a method embodiment may also be applied to an apparatus embodiment or a system embodiment.

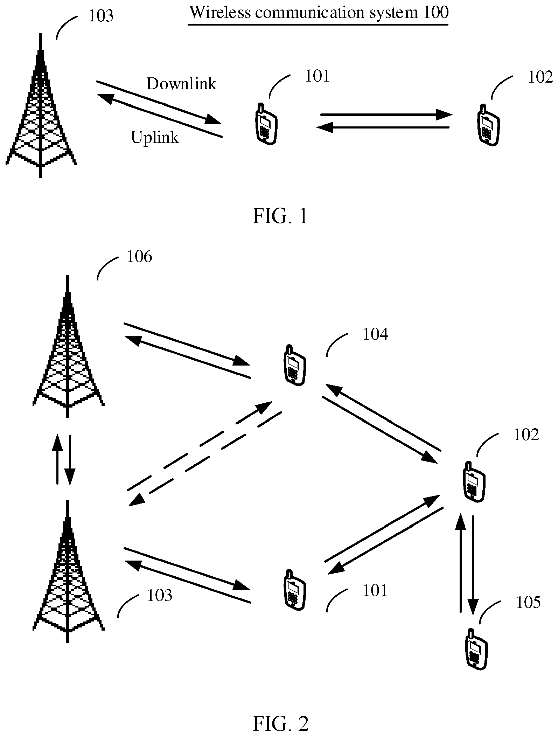

As shown in FIG. 1, a wireless communication system 100 provided in an embodiment of this application includes a terminal 101, a terminal 102, and a network device 103. An application scenario of the wireless communication system 100 includes but is not limited to a Global System for Mobile Communications (global system of mobile communication, GSM) system, a Code Division Multiple Access (code division multiple access, CDMA) system, a Wideband Code Division Multiple Access (wideband code division multiple access, WCDMA) system, a General Packet Radio Service (general packet radio service, GPRS), a Long Term Evolution (long term evolution, LTE) system, an LTE frequency division duplex (frequency division duplex, FDD) system, an LTE time division duplex (time division duplex, TDD) system, a Universal Mobile Telecommunications System (universal mobile telecommunication system, UMTS), a Worldwide Interoperability for Microwave Access (worldwide interoperability for microwave access, WiMAX) communication system, a future 5th generation (5th generation, 5G) system, a new radio (new radio, NR) communication system, an NR Internet of Vehicles system, a future Internet of Vehicles system based on mobile communication, or the like. It should be understood that the wireless communication system 100 provided in embodiments of this application is applicable to both a low-frequency scenario (sub 6G) and a highfrequency scenario (above 6G).

For example, the terminal 101 or the terminal 102 may be a device such as a terminal (terminal), a mobile station (mobile station, MS), or a mobile terminal (mobile terminal), or an apparatus such as a chip or a chip system. The terminal 101 can communicate with one or more network devices in one or more communication systems, and accept a network service provided by the network device. The network device herein includes but is not limited to the network device 103 shown in the figure. For example, in this embodiment of this application, the terminal 101 and the terminal 102 each may be a mobile phone (or referred to as a "cellular" phone) or a computer having a mobile terminal. Alternatively, the terminal 101 and the terminal 102 each may be a portable, pocket-sized, handheld, computer built-in, or in-vehicle mobile apparatus. Alternatively, the terminal 101 and the terminal 102 each may be a communication chip having a communication module. It should be understood that the terminal 101 may be configured to support communication with the network device through a universal user to network air interface (universal user to network interface, Uu air interface). The terminal 101 and the terminal 102 may be configured to support SL transmission. For example, SL communication may be performed between the terminal 101 and the terminal 102 through a direct communication (PC5) air interface (an air interface for SL communication between terminals). It should be understood that, in this application, SL communication may include SL unicast communication, multicast communication, and broadcast communication. Alternatively, the terminal 101 and the terminal 102 may be configured to support relay (relay) transmission. For example, the terminal 102 serves as a remote (remote) communication device, and the terminal 101 may serve as a relay terminal apparatus, to implement relay transmission. For example, the terminal 101 may be considered as a first communication device, and the first communication device and a second communication device implement the communication method provided in this application.

For example, in this application, an SL connection may be identified by using an identifier (or referred to as identification information) of the SL connection. An SL connection between the terminal 101 and the terminal 102 is used as an example. An identifier of the SL connection may include an identifier of the terminal 101 and/or an identifier of the terminal 102. Alternatively, an identifier of the SL connection may include an SL connection identifier or an SL link identifier (PC5 link identifier) of the SL connection.

It should be understood that the SL connection in this application may be a physical SL connection. In other words, there is only one SL connection between two independent communication devices at a physical layer. In this case, there is only one physical SL connection between the first communication device and the second communication device. Then, the identifier of the terminal 101 may include one or more of a temporary mobile subscriber identity (serving-temporary mobile subscriber identity, S-TMSI), an international mobile subscriber identity (international mobile subscriber identity, IMSI), a subscription concealed identifier (subscription permanent identifier, SUPI), or a globally unique temporary UE identity (globally unique temporary UE identity, GUTI) of the terminal 101. Similarly, the identifier of the terminal 102 may include one or more of an S-TMSI, an IMSI, an SUPI, or a GUTI of the terminal 102.

For example, for a unicast SL connection, when the terminal 101 serves as a transmit end of the SL connection, in other words, when the terminal 101 performs sending to the terminal 102 by using the SL connection, a source (source) layer 2 (layer 2, L2) identifier (or a source layer 1 identifier) of the SL connection may include a layer 2 (layer 2, L2) identifier of the terminal 101 (or a layer 1 (layer 1, L1) identifier of the terminal 101), and a destination (destination) layer 2 (layer 2, L2) identifier (or a destination layer 1 identifier) of the SL connection may include a layer 2 identifier of the terminal 102 (or a layer 1 identifier of the terminal 102).

Alternatively, an SL connection may include a logical SL connection. There may be a plurality of SL connections between two independent communication devices at a physical layer. In this case, different SL connections may be distinguished by using identifier pairs (or referred to as identifier pair information or identifier pair information). An identifier pair may include a source identifier and a destination identifier of an SL connection. An SL connection between the terminal 101 and the terminal 102 is used as an example. If the terminal 101 is used as a transmit end of the SL connection, a source identifier of the SL connection may include a layer 2 identifier (or a layer 1 identifier) of the terminal 101, and a destination identifier may include a layer 2 identifier (or a layer 1 identifier) of the terminal 102. Similarly, if the terminal 102 serves as a transmit end of the SL connection, a source identifier of the SL connection may include a layer 2 identifier (or a layer 1 identifier) of the terminal 102, and a destination identifier may include a layer 2 identifier (or a layer 1 identifier) of the terminal 101.

If the SL connection is used for multicast or broadcast sending of the terminal 101, the source identifier of the SL connection may include the layer 2 identifier of the terminal 101 (or a layer 1 identifier of the terminal 101), and the destination identifier of the SL connection may include the layer 2 identifier corresponding to a multicast or broadcast SL service (or the layer 1 identifier corresponding to a multicast or broadcast SL service).

The network device 103 may include a base station (base station, BS), or include a base station, a radio resource management device configured to control the base station, and the like. The base station herein may be a base transceiver station (base transceiver station, BTS) in a GSM or CDMA system, or may be a NodeB (nodeB, NB) in a WCDMA system, or may be an evolved NodeB (evolutional nodeB, eNB or eNodeB), a micro/pico eNB (micro/pico eNB), or a transmission/reception point (transmission/reception point, TRP) in an LTE system, or may be a radio controller in a cloud radio access network (cloud radio access network, CRAN) scenario. Alternatively, the base station 200 may be a relay station, an access point, a vehicle-mounted device, a wearable device, a base station in a future 5G network, a base station in a future evolved PLMN network, or the like, for example, an NR base station. This is not limited in this embodiment of this application. For example, the network device 103 may be considered as a third communication device, so that the first communication device, the second communication device, and the third communication device may implement the communication method provided in this application.

In addition, a network device 106 may be considered as a fourth communication device, and a terminal 104 may be considered as a fifth communication device. Therefore, the first communication device, the second communication device, the third communication device, the fourth communication device, and the fifth communication device may further implement the communication method provided in this application.

In addition, in FIG. 1, the terminal 102 may further communicate with the network device 103 through a Uu interface.

As shown in FIG. 2, in addition to SL communication with the terminal 101 by using the SL connection, the terminal 102 may further perform SL communication with at least one communication device other than the terminal 101 by using another SL connection. These communication devices are, for example, V2X devices or other communication devices that support SL communication or relay communication.

For example, the terminal 102 separately communicates with the terminal 101 and the terminal 104 by using SL connections. The terminal 102 may further communicate with a terminal 105 by using the SL connection. The terminal 101, the terminal 104, and the terminal 105 may separately access a same network device or different network devices. For example, the terminal 101 and the terminal 104 may access the network device 103, or the terminal 104 may access another network device 106.

In addition, in FIG. 2, wired and/or wireless communication may be performed between the network device 103 and the network device 106.

The communication system shown in FIG. 1 and/or FIG. 2 is used as an example to describe the communication method provided in embodiments of this application. The communication method may be performed by the first communication device and the second communication device. It should be understood that the first communication device may include the terminal 101 in FIG. 1 or a chip in the terminal 101, and the second communication device may include the terminal 102 or a chip in the terminal 102.

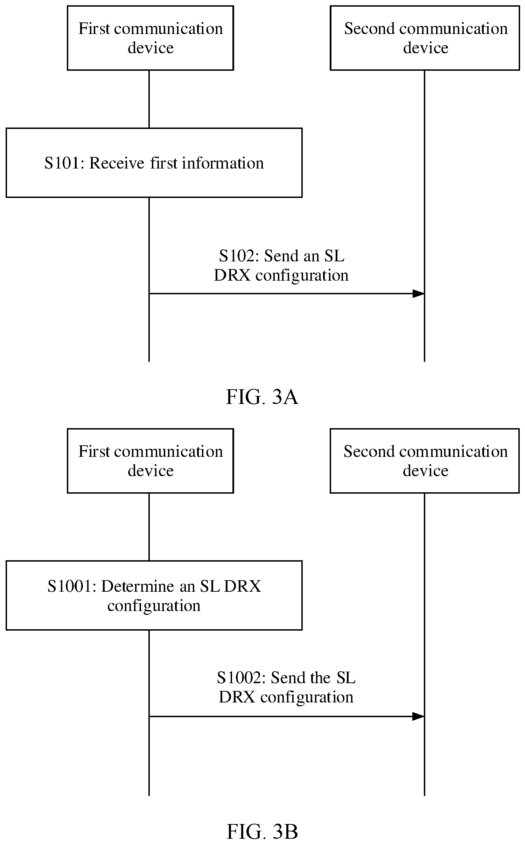

As shown in FIG. 3A, in a first embodiment provided in this application, the communication method may include the following steps.

S101: A first communication device receives first information.

The first information may be used to determine an SL DRX configuration. The SL DRX configuration is used for an SL connection between the first communication device and the second communication device. The first information being used to determine an SL DRX configuration may mean that the SL DRX configuration is determined based on the first information, that the SL DRX configuration is determined after the first information is received, or the like.

Optionally, the first information is reference information or assistance information for determining an SL DRX configuration.

Receiving first information in embodiments of this application may also be understood as determining first information or referring to first information. This is not limited in this embodiment of this application. In this application, the SL connection between the first communication device and the second communication device may also be referred to as an SL connection of the first communication device and the second communication device, or the like.

For example, the first communication device and/or the second communication device may be terminal devices.

S102: The first communication device sends the SL DRX configuration to the second communication device.

For example, the SL DRX configuration may include an identifier (or an identifier pair) of the SL connection, to indicate that the SL DRX configuration is associated with the SL connection.

It should be understood that, the first communication device may serve as a transmit end of the SL connection, and the second communication device serves as a receive end of the SL connection; and/or the second communication device may serve as a transmit end of the SL connection, and the first communication device may serve as a receive end of the SL connection. When transmission of the SL connection is bidirectional (to be specific, transmission directions of the SL connection include sending by the first communication device to the second communication device, and sending by the second communication device to the first communication device), the SL DRX configuration may include a configuration corresponding to each transmission direction, or the SL DRX configuration is a DRX configuration for transmission of both directions of the SL connection.

Correspondingly, the second communication device receives the SL DRX configuration. Subsequently, the second communication device may communicate with the first communication device by using (or using or based on) the SL DRX configuration. That the second communication device communicates with the first communication device based on the SL DRX configuration includes: If the second communication device serves as the transmit end of the SL connection, the second communication device sends an SL service based on the SL DRX configuration; if the second communication device serves as the receive end of the SL connection, the second communication device receives an SL service based on the SL DRX configuration.

According to the foregoing method, the first communication device can determine the SL DRX configuration based on the first information. Because the first information is referred to in the process of determining the SL DRX configuration, the determined SL DRX configuration is more accurate. DRX obtained by performing SL connection based on the SL DRX configuration can improve energy saving effect of the receive end of the SL connection. If the second communication device is a receiving device of the SL connection, energy saving effect of the second communication device can be enhanced. If the first communication device is a receiving device of the SL connection, energy saving effect of the first communication device can be enhanced.

As shown in FIG. 3B, in a second embodiment provided in this application, the communication method may include the following steps.

S1001: A first communication device determines an SL DRX configuration.

The SL DRX configuration is used for an SL connection between the first communication device and a second communication device.

Optionally, the first communication device may determine the SL DRX configuration based on first information and/or at least one candidate SL DRX configuration. The first information and/or the at least one candidate SL DRX configuration may be stored in the first communication device, for example, set through pre-configuration, or the first communication device may receive the first information and/or the at least one candidate SL DRX configuration.

Optionally, the first information is reference information or assistance information for determining the SL DRX configuration. The first information may be from a third communication device, the second communication device, or another communication device. The third communication device is, for example, a base station accessed by the first communication device.

Optionally, the candidate SL DRX configuration is, for example, a reference SL DRX configuration or a recommended SL DRX configuration. The at least one candidate SL DRX configuration may be from the third communication device, the second communication device, or another communication device.

Receiving first information in embodiments of this application may also be understood as determining first information or referring to first information. This is not limited in this embodiment of this application. In this application, the SL connection between the first communication device and the second communication device may also be referred to as an SL connection of the first communication device and the second communication device, or the like.

For example, the first communication device and/or the second communication device may be terminal devices.

S1002: The first communication device sends the SL DRX configuration to the second communication device.

For example, the SL DRX configuration may include an identifier (or an identifier pair) of the SL connection, to indicate that the SL DRX configuration is associated with the SL connection.

It should be understood that, the first communication device may serve as a transmit end of the SL connection, and the second communication device serves as a receive end of the SL connection; and/or the second communication device may serve as a transmit end of the SL connection, and the first communication device may serve as a receive end of the SL connection. When transmission of the SL connection is bidirectional (to be specific, transmission directions of the SL connection include sending by the first communication device to the second communication device, and sending by the second communication device to the first communication device), the SL DRX configuration may include a configuration corresponding to each transmission direction, or the SL DRX configuration is a DRX configuration for transmission of both directions of the SL connection.

Correspondingly, the second communication device receives the SL DRX configuration. Subsequently, the second communication device may communicate with the first communication device based on the SL DRX configuration. That the second communication device communicates with the first communication device based on the SL DRX configuration includes: If the second communication device serves as the transmit end of the SL connection, the second communication device sends an SL service based on the SL DRX configuration; if the second communication device serves as the receive end of the SL connection, the second communication device receives an SL service based on the SL DRX configuration.

According to the foregoing method, the first communication device can determine the SL DRX configuration. Because the first information is referred to in the process of determining the SL DRX configuration, the determined SL DRX configuration is more accurate. Performing DRX of the SL connection based on the SL DRX configuration can improve energy saving effect of the receive end of the SL connection. If the second communication device is a receiving device of the SL connection, energy saving effect of the second communication device can be enhanced. If the first communication device is a receiving device of the SL connection, energy saving effect of the first communication device can be enhanced.

It should be understood that, in this application, the SL DRX configuration may correspond to at least one SL connection between the first communication device and the second communication device. In other words, the SL DRX configuration is applicable to at least one SL connection between the first communication device and the second communication device.

For example, in the first and/or second embodiments, the first information is related to at least one of the first communication device, the second communication device, or the SL connection between the first communication device and the second communication device. Therefore, an attribute of the SL connection is considered during determining the SL DRX configuration corresponding to the SL connection, so that a result of the SL DRX configuration is more accurate, and energy saving effect can be further improved.

In the first and/or second embodiments, the first communication device may be in a connected mode or a non-connected mode. This is not specifically limited. In addition, the second communication device may be in a connected mode or a non-connected mode. This is not specifically limited. The non-connected mode is an idle (idle) mode or an inactive (inactive) mode.

Optionally, in the first and/or second embodiments, the first information may come from the second communication device and/or a base station (for example, the third communication device) accessed by the first communication device. For example, before S101, the first communication device may send request information of the first information. Alternatively, before S1001, the first communication device may send request information of the first information to the second communication device and/or the third communication device, and receive the first information from the second communication device and/or the third communication device.

Optionally, in the first embodiment and/or second embodiment, the first information may include a portion or all of the following information: service information of the SL connection, service information of other one or more SL connections other than the SL connection of the second communication device, a resource configuration of the SL connection, a resource configuration of other one or more SL connections other than the SL connection of the second communication device, an SL DRX configuration of another SL connection of the second communication device (for example, a configured SL DRX configuration or a configurable SL DRX configuration of another SL connection), a reference SL DRX configuration of the SL connection and/or a reference SL DRX configuration of another SL connection, a Uu DRX configuration of the second communication device, or the like.

The foregoing configurable SL DRX configuration may be an SL DRX configuration that may be used by the another SL connection. The configurable SL DRX configuration may be provided by the second communication device, or may be provided by a peer communication device of the another SL connection of the second communication device. The first information includes the configurable SL DRX configuration of another SL connection of the second communication device, so that the first communication device can learn of an SL DRX configuration that is allowed to be configured for the current another SL connection of the second communication device. In this way, after the first communication device sends the SL DRX configuration for the SL connection between the first communication device and the second communication device to the second communication device based on the first information subsequently, the second communication device may further adjust an SL DRX configuration of the another SL connection based on the SL DRX configuration of the SL connection between the first communication device and the second communication device in a range of the foregoing "configurable SL DRX configuration of another SL connection of the second communication device", to reduce power consumption.

In addition, in the foregoing first embodiment and/or second embodiment, when the second communication device is the receive end of the SL connection, the first information may further include energy saving requirement information of the second communication device. Similarly, when the first communication device serves as the receive end of the SL connection, the first information may include energy saving requirement information of the first communication device.

When the first information includes a plurality of pieces of the foregoing information, one part of the first information may come from the second communication device, and another part of the first information may come from a base station accessed by the first communication device. For example, when the first information includes service information of another SL connection other than the SL connection of the second communication device and the resource configuration of the SL connection, the service information of another SL connection other than the SL connection of the second communication device may come from the second communication device, and the resource configuration of the SL connection may come from the base station accessed by the first communication device. It should be understood that, in this application, when the first information includes the plurality of pieces of information, the plurality of pieces of information may alternatively come from a same communication device, for example, all of the plurality of pieces of information come from the second communication device or all come from a base station accessed by the first communication device.

Optionally, in the foregoing first embodiment and/or second embodiment, when the first information comes from the second communication device, the request information of the first information may be sent to the second communication device. When the first information comes from the base station accessed by the first communication device, the request information of the first information may be sent to the base station accessed by the first communication device. When the plurality of pieces of information included in the first information come from the second communication device and the base station accessed by the first communication device, the request information of the first information may be separately sent to the second communication device and the base station accessed by the first communication device.

The resource configuration of the SL connection in this application may include a resource configuration for sending an SL service (or referred to as an SL sending resource configuration) and/or a resource configuration for receiving an SL service (or referred to as an SL receiving resource configuration). The resource configuration for sending an SL service is, for example, a resource configuration that is for sending an SL service and that is determined by a transmit terminal device or a base station of a transmit terminal device. The resource configuration for receiving an SL service is, for example, a resource configuration that is for receiving an SL service and that is determined by a receive terminal device or a base station of a receive terminal device.

In addition, the resource configuration of the SL connection may include an available SL resource configuration set and/or a determined resource configuration. The determined resource configuration may be a resource configuration in the available SL resource configuration set.

The resource configuration of the SL connection may be obtained by the first communication device from the first communication device (for example, obtained through pre-configuration), the base station accessed by the first communication device, or a peer end (for example, the second communication device) of the SL connection. The peer end of the SL connection may obtain the resource configuration of the SL connection from a base station accessed by the peer end. It should be understood that the resource configuration of the SL connection in this application may be an SL resource configuration.

Optionally, when the peer end of the SL connection is out of coverage of any base station, the resource configuration of the SL connection may be obtained by the peer end from pre-configuration of the peer end. Optionally, when the peer end of the SL connection is within coverage, the resource configuration of the SL connection may come from the base station accessed by the peer end.

For example, if the first communication device is a transmit device, the resource configuration of the SL connection may include the determined resource configuration that is for sending an SL service and that is of the SL connection, and/or the available resource configuration set that is for sending an SL service and that is of the SL connection. The available resource configuration set for sending an SL service may be obtained by the first communication device from the base station accessed by the first communication device. If the first communication device is a receive device, the resource configuration of the SL connection may include the determined resource configuration that is for receiving an SL service and that is of the SL connection, and/or the available resource configuration set that is for receiving an SL service and that is of the SL connection. The available resource configuration set for receiving an SL service may be obtained by the first communication device from the base station accessed by the first communication device.

In addition, when the first communication device is a transmit end, the resource configuration of the SL connection received by the first communication device may include a resource configuration that is from the base station of the first communication device and that is for sending an SL service, and/or a resource configuration that is from the second communication device and that is for receiving an SL service. When the first communication device is a receive end, the resource configuration of the SL connection received by the first communication device may include a resource configuration that is from the base station of the first communication device and that is for receiving an SL service, and/or a resource configuration that is from the second communication device and that is for sending an SL service.

In the first information, a portion or all of the following information may be from the second communication device: the service information of another SL connection of the second communication device, the resource configuration of another SL connection of the second communication device, the reference SL DRX configuration of the SL connection and/or the reference SL DRX configuration of another SL connection, the SL DRX configuration of another SL connection of the second communication device, the Uu DRX configuration of the second communication device, the energy saving requirement information of the second communication device, or the like.

In a possible example, if a quantity of SL connections of the second communication device is 1, the first information may include a portion or all of the following information: the service information of the SL connection, the resource configuration of the SL connection, the reference SL DRX configuration of the SL connection, the energy saving requirement information of the second communication device, or the like. If there are a plurality of SL connections of the second communication device, for example, as shown in FIG. 2, the terminal 102 performs SL transmission with the plurality of communication devices, the first information may include a portion or all of the following information: the service information of the SL connection, the service information of another SL connection of the second communication device, the resource configuration of the SL connection, the resource configuration of another SL connection of the second communication device, the reference SL DRX configuration of the SL connection and/or the reference SL DRX configuration of another SL connection, or the energy saving requirement information of the second communication device.

The service information of the SL connection may include at least one of the following information: traffic pattern (pattern) information, a traffic period, a time offset (offset), quality of service (quality of service, QoS) information, or a message size of a service to which data transmitted by using the SL connection belongs. The QoS information may include information a QoS requirement, a QoS configuration (profile), or the like of a service. A more appropriate SL DRX configuration may be determined based on the service information. For example, a cycle of the SL DRX configuration is consistent with a service transmission cycle, and/or the SL DRX configuration enables the second communication device not to be in a sleep mode in a time period in which data (or control information (for example, sidelink resource scheduling or sidelink control information (sidelink control information, SCI)) or the like) is being transmitted by using the SL connection. When there are the plurality of SL connections of the second communication device, the first communication device determines the SL DRX configuration based on service information of the plurality of SL connections (for example, all the SL connections), to avoid mismatch between a service feature of the SL DRX configuration and a service feature of another SL connection, and to improve service transmission quality.

The resource configuration of the SL connection may include information about an available transmission resource of the SL connection. The SL DRX configuration is determined based on the available transmission resource of the SL connection. Therefore, when the second communication device is a receive end, the second communication device is not in the sleep mode beyond a possible time period of data or control information transmission on the SL connection. This improves energy saving effects. In addition, the resource configuration of the SL connection may include location indication information of a resource for transmission. When UE autonomous resource allocation (for example, a mode 2) is used, the resource configuration of the SL connection may further include a resource reservation cycle. The resource reservation cycle is a cycle for periodically reserving a resource by UE when UE autonomous resource selection is used. When there are the plurality of SL connections of the second communication device, the first communication device determines the SL DRX configuration based on a resource configuration of the plurality of SL connections (for example, all the SL connections), to avoid mismatch between the resource configuration of the SL DRX configuration and a resource configuration of another SL connection, and to improve service transmission quality.

A reference SL DRX configuration may correspond to the SL connection between the first communication device and the second communication device and/or another SL connection of the second communication device. The reference SL DRX configuration may be an SL DRX configuration that the second communication device expects to obtain, or a recommended or suggested SL DRX configuration. Therefore, an SL DRX configuration determined based on the reference SL DRX configuration better satisfies a requirement of the second communication device. In addition, the reference SL DRX configuration may be stored in the first communication device or sent to the first communication device by the second communication device. Specifically, when the reference SL DRX configuration is stored in the first communication device, the reference SL DRX configuration may be pre-configured on the first communication device. When the reference SL DRX configuration is sent by the second communication device to the first communication device, the reference SL DRX configuration may be determined by a network device, the second communication device, or a peer communication device of an SL connection of the second communication device.

The reference SL DRX configuration may include one or more sets of complete or partial DRX parameters. A complete set of DRX parameters may include one or more of the following parameters: an SL DRX on duration timer (drx-onDurationTimerSL), an SL DRX slot offset (drx-SlotOffsetSL), an SL DRX inactivity timer (drx-InactivityTimerSL), an SL DRX retransmission timer (drx-RetransmissionTimerSL), an SL DRX long cycle start offset (drx-LongCycleStartOffsetSL), an SL DRX long cycle (drx-LongCycleSL), an SL DRX short cycle (drx-ShortCycleSL), an SL DRX short cycle timer (drx-ShortCycleTimerSL), or an SL DRX hybrid automatic repeat request (hybrid automatic repeat request, HARQ) round trip time (round trip time, RTT) timer (drx-HARQ-RTT-TimerSL). Partial DRX parameters may include some parameters in the complete set of DRX parameters.

The Uu DRX configuration of the second communication device may be used by the second communication device to perform DRX transmission on a Uu interface. For example, in FIG. 1, if the terminal 102 communicates with the network device 103 through the Uu interface, when DRX is used, a Uu DRX configuration of the terminal 102 may include a DRX configuration of the Uu interface. In addition, this application does not exclude a case in which the second communication device communicates with a plurality of network devices through a Uu interface. In this case, the Uu DRX configuration of the second communication device may include a DRX configuration for transmission on each Uu link.

The energy saving requirement information of the first communication device and/or energy saving requirement information of the second communication device are included. The energy saving requirement information of the second communication device is used as an example for description. The energy saving requirement information of the second communication device is used for representing an energy saving requirement of the second communication device, for example, indicates whether energy saving needs to be performed on the second communication device, whether energy saving effect needs to be improved, or whether energy saving effect needs to be reduced. For example, if the energy saving requirement information of the second communication device indicates that energy saving does not need to be performed on the second communication device, the first communication device does not need to configure SL DRX for the second communication device, or the SL DRX configuration may enable sleep mode duration of the second communication device in each DRX cycle to be relatively short. For example, in each DRX cycle, a proportion of sleep mode duration of the second communication device to DRX cycle duration does not exceed (or is not greater than) a first sleep mode duration proportion threshold. If the energy saving requirement information of the second communication device indicates that energy saving needs to be performed on the second communication device, the SL DRX configuration may enable sleep mode duration of the second communication device in each DRX cycle to be relatively long. For example, in each DRX cycle, a proportion of sleep mode duration of the second communication device to DRX cycle duration is not less than (or not smaller than) a second sleep mode duration proportion threshold. The first sleep mode duration proportion threshold is equal to or not equal to the second sleep mode duration proportion threshold.

For example, to enhance energy saving, a parameter in the SL DRX configuration may be adjusted in the following manner: decreasing drx-onDurationTimerSL, or decreasing drx-InactivityTimerSL, or decreasing drx-RetransmissionTimerSL, or increasing drx-ShortCycleSL, or increasing drx-LongCycleSL, or increasing drx-HARQ-RTT-TimerSL. On the contrary, to reduce energy saving, the foregoing parameters may be adjusted reversely.

In the first embodiment and/or second embodiment, the first information related to the second communication device may include the energy saving requirement information of the second communication device, the service information of other one or more SL connections other than the SL connection of the second communication device, the Uu DRX configuration of the second communication device, or the resource configuration of other one or more SL connections other than the SL connection of the second communication device. The first information related to the SL connection may include the service information of the SL connection, the resource configuration of the SL connection, the reference SL DRX configuration of the SL connection, or the like.

It should be understood that the foregoing example of the first information is merely an example, and it should not be understood as that a range of the first information is limited to the foregoing listed information. For example, the first information related to the first communication device may further include a Uu DRX configuration of the first communication device, a resource configuration of the first communication device, an RRC mode (an RRC connected mode, an RRC idle mode, or an RRC inactive mode), or the like. The first information related to the second communication device may further include the resource configuration of the second communication device, an RRC mode (an RRC connected mode, an RRC idle mode, or an RRC inactive mode), or the like. The first information related to the SL connection may further include an access stratum (access stratum, AS) layer configuration, a non access stratum (non access stratum, NAS) layer configuration, signal quality, an SL connection/link availability configuration, a cast type (cast) (for example, unicast/multicast/broadcast), or the like of the SL connection.

In the first embodiment and/or second embodiment, in a possible example, the first communication device may determine the SL DRX configuration from the at least one candidate SL DRX configuration based on the first information. The at least one candidate SL DRX configuration may be determined by the network device, the second communication device, or another communication device, and sent by the network device to the first communication device (for example, sent in a broadcast or multicast manner, or sent to the first communication device in a connected mode via dedicated signaling). Alternatively, the at least one candidate SL DRX configuration may be stored in the first communication device, for example, is pre-configured on the first communication device. When the SL DRX configuration is sent in the broadcast manner, the SL DRX configuration may be sent via system information.

The network device may send a mapping relationship between at least one candidate SL DRX configuration and service information in a broadcast or multicast manner. The service information herein includes at least one of the following information: the traffic pattern information, the traffic period, the time offset, the QoS information, or the message size. The mapping relationship may be used by the first communication device to determine, based on the service information (for example, service information of a service to be transmitted), an SL DRX configuration that has the mapping relationship with the service information from the at least one candidate SL DRX configuration.

For example, after receiving second information from the second communication device, the first communication device may determine the SL DRX configuration and send the SL DRX configuration to the second communication device. The second information may be used to determine that the quantity of SL connections of the second communication device is k, where k is a positive integer; or the second information indicates that the quantity of SL connections of the second communication device satisfies a first threshold condition; or the second information indicates the first communication device to send the SL DRX configuration. Therefore, the first communication device may determine, based on the second information, whether to determine and send the SL DRX configuration to the second communication device. This avoids a conflict between different SL DRX configurations separately determined by the first communication device and the second communication device.

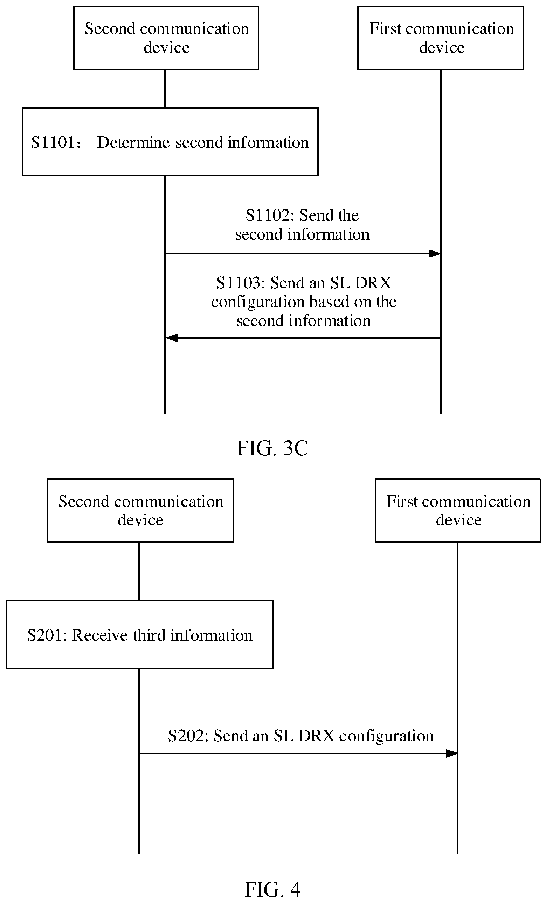

As shown in FIG. 3C, another communication method according to an embodiment of this application includes the following steps.

S1101: A second communication device determines second information.

Optionally, the second information may be used to determine that a quantity of SL connections of the second communication device is k, where k is a positive integer; or the second information indicates that a quantity of SL connections of the second communication device satisfies a first threshold condition; or the second information indicates a first communication device to send an SL DRX configuration. Alternatively, the second information may indicate that a quantity of SL connections of the second communication device does not satisfy a first threshold condition; or the second information indicates a first communication device not to send an SL DRX configuration.

Optionally, for the SL DRX configuration, refer to the descriptions in other embodiments of this application. For example, the SL DRX configuration is the SL DRX configuration determined in S102 or S1001.

S1102: The second communication device sends the second information to the first communication device.

Correspondingly, the first communication device receives the second information from the second communication device.

S1103: The first communication device determines, based on the second information, to send an SL DRX configuration to the second communication device, where the SL DRX configuration is used for an SL connection between the first communication device and the second communication device; or the first communication device determines, based on the second information, not to send an SL DRX configuration to the second communication device.

If the second information is used to determine that the quantity of SL connections of the second communication device is k, or the second information indicates that the quantity of SL connections of the second communication device satisfies the first threshold condition, or the second information indicated the first communication device to send the SL DRX configuration, the first communication device may determine, based on the second information, to send the SL DRX configuration to the second communication device. If the second information indicates that the quantity of SL connections of the second communication device does not satisfy the first threshold condition, or the second information indicates the first communication device not to send the SL DRX configuration, the first communication device may determine, based on the second information, not to send the SL DRX configuration to the second communication device.

According to the method shown in FIG. 3C, the first communication device may determine, based on the second information, whether to determine and send the SL DRX configuration to the second communication device. This avoids a conflict between different SL DRX configurations separately determined by the first communication device and the second communication device.

It should be understood that the method shown in FIG. 3C may be independent of the procedures shown in the first embodiment and the second embodiment, or may be performed within the first embodiment or the second Embodiment.

For example, after determining, based on the second information, that the quantity of SL connections of the second communication device is k, the second communication device may determine whether k satisfies the first threshold condition. The first threshold condition may include that k is greater than or is greater than or equal to a first specified value, or may include that k is less than or is less than or equal to a second specified value, or may include that k is within a specific value range. For example, if the threshold condition includes that k is less than the first specified value, when determining that k is less than the first specified value, the first communication device may determine that the quantity of SL connections satisfies the first threshold condition, and the first communication device may determine the SL DRX configuration and send the SL DRX configuration to the second communication device; or when k is not less than the first specified value, the first communication device may determine that the quantity of SL connections does not satisfy the first threshold condition, and the first communication device may not determine the SL DRX configuration (or skip determining the SL DRX configuration), or may skip sending the SL DRX configuration to the second communication device (or skip sending the SL DRX configuration).

In addition, the second information may alternatively indicate that the quantity of SL connections satisfies the first threshold condition. The first threshold condition may include that k is greater than or is greater than or equal to a first specified value, or may include that k is less than or is less than or equal to a second specified value, or may include that k is within a specific value range. For example, when the second information carries a bit 0, it indicates that the quantity of SL connections of the second communication device satisfies the first threshold condition, and the first communication device may determine and send the SL DRX configuration to the second communication device. Alternatively, when the second information carries a bit 1, it indicates that the quantity of SL connections of the second communication device does not satisfy the first threshold condition, and the first communication device may skip determining the SL DRX configuration, or may skip sending the SL DRX configuration to the second communication device.

The second information may alternatively indicate the first communication device to send the SL DRX configuration. In other words, the second information may indicate the first communication device to determine and send the SL DRX configuration to the second communication device. For example, when the second information carries a bit 0, it indicates that the first communication device needs to send the SL DRX configuration to the second communication device, and the first communication device may determine and send the SL DRX configuration to the second communication device. Alternatively, when the second information carries a bit 1, it indicates that the first communication device does not need to determine and send the SL DRX configuration to the second communication device, and the first communication device may skip determining the SL DRX configuration, or may skip sending the SL DRX configuration to the second communication device.

The following describes a method for determining, by the second communication device, whether the quantity of SL connections of the second communication device is 1.

For example, the second communication device may determine whether an identifier sent by another communication device in a process of establishing an SL connection belong to a same communication device or correspond to a same layer 2 (or a same layer 1) identifier, to determine whether the quantity of SL connections of the second communication device is 1.

Specifically, the second communication device may obtain an identifier of a peer communication device of an SL connection, for example, an S-TMSI, an IMSI, an SUPI, or a GUTI, and recognize, based on the identifier of the peer communication device, whether the quantity of SL connections is 1. The identifier may be sent by the second communication device to the second communication device in the process of establishing an SL connection (or an SL link). For example, an S-TMSI, an SUPI, a GUTI, or the like of the first communication device is carried in access stratum (access stratum, AS) layer information that carries SL signaling (for example, direct communication indication (direct communication request) signaling or direct communication accept (direct communication accept) signaling).

In a possible example, when all identifiers of peer communication devices belong to a same communication device, the second communication device may determine that the quantity of SL connections is 1. For example, if the second communication device determines that all identifiers of transmit-end communication devices of all the SL connections belong to the first communication device, the second communication device may determine that the quantity of SL connections of the second communication device is 1.

In another example, after determining that identifier pairs of all SL connections are a same identifier pair, the second communication device determines that the quantity of SL connections is 1, and the second communication device may subsequently send the second information to the first communication device. For example, for identifier pairs of SL connections related to the second communication device, if a quantity of SL connections whose destination layer 2 or layer 1 identifier is a layer 2 or layer 1 identifier of the second communication device are 1, in other words, if a quantity of SL connections for which the second communication device serves as a receive end is 1, the second communication device may determine that the quantity of SL connections is 1.

For example, the quantity of SL connections of the second communication device may include a quantity of SL connections for which the second communication device serves as a transmit end, or may include a quantity of SL connections for which the second communication device serves as a receive end, or may include a sum of a quantity of SL connections for which the second communication device serves as a transmit end and a quantity of SL connections for which the second communication device serves as a receive end.

For example, if the second communication device determines that the quantity of SL connections for which the second communication device serves as an SL receive end and/or the quantity of SL connections for which the second communication device serves as an SL transmit end is N, the second communication device may determine that the quantity of SL connections is N.

In this case, the second communication device may further send service information of another SL connection and/or a resource configuration of another SL connection to the first communication device, so that the first communication device determines the SL DRX configuration between the first communication device and the second communication device.

For example, after receiving the first request information from the second communication device, the first communication device may further send assistance information corresponding to the SL connection to the second communication device. The first request information is used to request to obtain the assistance information. The assistance information includes at least one of the following information: service information of the SL connection, a resource configuration of the SL connection, or a reference SL DRX configuration of the SL connection.

If the quantity of SL connections is greater than 1, the assistance information corresponding to the SL connection may be sent by the second communication device to a communication device corresponding to another SL connection, so that the communication device corresponding to another SL connection determines an SL DRX configuration. For example, as shown in FIG. 2, the terminal 102 may obtain assistance information of the SL connection between the terminal 101 and the terminal 102 from the terminal 101, and send the assistance information to the terminal 104, so that the terminal 104 determines an SL DRX configuration, where the SL DRX configuration corresponds to the SL connection between the terminal 102 and the terminal 104. For a method for determining the SL DRX configuration by the terminal 104, refer to the descriptions of determining the SL DRX configuration by the first communication device in this application.

It should be understood that the foregoing first embodiment may be used in a scenario in which a cast type of the SL connection is unicast, multicast, or broadcast.

In addition, in this application, it may be required that an SL radio resource control (radio resource control, RRC) connection is established between the first communication device and the second communication device. Therefore, in a multicast or broadcast scenario, the communication method provided in this application may be applied only when the SL RRC connection is established between the first communication device and the second communication device. The SL RRC connection herein may be a unicast SL RRC connection, or may be a multicast SL RRC connection. If no RRC connection is established, the SL DRX configuration between the first communication device and the second communication device may be carried in signaling/information such as a Media Access Control (media access control, MAC) control element (control element, CE) message, SCI or a PSCCH, or other information needed for implementing the method provided in this embodiment of this application.

In addition, when the SL connection is a multicast or broadcast connection, a quantiy of communication devices that correspond to the first communication device and receive SL transmission may be required to be less than or to be less than or equal to a first threshold. Therefore, in a multicast or broadcast scenario, the communication method provided in this application may be applied only when the quantity of communication devices that receives SL transmission from the first communication device is less than or is less than or equal to the first threshold.

In addition, for multicast (or broadcast) communication, in transmission of S102, the first communication device may send the SL DRX configuration to the second communication device in a multicast (or broadcast) manner. Therefore, when the first communication device performs multicast (or broadcast) communication with a plurality of second communication devices by using SL connections, the first communication device may multicast (or broadcast) an SL DRX configuration, for example, broadcast an RRC message, a Media Access Control (media access control, MAC) control element (control element, CE) message, or SCI, to improve configuration efficiency. In addition, to reduce signaling overheads, in transmission of S102, the first communication device may send an index of the SL DRX configuration. For example, the index of the SL DRX configuration is carried in SCI, and the second communication device determines the SL DRX configuration based on the index.

As shown in FIG. 4, a third embodiment provided in embodiments of this application may include the following steps.

S201: A second communication device receives third information from a first communication device, where the third information can be used to determine an SL DRX configuration. The SL DRX configuration is used for an SL connection between a first communication device and the second communication device.

For example, the first communication device and the second communication device may be terminal devices.

It should be understood that, the first communication device may serve as a transmit end of the SL connection, and the second communication device serves as a receive end of the SL connection; and/or the second communication device may serve as a transmit end of the SL connection, and the first communication device may serve as a receive end of the SL connection.

S202: The second communication device sends the SL DRX configuration to the first communication device.

According to the foregoing method, the second communication device may determine the SL DRX configuration based on the third information. When the second communication device is a receive device, energy saving effect of the second communication device can be improved. When the first communication device is a receive device of the SL connection, energy saving effect of the first communication device can be improved.

It should be understood that, in the foregoing third embodiment, the first communication device may be in a connected mode, a non-connected mode, or out of network coverage (OOC). This is not specifically limited. In addition, the second communication device may be in a connected mode or a non-connected mode. This is not specifically limited. The non-connected mode is an idle (idle) mode or an inactive (inactive) mode.

For example, the third information is related to the first communication device and/or the SL connection between the first communication device and the second communication device. Therefore, an attribute of the SL connection is considered during determining the SL DRX configuration corresponding to the SL connection, so that a result of the SL DRX configuration is more accurate, and energy saving effect can be further improved.

For example, the third information may include a portion or all of the following information: service information of the SL connection, a resource configuration of the SL connection, a reference SL DRX configuration of the SL connection, or the like. For the service information of the SL connection, the resource configuration of the SL connection, and the reference SL DRX configuration of the SL connection, refer to the descriptions of the service information of the SL connection, the resource configuration of the SL connection, and the reference SL DRX configuration of the SL connection in the first embodiment, respectively.

The resource configuration of the SL connection in this application may include a resource configuration for sending an SL service (or referred to as an SL sending resource configuration) and/or a resource configuration for receiving an SL service (or referred to as an SL receiving resource configuration). The resource configuration for sending an SL service is, for example, a resource configuration that is for sending an SL service and that is determined by a transmit terminal device or a base station of a transmit terminal device. The resource configuration for receiving an SL service is, for example, a resource configuration that is for receiving an SL service and that is determined by a receive terminal device or a base station of a receive terminal device.

In addition, the resource configuration of the SL connection may include an available SL resource configuration set and/or a determined resource configuration. The determined resource configuration may be a resource configuration in the available SL resource configuration set. The available SL resource configuration set may be obtained by the first communication device from the first communication device, a base station accessed by the first communication device, or a base station accessed by a receive end (for example, a second communication device) of an SL connection. For example, if the first communication device is a transmit device, the resource configuration of the SL connection may include the determined resource configuration for sending an SL service, and/or the available resource configuration set for sending an SL service. The available resource configuration set for sending an SL service may be obtained by the first communication device from the base station accessed by the first communication device. If the first communication device is a receive device, the resource configuration of the SL connection may include the determined resource configuration for receiving an SL service, and/or the available resource configuration set for receiving an SL service. The available resource configuration set for receiving an SL service may be obtained by the first communication device from the base station accessed by the first communication device.

In the foregoing third information, the first information related to the SL connection may include the service information of the SL connection, the resource configuration of the SL connection, the reference SL DRX configuration of the SL connection, and the like. The service information of the SL connection includes at least one of the following information: traffic pattern information, a traffic period, a time offset, QoS information, or a message size.

The third information may be obtained by the second communication device from the first communication device. For example, the first communication device is the terminal 101 shown in FIG. 1 and the second communication device is the terminal 102 shown in FIG. 1. The terminal 102 may send second request information to the terminal 101, and the second request information is used to request third information of the SL connection between the terminal 101 and the terminal 102.

It should be understood that a path for sending the third information to the second communication device is not specifically limited in this application. For example, third information corresponding to each SL connection may be sent to the second communication device by each first communication device, or third information may be sent by each first communication device to a network device (or another network node/network element) accessed by the second communication device, and the network device (or the another network node/network element) sends the third information to the second communication device.

It should be understood that the foregoing example of the third information is merely an example, and it should not be understood as that a range of the third information is limited to the foregoing listed information. For example, the third information related to the first communication device may further include a QoS requirement for receiving or sending a service by the first communication device, a receiving service feature or a sending service feature, a temperature or a cold or hot state, a transmission resource usage status or a storage resource usage status, a Uu DRX configuration of the first communication device, a resource configuration of the first communication device, an RRC mode (an RRC connected mode, an RRC idle mode, or an RRC inactive mode), and the like. Third information related to the second communication device may further include a QoS requirement for receiving or sending a service by the second communication device, a receiving service feature or a sending service feature, a temperature or a cold or hot state, a transmission resource usage status or a storage resource usage status, a resource configuration of the second communication device, or an RRC mode (an RRC connected mode, an RRC idle mode, or an RRC inactive mode), and the like. The third information related to the SL connection may further include an AS layer configuration, a NAS layer configuration, signal quality, an SL connection/link availability configuration, an SL connection type (unicast/multicast/broadcast), or the like of the SL connection (or SL link).

For example, the second communication device may send fourth information to the first communication device, to indicate that the first communication device does not need to determine the SL DRX configuration, or indicate that the first communication device does not need to send the SL DRX configuration. After receiving the fourth information, the first communication device may no longer determine the SL DRX configuration, or no longer send the SL DRX configuration to the second communication device, to avoid a case in which the first communication device and the second communication device configure different SL DRX configurations for the SL connection.

Specifically, the fourth information may be used to determine that a quantity of SL connections of the second communication device is 1, where 1 is a positive integer. After determining, based on the fourth information, that the quantity of SL connections of the second communication device is 1, the second communication device may determine whether 1 satisfies a second threshold condition. For setting of the second threshold condition, refer to the descriptions of the first threshold condition in the part about the second information. For example, the second threshold condition may be determined based on the first threshold condition. For example, the first threshold condition is that k is less than the first specified value, and the second preset condition is that 1 is not less than the first specified value. When 1 satisfies the second threshold condition, the first communication device may determine that the second communication device determines the SL DRX configuration of the SL connection. In other words, when 1 satisfies the second threshold condition, the first communication device does not need to determine the SL DRX configuration of the SL connection; or when 1 satisfies the second threshold condition, the first communication device does not need to send the SL DRX configuration of the SL connection to the second communication device. In addition, when 1 does not satisfy the second threshold condition, the first communication device may determine the SL DRX configuration of the SL connection, and send the SL DRX configuration to the second communication device.

In addition, the fourth information may alternatively indicate that the quantity of SL connections of the second communication device satisfies the second threshold condition. The fourth information may be sent after the second communication device determines that the quantity of SL connections satisfies the second threshold condition. For the manner of setting the second threshold condition, refer to the foregoing implementation descriptions. The first communication device may determine, based on the fourth information, that the second communication device determines the SL DRX configuration of the SL connection, or the first communication device may determine, based on the fourth information, that the first communication device does not need to determine the SL DRX configuration of the SL connection, or that the first communication device does not need to send the SL DRX configuration of the SL connection to the second communication device.

Alternatively, the fourth information may indicate that the second communication device determines the SL DRX configuration, or indicate that the first communication device does not need to determine the SL DRX configuration of the SL connection, or indicate that the first communication device does not need to send the SL DRX configuration of the SL connection to the second communication device. In this case, the first communication device may determine, based on the fourth information, that the SL DRX configuration of the SL connection does not need to be determined, or that the SL DRX configuration does not need to be sent to the second communication device.

For example, in the architecture shown in FIG. 2, the terminal 102 may separately determine the SL DRX configuration of the SL connection between the terminal 102 and the terminal 101 and the SL DRX configuration of the SL connection between the terminal 102 and the terminal 104 according to the foregoing method.

In this case, the third information may include a portion or all of the following: service information of the SL connection between the terminal 102 and the terminal 101, service information of the SL connection between the terminal 102 and the terminal 104, a resource configuration of the SL connection between the terminal 102 and the terminal 101, a resource configuration of the SL connection between the terminal 102 and the terminal 104, a reference SL DRX configuration of the SL connection between the terminal 102 and the terminal 101, and a reference SL DRX configuration of the SL connection between the terminal 102 and the terminal 104.

The service information of each SL connection, the resource configuration of each SL connection, and the reference SL DRX configuration corresponding to each SL connection may be obtained by the second communication device from the first communication device corresponding to each SL connection. For example, the terminal 102 may separately send the first request information to the terminal 101 and the terminal 104, to obtain the third information.

If the second communication device has a plurality of SL connections, in S203, the SL DRX configuration that corresponds to each SL connection and that is determined by the second communication device may satisfy the following condition 1 and/or condition 2, to coordinate a DRX configuration of each SL connection.

Condition 1: For two or more of a plurality of SL connections, lengths of SL DRX cycles of SL connections are integer multiples of a length of an SL DRX cycle of one SL connection.

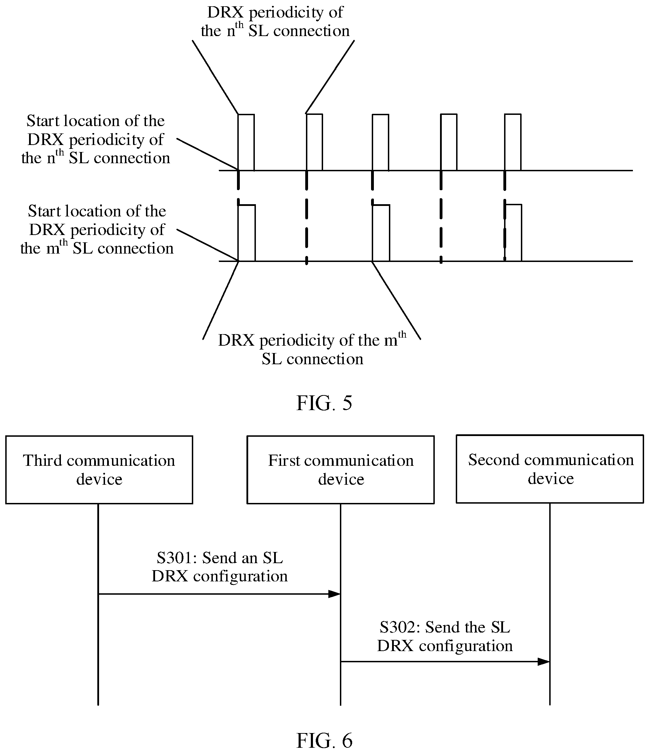

For example, as shown in FIG. 5, in N SL connections of the second communication device, a length of a DRX cycle of the n^{th} SL connection is an integer multiple of a length of a DRX cycle of the m^{th} SL connection. m and n are positive integers, and m and n are less than or equal to N. In addition, the second communication device may configure lengths of SL DRX cycles of all SL connections to be integer multiples of a length of an SL DRX cycle of one SL connection, or configure lengths of SL DRX cycles of only some SL connections to be integer multiples of a length of an SL DRX cycle of one SL connection.

Condition 2: In a plurality of SL connections, start locations of SL DRX cycles corresponding to any two or more SL connections are aligned (in other words, time points of start locations of SL DRX cycles corresponding to any two or more SL connections are the same).

An example of FIG. 5 is still used. In N SL connections of the second communication device, a start location of a DRX cycle of the n^{th} SL connection is aligned with a start location of a DRX cycle of the m^{th} SL connection. m and n are positive integers, and m and n are less than or equal to N. In addition, the second communication device may configure start locations of SL DRX cycles of all SL connections to be aligned, or configure start locations of SL DRX cycles of only some SL connections to be aligned.

It should be understood that the m^{th} SL connection and the n^{th} SL connection may be configured to satisfy both the condition 1 and the condition 2, or satisfy one of the condition 1 or the condition 2. In addition, the foregoing condition 1 and/or condition 2 may also be met by SL connections other than the m^{th} and the n^{th} SL connections. For example, lengths of SL DRX cycles of the k^{th} SL connection and the l^{th} SL connection are integer multiples of a length of an SL DRX cycle of one of the k^{th} SL connection and the l^{th} SL connection, and/or start locations of SL DRX cycles of the k^{th} SL connection and the l^{th} SL connection are aligned, k, 1, and are positive integers, and k, l, and are less than N. In addition, lengths of SL DRX cycles of the k^{th} SL connection, the m^{th} SL connection, and the n^{th} SL connection may be configured to be integer multiples of a length of an SL DRX cycle of one of the k^{th} SL connection, the m^{th} SL connection, and the n^{th} SL connection, and/or start locations of SL DRX cycles of the k^{th} SL connection, the m^{th} SL connection, and the n^{th} SL connection may be configured to be aligned.

For example, after determining an SL DRX configuration corresponding to at least one SL connection, the second communication device may send the SL DRX configuration to a first communication device corresponding to the SL connection, so that the first communication device learns of the SL DRX configuration.

Specifically, the second communication device may send identification information of an SL connection and an SL DRX configuration corresponding to the SL connection to each first communication device, to indicate the SL connection to which the SL DRX configuration is associated. The identification information of the SL connection may include an identifier of the first communication device and/or an identifier of the second communication device corresponding to the SL connection. In addition, the identification information of the SL connection may further include an identifier pair. Alternatively, an identifier of the SL connection may include an SL connection identifier or an SL link identifier of the SL connection.

A manner in which the second communication device sends the SL DRX configuration and the identification information of the SL connection is not specifically limited in this application. The SL DRX configuration and the identification information of the SL connection may be carried in a same piece of information or a same message, or may be separately sent.

In addition, the second communication device may send the SL DRX configuration corresponding to the SL connection to the first communication device (or send an SL DRX configuration corresponding to each SL connection to a first communication device corresponding to each SL connection), and carry the identification information of the SL connection in the SL DRX configuration corresponding to the SL connection.

Optionally, after determining the SL DRX configuration of the SL connection, the second communication device may further send the SL DRX configuration of the SL connection to a network device accessed by the second communication device.

Optionally, when the second communication device serves as a receive end of the SL connection, the second communication device may send the SL DRX configuration of the SL connection, and send the SL connection identifier or a source identifier corresponding to the SL DRX configuration of the SL connection. The SL connection identifier or the source identifier indicates an SL connection or a transmit end to which the SL DRX configuration is applicable. Alternatively, the SL connection identifier or a source identifier corresponding to the SL DRX configuration may be carried in the SL DRX configuration.

Optionally, when the second communication device serves as a transmit end of the SL connection, the second communication device may send the SL DRX configuration of the SL connection, and send the SL connection identifier or a destination identifier corresponding to the SL DRX configuration of the SL connection. The SL connection identifier or the destination identifier indicates an SL connection or a receive end to which the SL DRX configuration is applicable. Alternatively, the SL connection identifier or a destination identifier corresponding to the SL DRX configuration may be carried in the SL DRX configuration.

It should be understood that the foregoing third embodiment may be used in a scenario in which a cast type of each SL connection is unicast, multicast, or broadcast. For example, a cast type of each of a plurality of SL connections of the second communication device is one of unicast, multicast, and broadcast. Specifically, when the SL connection is a multicast or broadcast connection, it may be required that an SL radio resource control connection is established between each first communication device of the SL connection and the second communication device. Therefore, in a multicast or broadcast scenario, the communication method provided in this application may be applied only when the SL RRC connection is established between the first communication device and the second communication device. In addition, when the SL connection is a multicast or broadcast connection, a quantiy of communication devices of the first communication device corresponding to the SL connection and receives SL transmission may be required to be less than or to be less than or equal to a first threshold. Therefore, in a multicast or broadcast scenario, the communication method provided in this application may be applied only when the quantity of communication devices that receives SL transmission from the first communication device is less than or is less than or equal to the first threshold.

In addition, to reduce signaling overheads, in the foregoing third embodiment, the second communication device may send an index of the SL DRX configuration. For example, an index of SL DRX configuration is carried in SCI, and the first communication device determines the SL DRX configuration based on the index.

A fourth embodiment provided in embodiments of this application may be performed by a first communication device, a second communication device, and a third communication device. The third communication device may include a network device, for example, the network device 103 shown in FIG. 1, or a chip in the network device 103.

As shown in FIG. 6, the method may specifically include the following steps.

S301: The third communication device sends an SL DRX configuration to the first communication device. Correspondingly, the first communication device receives the SL DRX configuration from the third communication device.

The SL DRX configuration is used for an SL connection between the first communication device and the second communication device, and is used for SL transmission between the first communication device and the second communication device.

For example, the first communication device and the second communication device may be terminal devices. The third communication device may be a network device such as a base station.

For example, the first communication device may be in a connected mode.

Correspondingly, the first communication device receives the SL DRX configuration from the third communication device.

S302: The first communication device sends the SL DRX configuration to the second communication device.

Correspondingly, the second communication device receives the SL DRX configuration.

According to the method, the third communication device may send the SL DRX configuration of the SL connection to the first communication device. Because the third communication device further sends an identifier of the SL connection to the first communication device, or the SL DRX configuration further carries the identifier of the SL connection, the second communication device may learn, based on the identifier of the SL connection, of the SL connection to which the SL DRX configuration is applicable, to send the SL DRX configuration to the second communication device associated with the SL connection.

For example, the third communication device may further send identification information of the SL connection to the first communication device. A manner in which the third communication device sends the SL DRX configuration and the identification information of the SL connection is not specifically limited in this application. The SL DRX configuration and the identification information of the SL connection may be carried in a same piece of information or a same message (for example, dedicated signaling), or may be separately sent. In addition, the SL DRX configuration sent by the third communication device to the first communication device may include the identification information of the SL connection. For the identification information of the SL connection, refer to descriptions in this application.

For example, in the fourth embodiment, the third communication device may determine the SL DRX configuration of the SL connection based on fifth information from the first communication device. The fifth information may be related to the first communication device, the second communication device, and/or the SL connection between the first communication device and the second communication device.

Optionally, the fifth information is reference information or assistance information for determining SL DRX.

The fifth information may include at least one of service information of the SL connection between the first communication device and the second communication device, service information of another SL connection of the second communication device, a resource configuration of the SL connection, an SL DRX configuration (for example, a configured SL DRX configuration) of another SL connection of the first communication device and/or the second communication device, a resource configuration of another SL connection of the second communication device, a reference SL DRX configuration of the SL connection and/or a reference SL DRX configuration of another SL connection, energy saving requirement information of the first communication device and/or the second communication device, a Uu DRX configuration of the second communication device, energy saving request information of the first communication device and/or the second communication device, SL DRX configuration request information, or vehicle to pedestrian (vehicle to pedestrian, V2P) communication indication information. For the service information of the SL connection, the service information of another SL connection of the second communication device, the resource configuration of the SL connection, the resource configuration of another SL connection of the second communication device, the reference SL DRX configuration of the SL connection and/or the reference SL DRX configuration of another SL connection, the energy saving requirement information of the second communication device, and the Uu DRX configuration of the second communication device, refer to the descriptions in this application. Details are not described herein again.

It should be understood that, the first communication device may serve as a transmit end of the SL connection, and then the second communication device serves as a receive end of the SL connection; and/or the second communication device may serve as a transmit end of the SL connection, and then the first communication device may serve as a receive end of the SL connection. The resource configuration of the SL connection in this application may include a resource configuration for sending an SL service (or referred to as an SL sending resource configuration) and/or a resource configuration for receiving an SL service (or referred to as an SL receiving resource configuration). The resource configuration for sending an SL service is, for example, a resource configuration that is for sending an SL service and that is determined by a transmit terminal device or a base station of a transmit terminal device. The resource configuration for receiving an SL service is, for example, a resource configuration that is for receiving an SL service and that is determined by a receive terminal device or a base station of a receive terminal device.

In addition, the resource configuration of the SL connection in the fifth information may include an available SL resource configuration set of the SL connection and/or a determined resource configuration of the SL connection. The determined resource configuration may be a resource configuration in the available SL resource configuration set.

The resource configuration of the SL connection may be obtained by the first communication device from the first communication device (for example, obtained through pre-configuration), a base station (for example, the third communication device) accessed by the first communication device, or a peer end (for example, the second communication device) of the SL connection. The peer end of the SL connection may obtain the resource configuration of the SL connection from a base station accessed by the peer end. If the first communication device is a transmit device, the resource configuration of the SL connection may include the determined resource configuration for receiving an SL service, and/or the available resource configuration set for receiving an SL service. The available resource configuration set for receiving an SL service may be obtained by the first communication device from the second communication device. If the first communication device is a receive device, the resource configuration of the SL connection may include the determined resource configuration for sending an SL service, and/or the available resource configuration set for sending an SL service. The available resource configuration set for sending an SL service may be obtained by the first communication device from the second communication device.

Optionally, in addition to obtaining the resource configuration of the SL connection from the fifth information from the first communication device, the third communication device may obtain the resource configuration of the SL connection from the third communication device. For example, the available SL resource configuration set that can be obtained by the first communication device may be stored in the third communication device.

The energy saving request information of the first communication device and/or the second communication device may be used by the third communication device to learn that energy saving needs to be performed on the first communication device and/or the second communication device. The SL DRX configuration request information may be used to request the third communication device to configure a resource for the SL connection. The V2P communication indication information may be used to request to perform SL communication such as V2P.

In addition, because the first communication device is in the connected mode, and the resource configuration of the SL connection of the first communication device in the connected mode may be configured by the third communication device, the SL DRX configuration of the SL connection may also be determined based on the resource configuration of the SL connection of the third communication device. Therefore, the fifth information may not include the resource configuration of the SL connection.

The service information of another SL connection of the second communication device, the resource configuration of another SL connection of the second communication device, the reference SL DRX configuration of the SL connection and/or the reference SL DRX configuration of another SL connection, the energy saving requirement information of the second communication device, an energy saving request information of the second communication device, the Uu DRX configuration of the second communication device, the SL DRX configuration request information, and/or the V2P communication indication information may be sent by the second communication device to the first communication device, and sent by the first communication device to the third communication device. Alternatively, the service information of another SL connection of the second communication device, the resource configuration of another SL connection of the second communication device, the reference SL DRX configuration of the SL connection and/or the reference SL DRX configuration of another SL connection, the energy saving requirement information of the second communication device, the energy saving request information of the second communication device, the Uu DRX configuration of the second communication device, the SL DRX configuration request information, and/or the V2P communication indication information may be sent by the second communication device to the third communication device.

The SL DRX configuration request information, the energy saving requirement information of the second communication device, the energy saving request information of the second communication device, and/or the V2P communication indication information may be carried in SL terminal information (sidelink UE info) sent to the third communication device. The foregoing reference SL DRX configuration may be carried in terminal assistance information (UE assistance information) sent to the third communication device.

For example, the third communication device may indicate a granularity of the SL DRX configuration by using the identifier of the SL connection. Specifically, if the identifier of the SL connection includes one or more of an S-TMSI, an IMSI, an SUPI, or a GUTI, or if the identifier of the SL connection includes a logical identifier of the first communication device or a logical identifier of the second communication device, the SL DRX configuration is applicable to all SL connections between the first communication device and the second communication device. If the identifier of the SL connection includes an identifier pair, that is, a source identifier and a destination identifier of the SL connection, the SL DRX is only applicable to a logical SL connection identified by the identifier pair.

It should be understood that the foregoing fourth embodiment may be used in a scenario in which a cast type of the SL connection is unicast, multicast, or broadcast. Specifically, when the SL connection is a multicast or broadcast connection, it may be required that an SL radio resource control connection is established between the first communication device and the second communication device. Therefore, in a multicast or broadcast scenario, the communication method provided in this application may be applied only when the SL RRC connection is established between the first communication device and the second communication device. In addition, when the SL connection is a multicast or broadcast connection, a quantiy of communication devices that correspond to the first communication device and receive SL transmission may be required to be less than or to be less than or equal to a first threshold. Therefore, in a multicast or broadcast scenario, the communication method provided in this application may be applied only when the quantity of communication devices that receives SL transmission from the first communication device is less than or is less than or equal to the first threshold.

In addition, for multicast (or broadcast) communication, the first communication device may send the SL DRX configuration to the second communication device in a multicast (or broadcast) manner. Therefore, when the first communication device performs multicast (or broadcast) communication with a plurality of second communication devices by using SL connections, the first communication device may multicast (or broadcast) an SL DRX configuration, for example, broadcast an RRC message, a MAC CE message, or SCI, to improve configuration efficiency. In addition, to reduce signaling overheads, the first communication device may send an index of the SL DRX configuration to the second communication device. For example, the index of the SL DRX configuration is carried in the SCI, and the second communication device determines the SL DRX configuration based on the index.

In addition, for multicast (or broadcast) communication, the SL DRX configuration of the SL connection between the first communication device and the second communication device may also be a configuration defined in a protocol, provided by the third communication device via system information, or a preset SL DRX configuration. Alternatively, the SL DRX configuration may be selected by the first communication device from SL DRX configurations defined, preset, or pre-configured in a plurality of protocols or from SL DRX configurations provided by the third communication device via system information. For example, the SL DRX configuration may be selected by the first communication device based on first information.

An implementation of a fifth embodiment provided in embodiments of this application may include a first communication device, a second communication device, a third communication device, a fourth communication device, and a fifth communication device. The third communication device and the fourth communication device may include a network device or a chip in a network device, and the fifth communication device may include a terminal or a chip in a terminal. For example, the third communication device may include the network device 103 shown in FIG. 2, the fourth communication device may include the network device 106 shown in FIG. 2, and the fifth communication device may be included.

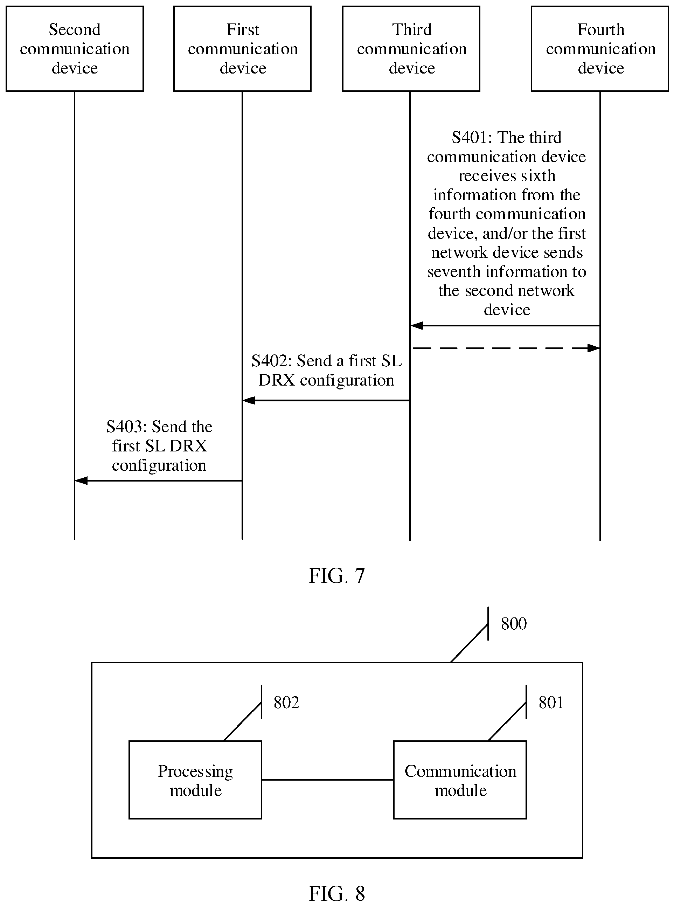

As shown in FIG. 7, the fifth embodiment provided in embodiments of this application may include the following steps.

S401: The third communication device receives sixth information from the fourth communication device, where the sixth information is used by the third communication device to determine a first SL DRX configuration and a second SL DRX configuration; and/or the third communication device sends seventh information to the fourth communication device, where the seventh information is used by the fourth communication device to determine the second SL DRX configuration.

The first SL DRX configuration is used by the second communication device to receive SL transmission from the first communication device, and the first communication device accesses the third communication device. The second SL DRX configuration is used by the second communication device to receive SL transmission from the fifth communication device, and the fifth communication device accesses the fourth communication device.

For example, the first communication device, the second communication device, and the fifth communication device may be terminal devices. The third communication device and the fourth communication device may be network devices such as base stations.

S402: The third communication device sends a first SL DRX configuration to the first communication device.

Correspondingly, the first communication device receives the first SL DRX configuration from the third communication device.

S403: The first communication device sends the first SL DRX configuration to the second communication device.

Correspondingly, the second communication device receives the first SL DRX configuration from the first communication device.

According to the method, the third communication device and the fourth communication device may determine the first SL DRX configuration and the second SL DRX configuration through negotiation, so that DRX configurations of a first SL connection and a second SL connection of the second communication device are coordinated, and SL DRX configurations of the second communication device are optimized.

FIG. 2 is used as an example. If the second communication device is the terminal 102, the first communication device is the terminal 101, and the fifth communication device is the terminal 104, the first SL connection may include an SL connection between the terminal 101 and the terminal 102, and the second SL connection may include a connection between the terminal 102 and the terminal 104. In addition, the third communication device may include the network device 103 accessed by the terminal 101, and the fourth communication device may include the network device 106 accessed by the terminal 104.

For example, in an implementation of S401, the third communication device may send at least one candidate second SL DRX configuration to the fourth communication device, so that the fourth communication device may select the second SL DRX configuration of the second SL connection from the at least one candidate second SL DRX configuration. In this manner, the seventh information includes at least one candidate second SL DRX configuration.

The at least one candidate second SL DRX configuration may be determined by the third communication device based on the first SL DRX configuration. The first SL DRX configuration and any one or more candidate second SL DRX configurations may satisfy the condition 1 and/or the condition 2 shown in FIG. 5. In other words, lengths of DRX cycles indicated by the first SL DRX configuration and any one or more candidate second SL DRX configurations are integer multiples of a length of a DRX cycle indicated by one of the first SL DRX configuration and any one or more candidate second SL DRX configurations; and/or a start location of a DRX cycle indicated by the first SL DRX configuration is aligned with a start location of a DRX cycle indicated by any one or more candidate second SL DRX configurations.

In another implementation of S401, the fourth communication device may send attribute information of the second SL connection to the third communication device. In this case, the sixth information includes the attribute information of the second SL connection. In this manner, the third communication device may determine the first SL DRX configuration and the second SL DRX configuration based on attribute information of the first SL connection and the attribute information of the second SL connection. The attribute information of the first SL connection may include service information of the first SL connection, a resource configuration of the first SL connection, and/or energy saving requirement information of the second communication device. The attribute information of the second SL connection may include service information of the second SL connection, a resource configuration of the second SL connection, and/or energy saving requirement information of the second communication device.

Then, after determining the first SL DRX configuration and the second SL DRX configuration, the third communication device may send the second SL DRX configuration to the fourth communication device. In this case, the seventh information includes the second SL DRX configuration.

In another implementation of S401, after determining the first SL DRX configuration, the third communication device may send the first SL DRX configuration to the fourth communication device. In this case, the seventh information may include the first SL DRX configuration. In this manner, the first SL DRX configuration may be used by the fourth communication device to determine the second SL DRX configuration.

Specifically, the second SL DRX configuration determined by the fourth communication device and the first SL DRX configuration may satisfy the condition 1 and/or the condition 2 shown in FIG. 5. In other words, lengths of DRX cycles indicated by the second SL DRX configuration and the first SL DRX configuration determined by the fourth communication device are integer multiples of a length of a DRX cycle indicated by one of the second SL DRX configuration and the first SL DRX configuration, and/or a start location of a DRX cycle indicated by the second SL DRX configuration is aligned with a start location of a DRX cycle indicated by the first SL DRX configuration.

It should be understood that after S401, the fourth communication device may send the second SL DRX configuration to the fifth communication device after determining the second SL DRX configuration based on the sixth information, and the fifth communication device sends the second SL DRX configuration to the second communication device.

In the foregoing fifth embodiment, the third communication device may further communicate with the second communication device. For example, the third communication device is connected to the second communication device by using a Uu interface. In this case, the third communication device may obtain an identifier of the second communication device from the second communication device, to learn that SL connections of the second communication device include the first SL connection and/or the second SL connection. After obtaining the identifier of the second communication device from the second communication device, the third communication device may perform the step shown in S401. The identifier of the second communication device may include an S-TMSI, an IMSI, an SUPI, a GUTI, a layer 2 identifier, or a layer 1 identifier of the second communication device.

If Uu interface DRX communication is performed between the third communication device and the second communication device, and a DRX configuration of the DRX communication is denoted as a Uu DRX configuration, the third communication device coordinates the first SL DRX configuration, the second SL DRX configuration, and/or the Uu DRX configuration when determining the first SL DRX configuration and/or the second SL DRX configuration. For example, lengths of DRX cycles indicated by the first SL DRX configuration and the Uu DRX configuration determined by the third communication device are integer multiples of a length of a DRX cycle indicated by one of the first SL DRX configuration and the Uu DRX configuration; and/or the start location of the DRX cycle indicated by the first SL DRX configuration is aligned with a start location of a DRX cycle indicated by the Uu DRX configuration. For another example, lengths of DRX cycles indicated by the first SL DRX configuration, the second SL DRX configuration, and a DRX cycle determined by the third communication device are integer multiples of a length of a DRX cycle of one of the first SL DRX configuration, the second SL DRX configuration, and a DRX cycle; and/or the start location of the DRX cycle indicated by the first SL DRX configuration and the start location of the DRX cycle indicated by the second SL DRX configuration are aligned with a start location of a DRX cycle indicated by the Uu DRX configuration.

In addition, the third communication device may further send the Uu DRX configuration and/or attribute information of the Uu DRX configuration to the fourth communication device, so that the fourth communication device coordinates the second SL DRX configuration and the Uu DRX configuration when determining the second SL DRX configuration. The attribute information of the Uu DRX configuration may be used for Uu transmission between the third communication device and the second communication device. For example, the attribute information of the Uu DRX configuration may include service information of a service performed between the third communication device and the second communication device by using the Uu interface, a resource configuration for communication between the third communication device and the second communication device by using the Uu interface, the energy saving requirement information of the second communication device, and/or the like.

For example, lengths of DRX cycles indicated by the second SL DRX configuration and the Uu DRX configuration determined by the fourth communication device are integer multiples of a length of a DRX cycle of one of the second SL DRX configuration and the Uu DRX configuration, and/or the start location of the DRX cycle indicated by the second SL DRX configuration is aligned with the start location of the DRX cycle indicated by the Uu DRX configuration.

It should be understood that the foregoing fifth embodiment may be used in a scenario in which a cast type of the SL connection is unicast, multicast, or broadcast. Specifically, when the SL connection is a multicast or broadcast connection, it may be required that an SL radio resource control connection is established between the first communication device and the second communication device. Therefore, in a multicast or broadcast scenario, the communication method provided in this application may be applied only when the SL RRC connection is established between the first communication device and the second communication device. In addition, when the SL connection is a multicast or broadcast connection, a quantiy of communication devices that correspond to the first communication device and receive SL transmission may be required to be less than or to be less than or equal to a first threshold. Therefore, in a multicast or broadcast scenario, the communication method provided in this application may be applied only when the quantity of communication devices that receives SL transmission from the first communication device is less than or is less than or equal to the first threshold.

In addition, for multicast (or broadcast) communication, the first communication device may send the SL DRX configuration to the second communication device in a multicast (or broadcast) manner. Therefore, when the first communication device performs multicast (or broadcast) communication with a plurality of second communication devices by using SL connections, the first communication device may multicast (or broadcast) an SL DRX configuration, for example, broadcast an RRC message, a MAC CE message, or SCI, to improve configuration efficiency. In addition, to reduce signaling overheads, the first communication device may send an index of the SL DRX configuration to the second communication device. For example, the index of the SL DRX configuration is carried in the SCI, and the second communication device determines the SL DRX configuration based on the index.

In addition, for multicast (or broadcast) communication, the SL DRX configuration of the SL connection between the first communication device and the second communication device may also be a configuration defined in a protocol or a preset SL DRX configuration. Alternatively, the SL DRX configuration may be selected by the first communication device from SL DRX configurations defined (or preset) in a plurality of protocols. For example, the SL DRX configuration may be selected by the first communication device based on first information.

Based on a same inventive concept as the method embodiments, an embodiment of this application further provides a communication apparatus. The communication apparatus may have functions, steps, or operations of the network device (for example, the third communication device and/or the fourth communication device) or the terminal (for example, the first communication device, the second communication device, and/or the fifth communication device) in the method embodiments. For example, functional modules corresponding to the functions, the steps, or the operations in the foregoing methods may be disposed in the communication apparatus, to support the communication apparatus in performing the foregoing methods. The function may be implemented by hardware, or may be implemented by software or hardware executing corresponding software. The hardware or the software includes one or more modules corresponding to the function. For example, the communication apparatus may be a chip or a communication chip having a communication module, or may be implemented by a chip or a communication chip having a communication module.

In a possible implementation, the communication apparatus 800 shown in FIG. 8 may serve as the first communication device and/or the second communication device in the method embodiments, and perform the steps performed by the first communication device and/or the second communication device in the method embodiments. As shown in FIG. 8, the communication apparatus 800 may include a communication module 801 and a processing module 802. The communication module 801 and the processing module 802 are coupled to each other. The communication module 801 may be configured to support the communication apparatus 800 in performing communication. The communication module 801 may have a wireless communication function, for example, can perform wireless communication with another communication apparatus through a radio air interface. The processing module 802 may be configured to support the communication apparatus 800 in performing a processing action in the method embodiments, including but not limited to: generating information and a message that are sent by the communication module 801, and/or demodulating and decoding a signal received by the communication module 801.

The communication module 801 may be specifically configured to perform an action of sending and/or receiving by the first communication device and/or the second communication device in the communication method shown in the first embodiment, the second embodiment, the third embodiment, and/or the fourth embodiment of this application. The first communication device is used as an example. The communication module 801 may be configured to perform an action of sending information, a message, or signaling by the first communication device to the second communication device, or an action of receiving information, a message, or signaling from the second communication device or the network device.

The processing module 802 may be specifically configured to perform processing actions of the first communication device and/or the second communication device in the communication method shown in the first embodiment, the second embodiment, the third embodiment, and/or the fourth embodiment, for example, configured to control the communication module 801 to receive and/or send information, a message, or signaling, and perform operations such as information processing.

When implementing the functions performed by the first communication device in the first embodiment provided in embodiments of this application, the communication module 801 may be configured to: receive first information, and send an SL DRX configuration to the second communication device. The first information is used to determine the SL DRX configuration. The SL DRX configuration is used for an SL connection between the first communication device and the second communication device.

For example, the first information is related to the first communication device, the second communication device, and/or an SL connection between the first communication device and the second communication device.

In a possible example, the communication module 801 may be further configured to receive at least one candidate SL DRX configuration from the network device, the second communication device, or another communication device, and the processing module 802 may determine an SL DRX configuration from the at least one candidate SL DRX configuration based on the first information, thereby improving SL DRX configuration efficiency. In addition, the at least one candidate SL DRX configuration may alternatively be defined in a protocol, or may be determined in a pre-configuration manner.

The communication module 801 may further receive second information from the second communication device. The second information may be used to determine that the SL DRX configuration of the SL connection is determined by the first communication device. Specifically, the second information may be used to determine that the quantity of SL connections of the second communication device is k, where k is a positive integer; or the second information indicates that the quantity of SL connections of the second communication device satisfies a first threshold condition; or the second information indicates the first communication device to send the SL DRX configuration.

The communication module 801 may further receive first request information from the second communication device, and may be configured to send assistance information to the second communication device. The first request information is used to request to obtain the assistance information. The assistance information includes at least one of the following information: service information of the SL connection, a resource configuration of the SL connection, or a reference SL DRX configuration of the SL connection.

When sending the SL DRX configuration to the second communication device, the communication module 801 may send the SL DRX configuration in a unicast, broadcast, or multicast manner.

In addition, the communication module 801 may send an index of the SL DRX configuration to the second communication device, so that the second communication device determines the SL DRX configuration based on the index, to reduce signaling overheads.

In a possible example, the communication module 801 may further send identification information of the SL connection to the second communication device. The identification information of the SL connection may be carried in the SL DRX configuration or may be independent of the SL DRX configuration.

When implementing the method performed by the second communication device in the first embodiment of this application, the communication module 801 may send first information to the first communication apparatus. The first information is used to determine an SL DRX configuration. The SL DRX configuration is used for an SL connection between the first communication device and the second communication device. The communication module 801 may further receive the SL DRX configuration from the first communication device.

For example, the first information may be related to the first communication device, the second communication device, and/or the SL connection between the first communication device and the second communication device.

For example, the communication module 801 may further send second information to the first communication device. The second information may be used to determine that the quantity of SL connections of the second communication device is k, where k is a positive integer; or the second information indicates that the quantity of SL connections of the second communication device satisfies a first threshold condition; or the second information indicates the first communication device to send the SL DRX configuration.

For example, the communication module 801 may further send first request information to the first communication device, and receive assistance information of the SL connection from the first communication device. The first request information is used to request to obtain the assistance information. The assistance information includes at least one of the following information: service information of the SL connection, a resource configuration of the SL connection, or a reference SL DRX configuration of the SL connection.

In addition, if the second communication device has a plurality of SL connections, the communication module 801 may further send the assistance information of the SL connection to a communication device corresponding to an SL connection other than the SL connection. The assistance information of the SL connection may be used by another communication device to determine an SL DRX configuration.

The communication module 801 may further receive an index of the SL DRX configuration from the first communication device, and the processing module 802 may determine the SL DRX configuration based on the index, to reduce signaling overheads.

In a possible example, the communication module 801 may further receive identification information of the SL connection from the first communication device. The identification information of the SL connection may be carried in the SL DRX configuration or may be independent of the SL DRX configuration.

In addition, when implementing the method performed by the second communication device in the third embodiment of this application, the communication module 801 may receive third information, and send the SL DRX configuration corresponding to the SL connection to the first communication device. The third information may be used to determine the SL DRX configuration.

For example, the third information is related to the first communication device and/or the SL connection between the first communication device and the second communication device. The processing module 802 may determine, based on the third information, the SL DRX configuration corresponding to the SL connection, to improve energy saving effect.

The communication module 801 may further send second request information to the first communication device to request to obtain the third information. Alternatively, the third information may be sent by the first communication device according to a protocol agreement; or the network device indicates the first communication device to send the third information.

For example, the processing module 802 may be further configured to determine that a quantity of SL connections of the second communication device is N, where N is a positive integer and N is greater than 1, and each SL connection is used by one first communication device to perform SL transmission with the second communication device.

In this example, the communication module 801 may further send fourth information to the first communication device, to indicate that the first communication device does not need to determine the SL DRX configuration, or indicate that the SL DRX configuration does not need to be sent to the second communication device.

In a possible example, in the N SL connections, a length of a DRX cycle determined by the processing module 802 for an n^{th} SL connection may be an integer multiple of a length of a DRX cycle of the second communication device for an m^{th} SL connection. m and n are positive integers, and m and n are less than or equal to N. This further improves stability of SL transmission.

In another possible example, in the N SL connections, a start location of a DRX cycle determined by the processing module 802 for an n^{th} SL connection may be aligned with a start location of a DRX cycle of the second communication device for an m^{th} SL connection. m and n are positive integers, and m and n are less than or equal to N. This further improves stability of SL transmission.

The communication module 801 may further send an identifier of an SL connection to the first communication device, to indicate an SL connection to which SL DRX is applicable. Specifically, the communication module 801 may send identification information of the SL connection and the SL DRX configuration corresponding to the SL connection to the first communication device (or when the quantity of SL connections is N, send identification information of each SL connection to the first communication device corresponding to each SL connection). Alternatively, the communication module 801 may send the SL DRX configuration corresponding to the SL connection to the first communication device (or when the quantity of SL connections is N, send an SL DRX configuration corresponding to each SL connection to the first communication device corresponding to each SL connection), where the SL DRX configuration includes identification information of the SL connection.

When the method performed by the first communication device in the third embodiment of this application is implemented, the communication module 801 may be configured to send third information to the second communication device. The third information is used by the second communication device to determine an SL DRX configuration of an SL connection between the first communication device and the second communication device. The communication module 801 may be further configured to receive the SL DRX configuration from the second communication device.

For example, the third information is related to the SL connection between the first communication device and the second communication device.

The communication module 801 may send the third information in response to second request information from the second communication device. The second request information is used to request the third information.

The communication module 801 may further receive the identification information of the SL connection from the second communication device. For example, the communication module 801 may receive the identification information of the SL connection and the SL DRX configuration corresponding to the SL connection from the second communication device; or the communication module 801 may receive the SL DRX configuration from the second communication device, where the SL DRX configuration includes the identification information of the SL connection.

In this example, the communication module 801 may further receive fourth information from the second communication device, to determine that the first communication device does not need to determine the SL DRX configuration, or determine that the SL DRX configuration does not need to be sent to the second communication device. In this case, the first communication device no longer determines the SL DRX configuration corresponding to the second communication device.

When implementing the method performed by the first communication device in the fourth embodiment of this application, the communication module 801 may be configured to receive an SL DRX configuration from the network device. The SL DRX configuration is used for an SL connection between the first communication device and the second communication device. The SL DRX configuration is used for SL transmission between the first communication device and the second communication device. The SL connection is an SL connection between the first communication device and the second communication device. The communication module 801 may be further configured to send the SL DRX configuration to the second communication device.

In a possible example, the communication module 801 may further send fifth information to the network device, and the fifth information is used by the network device to determine the SL DRX configuration. The fifth information may be related to the first communication device, the second communication device, and/or the SL connection between the first communication device and the second communication device.

The SL DRX configuration may include identification information of the SL connection, or the communication module 801 may further receive identification information of the SL connection from the network device.

When implementing the method performed by the second communication device in the fourth embodiment of this application, the communication module 801 may be configured to receive an SL DRX configuration from the first communication device.

When implementing the method performed by the first communication device in the fifth embodiment of this application, the communication module 801 may be configured to receive a first SL DRX configuration from the third communication device. The first SL DRX configuration is used by the second communication device to receive SL transmission from the first communication device, and the first communication device accesses the third communication device. The first SL DRX configuration and a second SL DRX configuration are determined by the third communication device and a fourth communication device through negotiation. The second SL DRX configuration is used by the second communication device to receive SL transmission from a fifth communication device, and the fifth communication device accesses the fourth communication device.

When implementing the method performed by the first communication device in the fifth embodiment of this application, the communication module 801 may be configured to receive a first SL DRX configuration from the first communication device.

For example, the communication module 801 may be further configured to send an identifier of the second communication device to the third communication device.

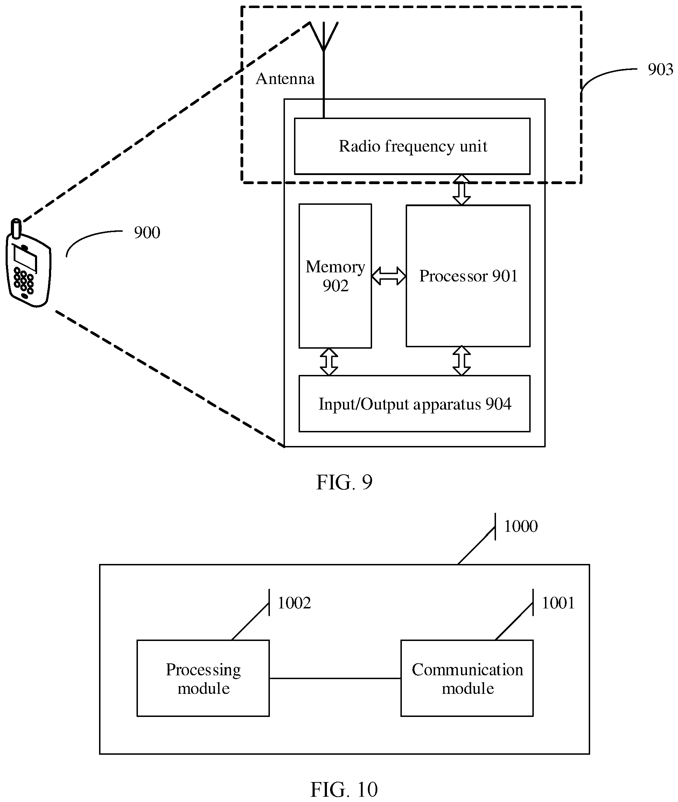

In another possible implementation, the communication apparatus provided in this embodiment of this application may alternatively include a hardware component, for example, a processor, a memory, or a transceiver. For ease of understanding and illustration, in FIG. 9, a mobile phone is used as an example to describe a possible structure of the first communication device and/or the second communication device. As shown in FIG. 9, a communication device 900 may include a processor 901, a memory 902, and a transceiver 903.

The processor 901 may be configured to: process a communication protocol and communication data, control the first communication device and/or the second communication device, execute a software program, process data of the software program, and the like. The memory 902 may be configured to store a program and data, and the processor 901 may execute, based on the program, the method performed by the first communication device and/or the second communication device in embodiments of this application.

The transceiver 903 may include a radio frequency unit and an antenna. The radio frequency unit may be configured to: perform conversion between a baseband signal and a radio frequency signal, and process the radio frequency signal. The antenna may be configured to send and receive a radio frequency signal in a form of an electromagnetic wave. In addition, only the radio frequency unit may be considered as the transceiver 903. In this case, the communication apparatus 900 may include the processor 901, the memory 902, the transceiver 903, and the antenna.

In addition, the communication apparatus 900 may further include an input/output apparatus 904, for example, a touchscreen, a display screen, a keyboard, or another component that may be configured to receive data input by a user and output data to the user. It should be noted that some types of communication apparatuses may have no input/output apparatus.

Based on the structure shown in FIG. 9, when the communication apparatus 900 needs to send data, the processor 901 may perform baseband processing on the to-be-sent data and output a baseband signal to the radio frequency unit, and the radio frequency unit performs radio frequency processing on the baseband signal and sends a radio frequency signal in an electromagnetic wave form through the antenna. When data is sent to the communication apparatus 900, the radio frequency unit receives a radio frequency signal through the antenna, converts the radio frequency signal into a baseband signal, and outputs the baseband signal to the processor 901. The processor 901 converts the baseband signal into data, and processes the data.

When implementing the functions performed by the first communication device in the first embodiment provided in embodiments of this application, the transceiver 903 may be configured to: receive first information, and send an SL DRX configuration to the second communication device. The first information is used to determine the SL DRX configuration. The SL DRX configuration is used for an SL connection between the first communication device and a second communication device.

For example, the first information is related to the first communication device, the second communication device, and/or an SL connection between the first communication device and the second communication device.

In a possible example, the transceiver 903 may be further configured to receive at least one candidate SL DRX configuration from the network device, the second communication device, or another communication device, and the processor 901 may determine an SL DRX configuration from the at least one candidate SL DRX configuration based on the first information, thereby improving SL DRX configuration efficiency. In addition, the at least one candidate SL DRX configuration may alternatively be defined in a protocol, or may be determined in a pre-configuration manner.

The transceiver 903 may further receive second information from the second communication device. The second information may be used to determine that the SL DRX configuration of the SL connection is determined by the first communication device. Specifically, the second information may be used to determine that the quantity of SL connections of the second communication device is k, where k is a positive integer; or the second information indicates that the quantity of SL connections of the second communication device satisfies a first threshold condition; or the second information indicates the first communication device to send the SL DRX configuration.

The transceiver 903 may further receive first request information from the second communication device, and may be configured to send assistance information to the second communication device. The first request information is used to request to obtain the assistance information. The assistance information includes at least one of the following information: service information of the SL connection, a resource configuration of the SL connection, or a reference SL DRX configuration of the SL connection.

When sending the SL DRX configuration to the second communication device, the transceiver 903 may send the SL DRX configuration in a unicast, broadcast, or multicast manner.

In addition, the transceiver 903 may send an index of the SL DRX configuration to the second communication device, so that the second communication device determines the SL DRX configuration based on the index, to reduce signaling overheads.

In a possible example, the transceiver 903 may further send identification information of the SL connection to the second communication device. The identification information of the SL connection may be carried in the SL DRX configuration or may be independent of the SL DRX configuration.

When implementing the method performed by the second communication device in the first embodiment of this application, the transceiver 903 may send first information to the first communication apparatus. The first information is used to determine an SL DRX configuration. The SL DRX configuration is used for an SL connection between the first communication device and the second communication device. The transceiver 903 may further receive the SL DRX configuration from the first communication device.

For example, the first information may be related to the first communication device, the second communication device, and/or the SL connection between the first communication device and the second communication device.

For example, the transceiver 903 may further send second information to the first communication device. The second information may be used to determine that the quantity of SL connections of the second communication device is k, where k is a positive integer; or the second information indicates that the quantity of SL connections of the second communication device satisfies a first threshold condition; or the second information indicates the first communication device to send the SL DRX configuration.

For example, the transceiver 903 may further send first request information to the first communication device, and receive assistance information of the SL connection from the first communication device. The first request information is used to request to obtain the assistance information. The assistance information includes at least one of the following information: service information of the SL connection, a resource configuration of the SL connection, or a reference SL DRX configuration of the SL connection.

In addition, if the second communication device has a plurality of SL connections, the transceiver 903 may further send the assistance information of the SL connection to a communication device corresponding to an SL connection other than the SL connection. The assistance information of the SL connection may be used by another communication device to determine an SL DRX configuration.

The transceiver 903 may further receive an index of the SL DRX configuration from the first communication device, and the processor 901 may determine the SL DRX configuration based on the index, to reduce signaling overheads.

In a possible example, the transceiver 903 may further receive identification information of the SL connection from the first communication device. The identification information of the SL connection may be carried in the SL DRX configuration or may be independent of the SL DRX configuration.

In addition, when implementing the method performed by the second communication device in the third embodiment of this application, the transceiver 903 may receive third information, and send the SL DRX configuration corresponding to the SL connection to the first communication device. The third information may be used to determine the SL DRX configuration.

For example, the third information is related to the SL connection between the first communication device and the second communication device. The processor 901 may determine, based on the third information, the SL DRX configuration corresponding to the SL connection, to improve energy saving effect.

The transceiver 903 may further send second request information to the first communication device to request to obtain the third information. Alternatively, the third information may be sent by the first communication device according to a protocol agreement; or the network device indicates the first communication device to send the third information.

For example, the processor 901 may be further configured to determine that a quantity of SL connections of the second communication device is N, where N is a positive integer and N is greater than 1, and each SL connection is used by one first communication device to perform SL transmission with the second communication device.

In this example, the transceiver 903 may further send fourth information to the first communication device, to indicate that the first communication device does not need to determine the SL DRX configuration, or indicate that the SL DRX configuration does not need to be sent to the second communication device.

In a possible example, in the N SL connections, a length of a DRX cycle determined by the processor 901 for an n^{th} SL connection may be an integer multiple of a length of a DRX cycle of the second communication device for an m^{th} SL connection. m and n are positive integers, and m and n are less than or equal to N. This further improves stability of SL transmission.

In another possible example, in the N SL connections, a start location of a DRX cycle determined by the processor 901 for an n^{th} SL connection may be aligned with a start location of a DRX cycle of the second communication device for an m^{th} SL connection. m and n are positive integers, and m and n are less than or equal to N. This further improves stability of SL transmission.

The transceiver 903 may further send an identifier of an SL connection to the first communication device, to indicate an SL connection to which SL DRX is applicable. Specifically, the transceiver 903 may send the identification information of the SL connection and the SL DRX configuration corresponding to the SL connection to the first communication device (or when the quantity of SL connections is N, send the identification information of the SL connection and the SL DRX configuration corresponding to each SL connection to the first communication device). Alternatively, the transceiver 903 may send the SL DRX configuration corresponding to the SL connection to the first communication device (or when the quantity of SL connections is N, send an SL DRX configuration corresponding to each SL connection to the first communication device corresponding to each SL connection), where the SL DRX configuration includes identification information of the SL connection.

When the method performed by the first communication device in the third embodiment of this application is implemented, the transceiver 903 may be configured to send third information to the second communication device. The third information is used by the second communication device to determine an SL DRX configuration of an SL connection between the first communication device and the second communication device. The transceiver 903 may be further configured to receive the SL DRX configuration from the second communication device.

For example, the third information is related to the SL connection between the first communication device and the second communication device.

The transceiver 903 may send the third information in response to second request information from the second communication device. The second request information is used to request the third information.

The transceiver 903 may further receive the identification information of the SL connection from the second communication device. For example, the transceiver 903 may receive the identification information of the SL connection and the SL DRX configuration corresponding to the SL connection from the second communication device; or the transceiver 903 may receive the SL DRX configuration from the second communication device, where the SL DRX configuration includes the identification information of the SL connection.

In this example, the transceiver 903 may further receive fourth information from the second communication device, to determine that the first communication device does not need to determine the SL DRX configuration, or determine that the SL DRX configuration does not need to be sent to the second communication device. In this case, the first communication device no longer determines the SL DRX configuration corresponding to the second communication device.

When implementing the method performed by the first communication device in the fourth embodiment of this application, the transceiver 903 may be configured to receive an SL DRX configuration from the network device. The SL DRX configuration is used for an SL connection between the first communication device and the second communication device. The SL DRX configuration is used for SL transmission between the first communication device and the second communication device. The SL connection is an SL connection between the first communication device and the second communication device. The transceiver 903 may be further configured to send the SL DRX configuration to the second communication device.

In a possible example, the transceiver 903 may further send fifth information to the network device, and the fifth information is used by the network device to determine the SL DRX configuration. The fifth information may be related to the first communication device, the second communication device, and/or the SL connection between the first communication device and the second communication device.

The SL DRX configuration may include identification information of the SL connection, or the transceiver 903 may further receive identification information of the SL connection from the network device.

When implementing the method performed by the second communication device in the fourth embodiment of this application, the transceiver 903 may be configured to receive an SL DRX configuration from the first communication device.

When implementing the method performed by the first communication device in the fifth embodiment of this application, the transceiver 903 may be configured to receive a first SL DRX configuration from a third communication device. The first SL DRX configuration is used by the second communication device to receive SL transmission from the first communication device, and the first communication device accesses the third communication device. The first SL DRX configuration and a second SL DRX configuration are determined by the third communication device and a fourth communication device through negotiation. The second SL DRX configuration is used by the second communication device to receive SL transmission from a fifth communication device, and the fifth communication device accesses the fourth communication device.

When implementing the method performed by the first communication device in the fifth embodiment of this application, the transceiver 903 may be configured to receive a first SL DRX configuration from the first communication device.

For example, the transceiver 903 may be further configured to send an identifier of the second communication device to the third communication device.

In addition, based on an actual use requirement, the communication apparatus provided in this embodiment of this application may include a processor, and the processor invokes an external transceiver and/or memory to implement the foregoing functions, steps, or operations. The communication apparatus may alternatively include a memory, and the processor invokes and executes a program stored in the memory, to implement the foregoing functions, steps, or operations. Alternatively, the communication apparatus may include a processor, namely, a transceiver. The processor invokes and executes a program stored in an external memory, to implement the foregoing functions, steps, or operations. Alternatively, the communication apparatus may include a processor, a memory, and a transceiver.

In a possible implementation, a communication apparatus 1000 shown in FIG. 10 may serve as the network device, the third communication device, and/or the fourth communication device in the method embodiments, and perform the steps performed by the network device, the third communication device, and/or the fourth communication device in the method embodiments. As shown in FIG. 10, the communication apparatus 1000 may include a communication module 1001 and a processing module 1002. The communication module 1001 and the processing module 1002 are coupled to each other. The communication module 1001 may be configured to support the communication apparatus 1000 in performing communication. The communication module 1001 may have a wireless communication function, for example, can perform wireless communication with another communication apparatus through a radio air interface. The processing module 1002 may be configured to support the communication apparatus 1000 in performing a processing action in the method embodiments, including but not limited to: generating information and a message that are sent by the communication module 1001, and/or demodulating and decoding a signal received by the communication module 1001.

The communication module 1001 may be specifically configured to perform actions of the network device, the third communication device, and/or the fourth communication device in the communication method shown in the fourth embodiment and/or the fifth embodiment. The network device is used as an example, the communication module 1001 may be configured to perform an action of sending information, a message, or signaling by the network device to the first communication device, or an action of receiving information, a message, or signaling from the first communication device or the network device.

The processing module 1002 may be specifically configured to perform processing actions of the network device, the third communication device, and/or the fourth communication device in the communication method shown in the fourth embodiment and/or the fifth embodiment, for example, configured to control the communication module 1001 to receive and/or send information, a message, or signaling, and perform operations such as information processing.

When implementing the functions performed by the network device in the fourth embodiment provided in embodiments of this application, the processing module 1002 may determine an SL DRX configuration. The SL DRX configuration is used for an SL connection between a first communication device and a second communication device. The SL DRX configuration is used for SL transmission between the first communication device and the second communication device. The SL connection is an SL connection between the first communication device and the second communication device. The communication module 1001 may further send the SL DRX configuration to the first communication device. Alternatively, the communication module 1001 may send the SL DRX configuration to the first communication device, where the SL DRX configuration includes identification information of the SL connection.

The SL DRX configuration may include the identification information of the SL connection, or the communication module 1001 may send the identification information of the SL connection to the first communication device.

In a possible example, the communication module 1001 may further receive fifth information from the first communication device. The fifth information is used by the network device to determine the SL DRX configuration. For example, the fifth information includes one or more of service information of the SL connection, resource configuration of the SL connection, a reference SL DRX configuration of the SL connection and/or a reference SL DRX configuration of another SL connection, energy saving requirement information of the second communication device, energy saving request information of the second communication device, SL DRX configuration request information, or V2P communication indication information.

When implementing the functions performed by the third communication device in the fifth embodiment provided in embodiments of this application, the communication module 1001 may receive sixth information from the fourth communication device. The sixth information is used by the third communication device to determine a first SL DRX configuration and a second SL DRX configuration. The communication module 1001 may send seventh information to the fourth communication device, where the seventh information may be used by the fourth communication device to determine the second SL DRX configuration. The first SL DRX configuration is used by the second communication device to receive SL transmission from the first communication device, and the first communication device accesses the third communication device. The second SL DRX configuration is used by the second communication device to receive SL transmission from a fifth communication device, and the fifth communication device accesses the fourth communication device. The communication module 1001 may further send the first SL DRX configuration to the first communication device.

In a possible example, the communication module 1001 may send at least one candidate second SL DRX configuration to the fourth communication device, so that the fourth communication device may determine the second SL DRX configuration based on the at least one candidate second SL DRX configuration. In other words, the seventh information in this example includes at least one candidate second SL DRX configuration.

In another possible example, the communication module 1001 may receive attribute information of a second SL connection from the fourth communication device, where the second SL connection is an SL connection between the second communication device and a fifth communication device. The processing module 1002 may determine the first SL DRX configuration and the second SL DRX configuration based on attribute information of the first SL connection and the attribute information of the second SL connection. Then, the communication module 1001 may send the second SL DRX configuration to the fourth communication device. The first SL connection is an SL connection between the second communication device and the first communication device. In this example, the sixth information includes the attribute information of the second SL connection, and the seventh information includes the second SL DRX configuration.

In another possible example, the communication module 1001 may send the first SL DRX configuration to the fourth communication device, so that the fourth communication device determines the second SL DRX configuration based on the first SL DRX configuration, for example, coordinates the first SL DRX configuration and the second SL DRX configuration. In this example, the seventh information includes the first SL DRX configuration.

In another possible example, the communication module 1001 may receive an identifier of the second communication device from the second communication device. In this example, the third communication device may be further connected to the second communication device by using a Uu interface. Therefore, the communication module 1001 may receive the identifier of the second communication device by using the Uu interface.

In this example, if the second communication device uses a Uu DRX configuration to perform Uu interface transmission, the third communication device may coordinate the Uu DRX configuration, the first SL DRX configuration, and the second SL DRX configuration with the fourth communication device. For example, the communication module 1001 may send the Uu DRX configuration and/or attribute information of the Uu DRX configuration to the fourth communication device. The attribute information of the Uu DRX configuration, for example, information about a communication service of the Uu interface between the third communication device and the second communication device, a resource configuration of the Uu interface, or energy saving requirement information of the second communication device, may be used by the fourth communication device to determine the second SL DRX configuration based on the seventh information and the Uu DRX configuration and/or the attribute information of the Uu DRX configuration. In addition, the processing module 1002 may determine the seventh information based on the Uu DRX configuration and/or the attribute information of the Uu DRX configuration. For example, the processing module 1002 determines the at least one candidate second SL DRX configuration based on the Uu DRX configuration and/or the attribute information of the Uu DRX configuration, or the processing module 1002 determines the first SL DRX configuration and/or the second SL DRX configuration based on the Uu DRX configuration and/or the attribute information of the Uu DRX configuration.

When implementing the functions performed by the fourth communication device in the fifth embodiment provided in embodiments of this application, the communication module 1001 may send sixth information to the third communication device. The sixth information is used by the third communication device to determine the first SL DRX configuration and the second SL DRX configuration. The communication module 1001 may receive seventh information from the fourth communication device, where the seventh information may be used by the fourth communication device to determine the second SL DRX configuration. The first SL DRX configuration is used by the second communication device to receive SL transmission from the first communication device, and the first communication device accesses the third communication device. The second SL DRX configuration is used by the second communication device to receive SL transmission from a fifth communication device, and the fifth communication device accesses the fourth communication device. The communication module 1001 may further send the second SL DRX configuration to the fifth communication device.

In a possible example, the communication module 1001 may receive the at least one candidate second SL DRX configuration from the third communication device, to determine the second SL DRX configuration based on the at least one candidate second SL DRX configuration.

In another possible example, the communication module 1001 may send the attribute information of the second SL connection to the third communication device, where the second SL connection is an SL connection between the second communication device and the fifth communication device. In addition, the communication module 1001 may receive the second SL DRX configuration from the third communication device.

In another possible example, the communication module 1001 may further receive a first SL DRX configuration from the third communication device, to determine a second SL DRX configuration.

In another possible example, the communication module 1001 may further receive a Uu DRX configuration and/or attribute information of a Uu DRX configuration from the third communication device, where the Uu DRX configuration is used for Uu transmission between the third communication device and the second communication device. The attribute information of the Uu DRX configuration is, for example, information about a communication service of a Uu interface between the third communication device and the second communication device, a resource configuration of the Uu interface, or energy saving requirement information of the second communication device. The processing module 1002 may further determine the second SL DRX configuration based on the Uu DRX configuration and/or the attribute information of the Uu DRX configuration. For example, the processing module 1002 may determine the second SL DRX configuration based on the seventh information and the Uu DRX configuration and/or the attribute information of the Uu DRX configuration.

In another possible implementation, the communication apparatus provided in this embodiment of this application may alternatively include a hardware component, for example, a processor, a memory, or a transceiver.

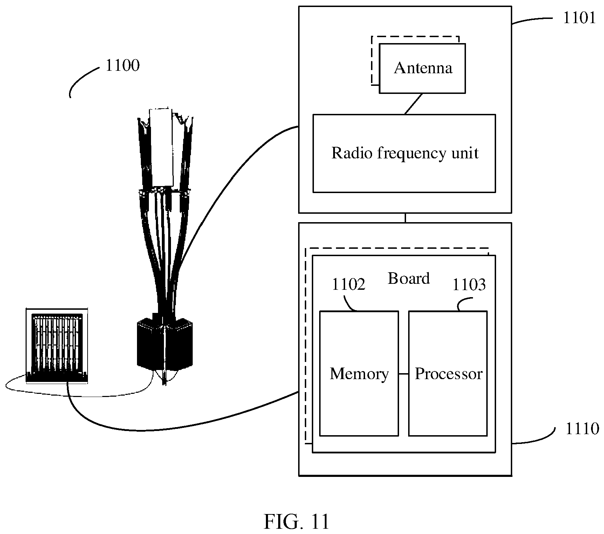

For ease of understanding, in FIG. 11, a base station is used as an example to describe a structure of the communication apparatus. As shown in FIG. 11, the communication apparatus 1100 may include a transceiver 1101, a memory 1102, and a processor 1103, to implement functions of the network device, the third communication device, and/or the fourth communication device provided in embodiments of this application. The transceiver 1101 may be used by the communication apparatus for communication. The memory 1102 is coupled to the processor 1103, and is configured to store a program and data that are necessary for implementing functions of the communication apparatus 1100. The processor 1103 is configured to support the communication apparatus 1100 to perform functions corresponding to the functions of the network device, the third communication device, and/or the fourth communication device in the foregoing methods. The functions may be implemented by invoking a program stored in the memory 1102.

Specifically, the transceiver 1101 may be a wireless transceiver, and may be configured to support the communication apparatus 1100 in receiving and sending signaling and/or data through a radio air interface. The transceiver 1101 may also be referred to as a transceiver unit or a communication unit. The transceiver 1101 may include a radio frequency unit and one or more antennas, where the radio frequency unit, for example, a remote radio unit (remote radio unit, RRU), may be specifically configured to perform transmission of a radio frequency signal and conversion between a radio frequency signal and a baseband signal, and the one or more antennas may be specifically configured to radiate and receive a radio frequency signal. Optionally, the transceiver 1101 may include only the radio frequency unit. In this case, the communication apparatus 1100 may include the transceiver 1101, the memory 1102, the processor 1103, and the antenna.

The memory 1102 and the processor 1103 may be integrated or may be independent of each other. As shown in FIG. 11, the memory 1102 and the processor 1103 may be integrated into a control unit 1110 of the communication apparatus 1100. For example, the control unit 1110 may include a baseband unit (baseband unit, BBU) of an LTE base station, and the baseband unit may also be referred to as a digital unit (digital unit, DU), or the control unit 1110 may include a distributed unit (distributed unit, DU) and/or a centralized unit (centralized unit, CU) in a base station in 5G or a future radio access technology. The control unit 1110 may include one or more boards. A plurality of boards may jointly support a radio access network of a single access standard (for example, an LTE network), or a plurality of boards may separately support radio access networks of different access standards (for example, an LTE network, a 5G network, or another network). The memory 1102 and the processor 1103 may serve one or more boards. In other words, a memory 1102 and a processor 1103 may be independently disposed on each board, or a plurality of boards may share a same memory 1102 and a same processor 1103. In addition, a necessary circuit may be disposed on each board. For example, the circuit may be configured to implement coupling between the memory 1102 and the processor 1103. The transceiver 1101, the processor 1103, and the memory 1102 may be connected by using a bus (bus) structure and/or another connection medium.

Based on the structure shown in FIG. 11, when the communication apparatus 1100 needs to send data, the processor 1103 may perform baseband processing on the to-be-sent data and output a baseband signal to the radio frequency unit, and the radio frequency unit performs radio frequency processing on the baseband signal and sends a radio frequency signal in an electromagnetic wave form through the antenna. When data is sent to the communication apparatus 1100, the radio frequency unit receives a radio frequency signal through the antenna, converts the radio frequency signal into a baseband signal, and outputs the baseband signal to the processor 1103. The processor 1103 converts the baseband signal into data, and processes the data.

When implementing the functions performed by the network device in the fourth embodiment provided in embodiments of this application, the processor 1103 may determine an SL DRX configuration. The SL DRX configuration is used for an SL connection between a first communication device and a second communication device. The SL DRX configuration is used for SL transmission between the first communication device and the second communication device. The SL connection is an SL connection between the first communication device and the second communication device. The transceiver 1100 may further send the SL DRX configuration to the first communication device. Alternatively, the transceiver 1100 may send the SL DRX configuration to the first communication device, where the SL DRX configuration includes identification information of the SL connection.

The SL DRX configuration may include the identification information of the SL connection, or the transceiver 1100 may send the identification information of the SL connection to the first communication device.

In a possible example, the transceiver 1100 may further receive fifth information from the first communication device. The fifth information is used by the network device to determine the SL DRX configuration. For example, the fifth information includes one or more of service information of the SL connection, resource configuration of the SL connection, a reference SL DRX configuration of the SL connection and/or a reference SL DRX configuration of another SL connection, energy saving requirement information of the second communication device, energy saving request information of the second communication device, SL DRX configuration request information, or V2P communication indication information.

When implementing the functions performed by the third communication device in the fifth embodiment provided in embodiments of this application, the transceiver 1100 may receive sixth information from the fourth communication device. The sixth information is used by the third communication device to determine a first SL DRX configuration and a second SL DRX configuration. The transceiver 1100 may send seventh information to the fourth communication device, where the seventh information may be used by the fourth communication device to determine the second SL DRX configuration. The first SL DRX configuration is used by the second communication device to receive SL transmission from the first communication device, and the first communication device accesses the third communication device. The second SL DRX configuration is used by the second communication device to receive SL transmission from a fifth communication device, and the fifth communication device accesses the fourth communication device. The transceiver 1100 may further send the first SL DRX configuration to the first communication device.

In a possible example, the transceiver 1100 may send at least one candidate second SL DRX configuration to the fourth communication device, so that the fourth communication device may determine the second SL DRX configuration based on the at least one candidate second SL DRX configuration. In other words, the seventh information in this example includes at least one candidate second SL DRX configuration.

In another possible example, the transceiver 1100 may receive attribute information of a second SL connection from the fourth communication device, where the second SL connection is an SL connection between the second communication device and a fifth communication device. The processor 1103 may determine the first SLDRX configuration and the second SL DRX configuration based on attribute information of the first SL connection and the attribute information of the second SL connection. Then, the transceiver 1100 may send the second SL DRX configuration to the fourth communication device. The first SL connection is an SL connection between the second communication device and the first communication device. In this example, the sixth information includes the attribute information of the second SL connection, and the seventh information includes the second SL DRX configuration.

In another possible example, the transceiver 1100 may send the first SL DRX configuration to the fourth communication device, so that the fourth communication device determines the second SL DRX configuration based on the first SL DRX configuration, for example, coordinates the first SL DRX configuration and the second SL DRX configuration. In this example, the seventh information includes the first SL DRX configuration.

In another possible example, the transceiver 1100 may receive an identifier of the second communication device from the second communication device. In this example, the third communication device may be further connected to the second communication device by using a Uu interface. Therefore, the transceiver 1100 may receive the identifier of the second communication device by using the Uu interface.

In this example, if the second communication device uses a Uu DRX configuration to perform Uu interface transmission, the third communication device may coordinate the Uu DRX configuration, the first SL DRX configuration, and the second SL DRX configuration with the fourth communication device. For example, the transceiver 1100 may send the Uu DRX configuration and/or attribute information of the Uu DRX configuration to the fourth communication device. The attribute information of the Uu DRX configuration, for example, information about a communication service of the Uu interface between the third communication device and the second communication device, a resource configuration of the Uu interface, or energy saving requirement information of the second communication device, may be used by the fourth communication device to determine the second SL DRX configuration based on the seventh information and the Uu DRX configuration and/or the attribute information of the Uu DRX configuration. In addition, the processor 1103 may determine the seventh information based on the Uu DRX configuration and/or the attribute information of the Uu DRX configuration. For example, the processor 1103 determines the at least one candidate second SL DRX configuration based on the Uu DRX configuration and/or the attribute information of the Uu DRX configuration, or the processor 1103 determines the first SL DRX configuration and/or the second SL DRX configuration based on the Uu DRX configuration and/or the attribute information of the Uu DRX configuration.

When implementing the functions performed by the fourth communication device in the fifth embodiment provided in embodiments of this application, the transceiver 1100 may send sixth information to the third communication device. The sixth information is used by the third communication device to determine the first SL DRX configuration and the second SL DRX configuration. The transceiver 1100 may receive seventh information from the fourth communication device, where the seventh information may be used by the fourth communication device to determine the second SL DRX configuration. The first SL DRX configuration is used by the second communication device to receive SL transmission from the first communication device. The second SL DRX configuration is used by the second communication device to receive SL transmission from a fifth communication device, and the fifth communication device accesses the fourth communication device. The transceiver 1100 may further send the second SL DRX configuration to the fifth communication device.

In a possible example, the transceiver 1100 may receive the at least one candidate second SL DRX configuration from the third communication device, to determine the second SL DRX configuration based on the at least one candidate second SL DRX configuration.

In another possible example, the transceiver 1100 may send the attribute information of the second SL connection to the third communication device, where the second SL connection is an SL connection between the second communication device and the fifth communication device. In addition, the transceiver 1100 may receive the second SL DRX configuration from the third communication device.

In another possible example, the transceiver 1100 may further receive a first SL DRX configuration from the third communication device, to determine a second SL DRX configuration.

In another possible example, the transceiver 1100 may further receive a Uu DRX configuration and/or attribute information of a Uu DRX configuration from the third communication device, where the Uu DRX configuration is used for Uu transmission between the third communication device and the second communication device. The attribute information of the Uu DRX configuration is, for example, information about a communication service of a Uu interface between the third communication device and the second communication device, a resource configuration of the Uu interface, or energy saving requirement information of the second communication device. The processor 1103 may further determine the second SL DRX configuration based on the Uu DRX configuration and/or the attribute information of the Uu DRX configuration. For example, the processor 1103 may determine the second SL DRX configuration based on the seventh information and the Uu DRX configuration and/or the attribute information of the Uu DRX configuration.

Based on a same concept as the method embodiments, an embodiment of this application further provides a computer-readable storage medium. The computer-readable storage medium stores program instructions (or referred to as a computer program or instructions). When the program instructions are executed by a processor, the computer is enabled to perform an operation performed by the first communication device, the second communication device, the third communication device, the fourth communication device, and/or the fifth communication device in any one of the method embodiments and the possible implementations of the method embodiments.

Based on a same concept as the method embodiments, this application further provides a computer program product, including program instructions. When the computer program product is invoked and executed by a computer, the computer may be enabled to implement operations performed by the first communication device, the second communication device, the third communication device, the fourth communication device, and/or the fifth communication device in any one of the method embodiments and the possible implementations of the method embodiments.

Based on a same concept as the method embodiments, this application further provides a chip or a chip system. The chip is coupled to a transceiver, and is configured to implement an operation performed by the first communication device, the second communication device, the third communication device, the fourth communication device, and/or the fifth communication device in any one of the method embodiments or the possible implementations of the method embodiments. The chip system may include the chip and components such as a memory and a communication interface.

Based on a same concept as the method embodiments, this application further provides a communication system. The communication system may be configured to implement operations performed by the first communication device, the second communication device, the third communication device, the fourth communication device, and/or the fifth communication device in any one of the method embodiments or the possible implementations of the method embodiments. For example, the communication system has a structure shown in FIG. 1 or FIG. 2.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

Certainly, a person skilled in the art can make various modifications and variations to this application without departing from the protection scope of this application. In this way, this application is intended to cover these modifications and variations of this application provided that they fall within the scope of the claims of this application and their equivalent technologies.

## Claims

1. A communication method, comprising:
receiving, by a first communication device, first information, wherein the first information is used to determine an SL DRX configuration, and the SL DRX configuration is used for an SL connection between the first communication device and a second communication device; and
sending, by the first communication device, the SL DRX configuration to the second communication device.

2. The method according to claim 1, further comprising:
determining, by the first communication device, the SL DRX configuration based on the first information and/or at least one candidate SL DRX configuration.

3. A communication method, comprising:
determining, by a first communication device, an SL DRX configuration, wherein the SL DRX configuration is used for an SL connection between the first communication device and a second communication device, and the first communication device is a receive end of the SL connection; and
sending, by the first communication device, the SL DRX configuration to the second communication device.

4. The method according to claim 3, further comprising:
receiving, by the first communication device, first information, wherein the first information is used to determine the SL DRX configuration.

5. The method according to any one of claims 1 and 2 or claim 4, wherein the receiving, by the first communication device, first information comprises:
receiving, by the first communication device, the first information from the second communication device and/or a third communication device.

6. The method according to claim 5, wherein the determining, by the first communication device, the SL DRX configuration comprises:
determining, by the first communication device, the SL DRX configuration based on the first information and/or the at least one candidate SL DRX configuration.

7. The method according to any one of claims 1 and 2 or 4 to 6, wherein the first information is reference information or assistance information for determining SL DRX.

8. The method according to claim 2 or 6, wherein the at least one candidate SL DRX configuration is stored in the first communication device; or
the method further comprises:
receiving, by the first communication device, the at least one candidate SL DRX configuration.

9. The method according to claim 8, wherein the receiving, by the first communication device, the at least one candidate SL DRX configuration comprises:
obtaining, by the first communication device, the at least one candidate SL DRX configuration from the third communication device or the second communication device.

10. The method according to claim 9, wherein the obtaining, by the first communication device, the at least one candidate SL DRX configuration from the third communication device comprises:
obtaining, by the first communication device, a mapping relationship between at least one candidate SL DRX configuration and service information from the third communication device.

11. The method according to claim 10, wherein the obtaining, by the first communication device, a mapping relationship between at least one candidate SL DRX configuration and service information from the third communication device comprises:
obtaining, by the first communication device, the mapping relationship between at least one candidate SL DRX configuration and service information via system information or dedicated signaling from the third communication device.

12. The method according to claim 9, wherein the obtaining, by the first communication device, the at least one candidate SL DRX configuration from the third communication device comprises:
obtaining, by the first communication device, the at least one candidate SL DRX configuration via system information or dedicated signaling from the third communication device.

13. The method according to any one of claims 1 to 12, wherein that the SL DRX configuration is used for an SL connection between the first communication device and a second communication device comprises:
the SL DRX configuration corresponds to at least one SL connection between the first communication device and the second communication device.

14. The method according to any one of claims 1 to 13, wherein the method further comprises:
receiving, by the first communication device, second information from the second communication device;
the second information is used to determine that a quantity of SL connections of the second communication device is k, wherein k is a positive integer; or
the second information indicates that a quantity of SL connections of the second communication device satisfies a first threshold condition; or
the second information indicates the first communication device to send the SL DRX configuration.

15. The method according to any one of claims 1 and 2 or 4 to 14, wherein the first information comprises at least one of the following information:
service information of another SL connection of the second communication device, wherein the another SL connection comprises at least one SL connection other than the SL connection; or
a resource configuration of the SL connection, comprising a determined resource configuration sent by an SL service and/or an available SL resource configuration set; or
a resource configuration of another SL connection of the second communication device, wherein the another SL connection comprises at least one SL connection other than the SL connection; or
an SL DRX configuration of another SL connection of the second communication device, wherein the another SL connection comprises at least one SL connection other than the SL connection, and the SL DRX configuration of another SL connection comprises a configured SL DRX configuration and/or a configurable SL DRX configuration; or
a reference SL DRX configuration; or
a Uu DRX configuration of the second communication device, wherein the Uu DRX configuration is used for Uu interface transmission of the second communication device; or
energy saving requirement information of the second communication device.

16. The method according to any one of claims 1 and 2 or 4 to 15, wherein the method further comprises:
sending, by the first communication device, request information of the first information to the first communication device and/or the third communication device.

17. The method according to any one of claims 1 to 16, wherein the method further comprises:
receiving, by the first communication device, first request information from the second communication device, wherein the first request information is used to request to obtain assistance information corresponding to the SL connection; and
sending, by the first communication device, the assistance information corresponding to the SL connection to the second communication device, wherein
the assistance information corresponding to the SL connection comprises at least one of the following information:
service information of the SL connection; or
the resource configuration of the SL connection, comprising the determined resource configuration sent by the SL service and/or the available SL resource configuration set; or
the reference SL DRX configuration.

18. The method according to any one of claims 1 to 17, wherein a cast type of the SL connection is multicast or broadcast;
there is an SL RRC connection established between the first communication device and the second communication device; and/or
a quantity of communication devices that receive SL transmission of the first communication device is less than or is less than or equal to a first threshold.

19. The method according to any one of claims 1 to 18, wherein the sending, by the first communication device, the SL DRX configuration to the second communication device comprises:
sending, by the first communication device, the SL DRX configuration to the second communication device through broadcast or multicast.

20. The method according to any one of claims 1 to 19, wherein the sending, by the first communication device, the SL DRX configuration to the second communication device comprises:
sending, by the first communication device, an index of the SL DRX configuration to the second communication device.

21. The method according to any one of claims 1 to 20, wherein the method further comprises:
sending, by the first communication device, identification information of the SL connection to the second communication device.

22. The method according to claim 21, wherein the identification information of the SL connection is carried in the SL DRX configuration.

23. The method according to claim 21 or 22, wherein the identification information of the SL connection comprises at least one of the following:
an SL connection identifier; or
an SL link identifier; or
an identifier of the first communication device; or
an identifier of the second communication device.

24. The method according to claim 23, wherein the identifier of the first communication device comprises one or more of the following:
an S-TMSI, an IMSI, an SUPI, a GUTI, a layer 2 identifier, or a layer 1 identifier; and
the identifier of the second communication device comprises one or more of the following:
an S-TMSI, an IMSI, an SUPI, a GUTI, a layer 2 identifier, or a layer 1 identifier.

25. A communication method, comprising:
sending, by a second communication device, first information, wherein the first information is used to determine an SL DRX configuration, and the SL DRX configuration is used for an SL connection between a first communication device and the second communication device; and
receiving, by the second communication device, the SL DRX configuration from the first communication device.

26. The method according to claim 25, wherein the sending, by a second communication device, first information comprises:
sending, by the second communication device, the first information to the first communication device.

27. A communication method, comprising:
receiving, by a second communication device, an SL DRX configuration from a first communication device, wherein the SL DRX configuration is used for an SL connection between the first communication device and the second communication device, and the first communication device is a receive end of the SL connection; and
communicating, by the second communication device, with the first communication device by using the SL DRX configuration.

28. The method according to claim 27, wherein the SL DRX configuration is determined based on first information.

29. The method according to any one of claims 25 and 26 or claim 28, wherein the first information is reference information or assistance information for determining SL DRX.

30. The method according to any one of claims 25 to 29, wherein the method further comprises:
sending, by the second communication device, second information to the first communication device, wherein
the second information is used to determine that a quantity of SL connections of the second communication device is k, wherein k is a positive integer; or
the second information indicates that a quantity of SL connections of the second communication device satisfies a first threshold condition; or
the second information indicates the first communication device to send the SL DRX configuration.

31. The method according to any one of claims 25 and 26 or 28 to 30, wherein the first information comprises at least one of the following information:
service information of another SL connection of the second communication device, wherein the another SL connection comprises at least one SL connection other than the SL connection; or
a resource configuration of the SL connection, comprising a determined resource configuration sent by an SL service and/or an available SL resource configuration set; or
a resource configuration of another SL connection of the second communication device, wherein the another SL connection comprises at least one SL connection other than the SL connection; or
an SL DRX configuration of another SL connection of the second communication device, wherein the another SL connection comprises at least one SL connection other than the SL connection, and the SL DRX configuration of another SL connection comprises a configured SL DRX configuration and/or a configurable SL DRX configuration; or
a reference SL DRX configuration; or
a Uu DRX configuration of the second communication device; or
energy saving requirement information of the second communication device.

32. The method according to claim 31, wherein the method further comprises:
sending, by the second communication device, at least one of the following information to the first communication device:
the service information of another SL connection of the second communication device, wherein the another SL connection comprises at least one SL connection other than the SL connection; or
the resource configuration of the SL connection, comprising the determined resource configuration sent by the SL service and/or the available SL resource configuration set; or
the resource configuration of another SL connection of the second communication device, wherein the another SL connection comprises at least one SL connection other than the SL connection; or
the reference SL DRX configuration; or
the Uu DRX configuration of the second communication device; or
the energy saving requirement information of the second communication device.

33. The method according to any one of claims 25 and 26 or 28 to 32, wherein the method further comprises:
receiving, by the second communication device, request information of the first information.

34. The method according to any one of claims 25 to 33, wherein the method further comprises:
sending, by the second communication device, first request information, wherein the first request information is used to request to obtain assistance information of the SL connection;
receiving, by the second communication device, the assistance information corresponding to the SL connection from the first communication device;
the assistance information corresponding to the SL connection comprises at least one of the following information:
service information of the SL connection; or
the resource configuration of the SL connection, comprising the determined resource configuration sent by the SL service and/or the available SL resource configuration set; or
a reference SL DRX configuration of the SL connection.

35. The method according to claim 34, wherein the method further comprises:
sending, by the second communication device, the assistance information corresponding to the SL connection to a communication device corresponding to another SL connection, wherein the another SL connection comprises at least one SL connection other than the SL connection.

36. The method according to any one of claims 25 to 35, wherein a cast type of the SL connection is multicast or broadcast;
there is an SL RRC connection established between the first communication device and the second communication device; and/or
a quantity of communication devices that receive SL transmission of the first communication device is less than or is less than or equal to a first threshold.

37. The method according to any one of claims 25 to 36, wherein the receiving, by a second communication device, an SL DRX configuration from a first communication device comprises:
receiving, by the second communication device, the SL DRX configuration from the first communication device through broadcast or multicast.

38. The method according to any one of claims 25 to 37, wherein the receiving, by a second communication device, an SL DRX configuration from a first communication device comprises:
receiving, by the second communication device, an index of the SL DRX configuration from the first communication device.

39. The method according to any one of claims 25 to 38, wherein the method further comprises:
receiving, by the second communication device, identification information of the SL connection from the first communication device.

40. The method according to claim 39, wherein the identification information of the SL connection is carried in the SL DRX configuration.

41. The method according to claim 39 or 40, wherein the identification information of the SL connection comprises at least one of the following:
an SL connection identifier; or
an SL link identifier; or
an identifier of the first communication device; or
an identifier of the second communication device.

42. The method according to claim 41, wherein the identifier of the first communication device comprises one or more of the following:
an S-TMSI, an IMSI, an SUPI, a GUTI, a layer 2 identifier, or a layer 1 identifier; and
the identifier of the second communication device comprises one or more of the following:
an S-TMSI, an IMSI, an SUPI, a GUTI, a layer 2 identifier, or a layer 1 identifier.

43. A communication method, comprising:
determining, by a third communication device, first information, wherein the first information is used to determine an SL DRX configuration, and the SL DRX configuration is used for an SL connection between a first communication device and a second communication device; and
sending, by the third communication device, the first information to the first communication device.

44. The method according to claim 43, wherein the first information is reference information or assistance information for determining SL DRX.

45. The method according to claim 43 or 44, wherein the first information comprises at least one of the following information:
service information of another SL connection of the second communication device, wherein the another SL connection comprises at least one SL connection other than the SL connection; or
a resource configuration of the SL connection, comprising a determined resource configuration sent by an SL service and/or an available SL resource configuration set; or
a resource configuration of another SL connection of the second communication device, wherein the another SL connection comprises at least one SL connection other than the SL connection; or
an SL DRX configuration of another SL connection of the second communication device, wherein the another SL connection comprises at least one SL connection other than the SL connection, and the SL DRX configuration of another SL connection comprises a configured SL DRX configuration and/or a configurable SL DRX configuration; or
a reference SL DRX configuration; or
a Uu DRX configuration of the second communication device; or
energy saving requirement information of the second communication device.

46. A communication method, comprising:
receiving, by a first communication device, second information from a second communication device; and
determining, by the first communication device based on the second information, to send an SL DRX configuration to the second communication device, wherein the SL DRX configuration is used for an SL connection between the first communication device and the second communication device; or
determining, by the first communication device based on the second information, not to send an SL DRX configuration to the second communication device.

47. A communication method, comprising:
determining, by a second communication device, second information, wherein the second information is used by a first communication device to determine whether to send an SL DRX configuration to the second communication device, and the SL DRX configuration is used for an SL connection between the first communication device and the second communication device; and
sending, by the second communication device, the second information to the first communication device.

48. A communication method, comprising:
receiving, by a first communication device, an SL DRX configuration from a third communication device, wherein the SL DRX configuration is used for an SL connection between the first communication device and a second communication device, and the first communication device is a receive end of the SL connection; and
sending, by the first communication device, the SL DRX configuration to the second communication device.

49. The method according to claim 48, further comprising:
sending, by the first communication device, fifth information to the third communication device, wherein the fifth information is used by the third communication device to determine the SL DRX configuration.

50. The method according to claim 49, wherein the fifth information is reference information or assistance information for determining SL DRX.

51. The method according to claim 49 or 50, wherein the fifth information comprises at least one of the following information:
service information of the SL connection; or
service information of other one or more SL connections other than the SL connection of the second communication device; or
a resource configuration of the SL connection, comprising a determined resource configuration sent by an SL service and/or an available SL resource configuration set; or
an SL DRX configuration of other one or more SL connections other than the SL connection of the second communication device, wherein the SL DRX configuration of one or more SL connections comprises a configured SL DRX configuration and/or a configurable SL DRX configuration; or
a resource configuration of other one or more SL connections other than the SL connection of the second communication device; or
a Uu DRX configuration of other one or more SL connections other than the SL connection of the second communication device; or
energy saving requirement information of the second communication device; or
a reference SL DRX configuration.

52. The method according to claim 51, further comprising:
receiving at least one of the following information from the second communication device:
the service information of other one or more SL connections other than the SL connection of the second communication device; or
the resource configuration of other one or more SL connections other than the SL connection of the second communication device; or
the Uu DRX configuration of the second communication device; or
a reference SL DRX configuration of the SL connection and/or a reference SL DRX configuration of other one or more SL connections other than the SL connection; or
the energy saving requirement information of the second communication device; or
the reference SL DRX configuration.

53. The method according to any one of claims 48 to 52, wherein the SL DRX configuration comprises identification information of the SL connection; or
the method further comprises:
receiving, by the first communication device, identification information of the SL connection from the third communication device.

54. The method according to claim 53, wherein the identification information of the SL connection comprises at least one of an SL connection identifier of the SL connection, an SL link identifier, an identifier of the first communication device, or an identifier of the second communication device.

55. A communication method, comprising:
determining, by a third communication device, an SL DRX configuration, wherein the SL DRX configuration is used for an SL connection between a first communication device and a second communication device, and the first communication device is a receive end of the SL connection; and
sending, by the third communication device, the SL DRX configuration to the second communication device.

56. The method according to claim 55, further comprising:
receiving, by the third communication device, fifth information from the first communication device, wherein the fifth information is used to determine the SL DRX configuration.

57. The method according to claim 56, wherein the fifth information is reference information or assistance information for determining SL DRX.

58. The method according to claim 56 or 57, wherein the fifth information comprises at least one of the following information:
service information of the SL connection; or
service information of other one or more SL connections other than the SL connection of the second communication device; or
a resource configuration of the SL connection, comprising a determined resource configuration sent by an SL service and/or an available SL resource configuration set; or
an SL DRX configuration of other one or more SL connections other than the SL connection of the second communication device, wherein the SL DRX configuration of one or more SL connections comprises a configured SL DRX configuration and/or a configurable SL DRX configuration; or
a resource configuration of other one or more SL connections other than the SL connection of the second communication device; or
a Uu DRX configuration of other one or more SL connections other than the SL connection of the second communication device; or
energy saving requirement information of the second communication device; or
a reference SL DRX configuration.

59. The method according to any one of claims 55 to 58, wherein the SL DRX configuration comprises identification information of the SL connection; or
the method further comprises:
sending, by the third communication device, the identification information of the SL connection to the first communication device.

60. The method according to claim 59, wherein the identification information of the SL connection comprises at least one of an SL connection identifier of the SL connection, an SL link identifier, an identifier of the first communication device, or an identifier of the second communication device.

61. A communication apparatus, wherein the communication apparatus comprises:
a receiving module, configured to receive first information, wherein the first information is used to determine an SL DRX configuration, and the SL DRX configuration is used for an SL connection between a first communication device and a second communication device; and
a sending module, configured to send the SL DRX configuration to the second communication device.

62. The communication apparatus according to claim 61, wherein the communication apparatus further comprises a processing module, configured to be used by the first communication device to determine the SL DRX configuration based on the first information and/or at least one candidate SL DRX configuration.

63. A communication apparatus, wherein the communication apparatus comprises:
a processing module, configured to determine an SL DRX configuration, wherein the SL DRX configuration is used for an SL connection between a first communication device and a second communication device, and the first communication device is a receive end of the SL connection; and
a sending module, configured to send the SL DRX configuration to the second communication device.

64. The communication apparatus according to claim 63, wherein the receiving module is configured to receive first information, and the first information is used to determine the SL DRX configuration.

65. The communication apparatus according to any one of claims 61 and 62 or claim 64, wherein the communication apparatus further comprises a receiving module, and the receiving module is configured to receive the first information from the second communication device and/or a third communication device.

66. The communication apparatus according to claim 65, wherein the processing module is specifically configured to:
determine the SL DRX configuration based on the first information and/or the at least one candidate SL DRX configuration.

67. The communication apparatus according to any one of claims 61 and 62 or 64 to 66, wherein the first information is reference information or assistance information for determining SL DRX.

68. The communication apparatus according to claim 62 or 66, wherein the at least one candidate SL DRX configuration is stored in the first communication device; or
the receiving module is further configured to:
receive the at least one candidate SL DRX configuration.

69. The communication apparatus according to claim 68, wherein the receiving module is specifically configured to:
obtain the at least one candidate SL DRX configuration from the third communication device or the second communication device.

70. The communication apparatus according to claim 69, wherein the receiving module is specifically configured to:
obtain a mapping relationship between at least one candidate SL DRX configuration and service information from the third communication device.

71. The communication apparatus according to claim 70, wherein the receiving module is specifically configured to:
obtain the mapping relationship between at least one candidate SL DRX configuration and service information via system information or dedicated signaling from the third communication device.

72. The communication apparatus according to claim 69, wherein the receiving module is specifically configured to:
obtain the at least one candidate SL DRX configuration via system information or dedicated signaling from the third communication device.

73. The communication apparatus according to any one of claims 61 to 72, wherein that the SL DRX configuration is used for an SL connection between a first communication device and a second communication device comprises:
the SL DRX configuration corresponds to at least one SL connection between the first communication device and the second communication device.

74. The communication apparatus according to any one of claims 61 to 73, wherein the receiving module is further configured to:
receive, by the first communication device, second information from the second communication device, wherein
the second information is used to determine that a quantity of SL connections of the second communication device is k, wherein k is a positive integer; or
the second information indicates that a quantity of SL connections of the second communication device satisfies a first threshold condition; or
the second information indicates the first communication device to send the SL DRX configuration.

75. The communication apparatus according to any one of claims 61 and 62 or 64 to 74, wherein the first information comprises at least one of the following information:
service information of another SL connection of the second communication device, wherein the another SL connection comprises at least one SL connection other than the SL connection; or
a resource configuration of the SL connection, comprising a determined resource configuration sent by an SL service and/or an available SL resource configuration set; or
a resource configuration of another SL connection of the second communication device, wherein the another SL connection comprises at least one SL connection other than the SL connection; or
an SL DRX configuration of another SL connection of the second communication device, wherein the another SL connection comprises at least one SL connection other than the SL connection, and the SL DRX configuration of another SL connection comprises a configured SL DRX configuration and/or a configurable SL DRX configuration; or
a reference SL DRX configuration; or
a Uu DRX configuration of the second communication device, wherein the Uu DRX configuration is used for Uu interface transmission of the second communication device; or
energy saving requirement information of the second communication device.

76. The communication apparatus according to any one of claims 61 and 62 or 64 to 75, wherein the sending module is further configured to:
send request information of the first information to the first communication device and/or the third communication device.

77. The communication apparatus according to any one of claims 61 to 76, wherein the receiving module is further configured to:
receive first request information from the second communication device, wherein the first request information is used to request to obtain assistance information corresponding to the SL connection; and
the sending module is further configured to:
send the assistance information corresponding to the SL connection to the second communication device, wherein
the assistance information corresponding to the SL connection comprises at least one of the following information:
the service information of the SL connection; or
the resource configuration of the SL connection, comprising the determined resource configuration sent by the SL service and/or the available SL resource configuration set; or
the reference SL DRX configuration.

78. The communication apparatus according to any one of claims 61 to 77, wherein a cast type of the SL connection is multicast or broadcast;
there is an SL RRC connection established between the first communication device and the second communication device; and/or
a quantity of communication devices that receive SL transmission of the first communication device is less than or is less than or equal to a first threshold.

79. The communication apparatus according to any one of claims 61 to 78, wherein the sending module is specifically configured to:
send the SL DRX configuration to the second communication device through broadcast or multicast.

80. The communication apparatus according to any one of claims 61 to 79, wherein the sending module is further configured to:
send an index of the SL DRX configuration to the second communication device.

81. The communication apparatus according to any one of claims 61 to 80, wherein the sending module is further configured to:
send identification information of the SL connection to the second communication device.

82. The communication apparatus according to claim 81, wherein the identification information of the SL connection is carried in the SL DRX configuration.

83. The communication apparatus according to claim 81 or 82, wherein the identification information of the SL connection comprises at least one of the following information:
an SL connection identifier; or
an SL link identifier; or
an identifier of the first communication device; or
an identifier of the second communication device.

84. The communication apparatus according to claim 83, wherein the identifier of the first communication device comprises one or more of the following:
an S-TMSI, an IMSI, an SUPI, a GUTI, a layer 2 identifier, or a layer 1 identifier; and
the identifier of the second communication device comprises one or more of the following:
an S-TMSI, an IMSI, an SUPI, a GUTI, a layer 2 identifier, or a layer 1 identifier.

85. A communication apparatus, wherein the communication apparatus comprises:
a sending module, configured to send first information, wherein the first information is used to determine an SL DRX configuration, and the SL DRX configuration is used for an SL connection between a first communication device and a second communication device; and
a receiving module, configured to receive the SL DRX configuration from the first communication device.

86. The communication apparatus according to claim 85, wherein the sending module is specifically configured to:
send, by the second communication device, the first information to the first communication device.

87. A communication apparatus, wherein the communication apparatus comprises:
a receiving module, configured to receive an SL DRX configuration from a first communication device, wherein the SL DRX configuration is used for an SL connection between the first communication device and a second communication device, and the first communication device is a receive end of the SL connection; and
a processing module, configured to communicate with the first communication device by using the SL DRX configuration.

88. The communication apparatus according to claim 87, wherein the SL DRX configuration is determined based on first information.

89. The communication apparatus according to any one of claims 85 and 86 or claim 88, wherein the first information is reference information or assistance information for determining SL DRX.

90. The communication apparatus according to any one of claims 85 to 89, wherein the sending module is further configured to:
send second information to the first communication device, wherein
the second information is used to determine that a quantity of SL connections of the second communication device is k, wherein k is a positive integer; or
the second information indicates that a quantity of SL connections of the second communication device satisfies a first threshold condition; or
the second information indicates the first communication device to send the SL DRX configuration.

91. The communication apparatus according to any one of claims 85 and 86 or 88 to 90, wherein the first information comprises at least one of the following information:
service information of another SL connection of the second communication device, wherein the another SL connection comprises at least one SL connection other than the SL connection; or
a resource configuration of the SL connection, comprising a determined resource configuration sent by an SL service and/or an available SL resource configuration set; or
a resource configuration of another SL connection of the second communication device, wherein the another SL connection comprises at least one SL connection other than the SL connection; or
an SL DRX configuration of another SL connection of the second communication device, wherein the another SL connection comprises at least one SL connection other than the SL connection, and the SL DRX configuration of another SL connection comprises a configured SL DRX configuration and/or a configurable SL DRX configuration; or
a reference SL DRX configuration; or
a Uu DRX configuration of the second communication device; or
energy saving requirement information of the second communication device.

92. The communication apparatus according to claim 91, wherein the sending module is further configured to:
send at least one of the following information to the first communication device:
the service information of another SL connection of the second communication device, wherein the another SL connection comprises at least one SL connection other than the SL connection; or
the resource configuration of the SL connection, comprising the determined resource configuration sent by the SL service and/or the available SL resource configuration set; or
the resource configuration of another SL connection of the second communication device, wherein the another SL connection comprises at least one SL connection other than the SL connection; or
the reference SL DRX configuration; or
the Uu DRX configuration of the second communication device; or
the energy saving requirement information of the second communication device.

93. The communication apparatus according to any one of claims 85 and 86 or 88 to 92, wherein the receiving module is further configured to:
receive request information of the first information.

94. The communication apparatus according to any one of claims 85 to 93, wherein the sending module is further configured to:
send first request information, wherein the first request information is used to request to obtain assistance information of the SL connection; and
the receiving module is further configured to:
receive the assistance information corresponding to the SL connection from the first communication device, wherein
the assistance information corresponding to the SL connection comprises at least one of the following information:
the service information of the SL connection; or
the resource configuration of the SL connection, comprising the determined resource configuration sent by the SL service and/or the available SL resource configuration set; or
the reference SL DRX configuration of the SL connection.

95. The communication apparatus according to claim 94, wherein the sending module is further configured to:
send the assistance information corresponding to the SL connection to a communication device corresponding to another SL connection, wherein the another SL connection comprises at least one SL connection other than the SL connection.

96. The communication apparatus according to any one of claims 85 to 95, wherein a cast type of the SL connection is multicast or broadcast;
there is an SL RRC connection established between the first communication device and the second communication device; and/or
a quantity of communication devices that receive SL transmission of the first communication device is less than or is less than or equal to a first threshold.

97. The communication apparatus according to any one of claims 85 to 96, wherein the receiving module is specifically configured to:
receive the SL DRX configuration from the first communication device through broadcast or multicast.

98. The communication apparatus according to any one of claims 85 to 97, wherein the receiving module is specifically configured to:
receive an index of the SL DRX configuration from the first communication device.

99. The communication apparatus according to any one of claims 85 to 98, wherein the receiving module is further configured to:
receive, by the second communication device, identification information of the SL connection from the first communication device.

100. The communication apparatus according to claim 99, wherein the identification information of the SL connection is carried in the SL DRX configuration.

101. The communication apparatus according to claim 99 or 100, wherein the identification information of the SL connection comprises at least one of the following:
an SL connection identifier; or
an SL link identifier; or
an identifier of the first communication device; or
an identifier of the second communication device.

102. The communication apparatus according to claim 101, wherein the identifier of the first communication device comprises one or more of the following:
an S-TMSI, an IMSI, an SUPI, a GUTI, a layer 2 identifier, or a layer 1 identifier; and
the identifier of the second communication device comprises one or more of the following:
an S-TMSI, an IMSI, an SUPI, a GUTI, a layer 2 identifier, or a layer 1 identifier.

103. A communication apparatus, wherein the communication apparatus comprises:
a processing module, configured to determine first information, wherein the first information is used to determine an SL DRX configuration, and the SL DRX configuration is used for an SL connection between a first communication device and a second communication device;
a sending module, configured to send the first information to the first communication device.

104. The communication apparatus according to claim 103, wherein the first information is reference information or assistance information for determining SL DRX.

105. The communication apparatus according to claim 103 or to 104, wherein the first information comprises at least one of the following information:
service information of another SL connection of the second communication device, wherein the another SL connection comprises at least one SL connection other than the SL connection; or
a resource configuration of the SL connection, comprising a determined resource configuration sent by an SL service and/or an available SL resource configuration set; or
a resource configuration of another SL connection of the second communication device, wherein the another SL connection comprises at least one SL connection other than the SL connection; or
an SL DRX configuration of another SL connection of the second communication device, wherein the another SL connection comprises at least one SL connection other than the SL connection, and the SL DRX configuration of another SL connection comprises a configured SL DRX configuration and/or a configurable SL DRX configuration; or
a reference SL DRX configuration; or
a Uu DRX configuration of the second communication device; or
energy saving requirement information of the second communication device.

106. A communication apparatus, wherein the communication apparatus comprises:
a receiving module, configured to receive second information from a second communication device; and
a processing module, configured to determine, based on the second information, to send an SL DRX configuration to the second communication device, wherein the SL DRX configuration is used for an SL connection between a first communication device and the second communication device; or
the processing module, configured to determine, based on the second information, not to send an SL DRX configuration to the second communication device.

107. A communication apparatus, wherein the communication apparatus comprises:
a processing module, configured to determine second information, wherein the second information is used by a first communication device to determine whether to send an SL DRX configuration to a second communication device, and the SL DRX configuration is used for an SL connection between the first communication device and the second communication device; and
a sending module, configured to send the second information to the first communication device.

108. A communication apparatus, wherein the communication apparatus comprises:
a receiving module, configured to receive an SL DRX configuration from a third communication device, wherein the SL DRX configuration is used for an SL connection between a first communication device and a second communication device, and the first communication device is a receive end of the SL connection; and
a sending module, configured to send the SL DRX configuration to the second communication device.

109. The communication apparatus according to claim 108, wherein the sending module is further configured to:
send fifth information to the third communication device, wherein the fifth information is used by the third communication device to determine the SL DRX configuration.

110. The communication apparatus according to claim 109, wherein the fifth information is reference information or assistance information for determining SL DRX.

111. The communication apparatus according to claim 109 or to 110, wherein the fifth information comprises at least one of the following information:
service information of the SL connection; or
service information of other one or more SL connections other than the SL connection of the second communication device; or
a resource configuration of the SL connection, comprising a determined resource configuration sent by an SL service and/or an available SL resource configuration set; or
an SL DRX configuration of other one or more SL connections other than the SL connection of the second communication device, wherein the SL DRX configuration of one or more SL connections comprises a configured SL DRX configuration and/or a configurable SL DRX configuration; or
a resource configuration of other one or more SL connections other than the SL connection of the second communication device; or
a Uu DRX configuration of other one or more SL connections other than the SL connection of the second communication device; or
energy saving requirement information of the second communication device; or
a reference SL DRX configuration.

112. The communication apparatus according to claim 111, wherein the receiving module is further configured to:
receive at least one of the following information from the second communication device:
the service information of other one or more SL connections other than the SL connection of the second communication device; or
the resource configuration of other one or more SL connections other than the SL connection of the second communication device; or
the Uu DRX configuration of the second communication device; or
a reference SL DRX configuration of the SL connection and/or a reference SL DRX configuration of other one or more SL connections other than the SL connection; or
the energy saving requirement information of the second communication device; or
the reference SL DRX configuration.

113. The communication apparatus according to any one of claims 108 to 112, wherein the SL DRX configuration comprises identification information of the SL connection; or
the receiving module is further configured to receive identification information of the SL connection from the third communication device.

114. The communication apparatus according to claim 113, wherein the identification information of the SL connection comprises at least one of an SL connection identifier of the SL connection, an SL link identifier, an identifier of the first communication device, or an identifier of the second communication device.

115. A communication apparatus, wherein the communication apparatus comprises:
a processing module, configured to determine an SL DRX configuration, wherein the SL DRX configuration is used for an SL connection between a first communication device and a second communication device, and the first communication device is a receive end of the SL connection; and
a sending module, configured to send the SL DRX configuration to the second communication device.

116. The communication apparatus according to claim 115, wherein the communication apparatus further comprises a communication module; and
the receiving module is configured to receive fifth information from the first communication device, wherein the fifth information is used to determine the SL DRX configuration.

117. The communication apparatus according to claim 116, wherein the fifth information is reference information or assistance information for determining SL DRX.

118. The communication apparatus according to claim 116 or to 117, wherein the fifth information comprises at least one of the following information:
service information of the SL connection; or
service information of other one or more SL connections other than the SL connection of the second communication device; or
a resource configuration of the SL connection, comprising a determined resource configuration sent by an SL service and/or an available SL resource configuration set; or
an SL DRX configuration of other one or more SL connections other than the SL connection of the second communication device, wherein the SL DRX configuration of one or more SL connections comprises a configured SL DRX configuration and/or a configurable SL DRX configuration; or
a resource configuration of other one or more SL connections other than the SL connection of the second communication device; or
a Uu DRX configuration of other one or more SL connections other than the SL connection of the second communication device; or
energy saving requirement information of the second communication device; or
a reference SL DRX configuration.

119. The communication apparatus according to any one of claims 115 to 118, wherein the SL DRX configuration comprises identification information of the SL connection; or
the sending module is further configured to send the identification information of the SL connection to the first communication device.

120. The communication apparatus according to claim 119, wherein the identification information of the SL connection comprises at least one of an SL connection identifier of the SL connection, an SL link identifier, an identifier of the first communication device, or an identifier of the second communication device.

121. A communication apparatus, comprising a transceiver, a memory, and a processor, wherein
the transceiver is used by the apparatus to perform communication; and
the processor is configured to run program instructions in the memory, to perform the method according to any one of claims 1 to 24, 46, or 48 to 54.

122. A communication apparatus, comprising a transceiver, a memory, and a processor, wherein
the transceiver is used by the apparatus to perform communication; and
the processor is configured to run program instructions in the memory, to perform the method according to any one of claims 25 to 42 or claim 47.

123. A communication apparatus, comprising a transceiver, a memory, and a processor, wherein
the transceiver is used by the apparatus to perform communication; and
the processor is configured to run program instructions in the memory, to perform the method according to any one of claims 43 to 45 or 55 to 60.

124. A communication system, comprising the communication apparatus according to any one of claims 61 to 84, 106, 108 to 114, or 121, and the communication apparatus according to any one of claims 85 to 102, 107, or 122.

125. The communication system according to claim 124, further comprising the communication apparatus according to any one of claims 103 to 105, 115 to 120, or 123.

126. A computer-readable storage medium, comprising program instructions, wherein when the program instructions are run on a computer, the computer is enabled to perform the method according to any one of claims 1 to 60.

127. A computer program product, wherein when the computer program product is run on a computer, the computer is enabled to perform the method according to any one of claims 1 to 60.

128. A circuit, wherein the circuit is coupled to a memory, and the circuit is configured to read and execute a program stored in the memory, to perform the method according to any one of claims 1 to 60.
